# EUROPEAN PATENT APPLICATION

(11) **EP 4 797 586 A1**
(43) Date of publication of application: **26.08.2026**
(21) Application number: 24890592.9
(22) Date of filing: 08.11.2024
(51) Int. Cl.: H04L 1/00

(54) **COMMUNICATION METHOD AND COMMUNICATION APPARATUS**

(30) Priority: 14.11.2023 CN 202311518456
(71) Applicant: HUAWEI TECHNOLOGIES CO., LTD., Shenzhen 518129 (CN)
(72) Inventor: ZOU, Tong, Shenzhen, Guangdong 518129 (CN); GONG, Mingxin, Shenzhen, Guangdong 518129 (CN)
(74) Representative: Grünecker Patent- und Rechtsanwälte PartG mbB
(86) International application number: PCT/CN2024/130984
(87) International publication number: WO 2025/103236

(57) **Abstract**

This application provides a communication method and a communication apparatus. The method includes determining a first sequence, which is the same as the sequence obtained by performing Manchester coding on a base sequence. The first sequence includes N elements, and the base sequence includes $\frac{N}{{2}^{K}}$ elements. Any element in the base sequence is represented by 2*^{K}* levels after Manchester coding, and the 2*^{K}* levels include two different levels. The base sequence is related to a generalized Golay sequence generated by an M-stage register. The register depth 2*^{Pₘ}* of the m^{th} stage in the M-stage register is determined by the m^{th} element *Pₘ* in a second sequence [P], where *Pₘ* is an integer greater than or equal to 0. The sum of the first $\left⌈M/2\right⌉$ elements in the second sequence is greater than or equal to the sum of the last $M - \left⌈M/2\right⌉$ elements. The method further includes modulating the first sequence and to-be-transmitted data to generate and send a first signal. This method improves timing precision for Manchester-coded preambles and postambles and reduces their computational complexity.

## Description

This application claims priority to Chinese Patent Application No. 202311518456.2, filed with the China National Intellectual Property Administration on November 14, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Passive and semi-passive internet of things (Internet of things, IoT) are low-cost, low-power solutions widely applied to scenarios such as automatic warehousing, sensors, and positioning. When transmitting uplink data, a terminal device adds a preamble (preamble) before a data signal and a postamble (postamble) after the data signal. Correspondingly, a base station performs timing by detecting the preamble and postamble to determine the data position. In current passive and semi-passive uplink transmission, a low-pass filter is usually used to remove phase noise or other interference near zero frequency during signal reception and Manchester (Manchester) coding is applied to the preamble, postamble, and uplink data to implement frequency shifting and prevent power reduction by the low-pass filter. However, Manchester coding degrades the autocorrelation performance of the preamble and postamble, consequently reducing timing precision. In addition, Manchester coding increases the sequence length, significantly increasing the computational complexity of correlation detection.

### SUMMARY

To address these issues, this application provides a communication method and a communication apparatus that reduce the computational complexity of correlation detection for Manchester-coded preambles and postambles while improving their timing precision.

According to a first aspect, a communication method is provided. The method includes: determining a first sequence, where the first sequence is the same as a sequence obtained by performing Manchester (Manchester) coding on a base sequence, the first sequence includes N elements, the base sequence includes $\frac{N}{{2}^{K}}$ elements, any element in the base sequence is represented by 2*^{K}* levels after Manchester coding, the 2*^{K}* levels include two different levels, the base sequence is related to a generalized Golay sequence, the generalized Golay sequence is generated by an M-stage register, a register depth 2*^{Pₘ}* of an m^{th} stage in the M-stage register is determined by an m^{th} element *Pₘ* in a second sequence [P], N is an even number greater than or equal to 2, K and M are integers greater than or equal to 1, m is an integer less than or equal to M and greater than or equal to 1, *Pₘ* is an integer greater than or equal to 0, and a sum of first [M/2] elements in the second sequence is greater than or equal to a sum of last $M - \left⌈M/2\right⌉$ elements; modulating the first sequence and to-be-transmitted data, to generate a first signal; and sending the first signal.

The solution in the first aspect may be executed by a terminal device, or may be executed by a chip, an integrated circuit, or the like in the terminal device. This is not limited herein. For ease of description, the following uses the terminal device as an example for description.

It should be understood that the first sequence is the same as the sequence obtained by performing Manchester coding on the base sequence, or the first sequence may be obtained by performing Manchester coding on the base sequence.

It should be understood that the first sequence may be a preamble sequence or a postamble sequence. This is not limited in this application.

By way of example, but not limitation, when the first sequence is the preamble sequence, the postamble sequence is a negated sequence of the first sequence, where negation may be understood as obtaining a sequence *S'* = [1 - a₀, 1 - *a*₁, ..., 1 - *a*_{*N*-1}] by performing negation on a sequence S = [*a*₀, *a*₁, ..., *a*_{*N*-1}], *aₖ* ∈ {0,1}, *k* = 0, 1, 2, ..., *N* - 1.

It should be understood that the two different levels included in the 2*^{K}* levels may be two levels: 0 and 1, where 1 represents a high level, and 0 represents a low level.

It should be understood that in this embodiment of this application, K is a Manchester coding length. Specifically, when K=1, each element in the base sequence is represented by 2¹ levels after Manchester coding, where bit 0 is encoded into two levels {01}, and bit 1 is encoded into two levels {10}. When K=2, each element in the base sequence is represented by 2² levels after Manchester coding, where bit 0 is encoded into four levels {0101}, and bit 1 is encoded into four levels {1010}. When K=3, each element in the base sequence is represented by 2³ levels after Manchester coding, where bit 0 is encoded into eight levels {01010101}, and bit 1 is encoded into eight levels {10101010}.

It should be understood that, it is specified that a sum of first [M/2] elements in a register sequence (namely, the second sequence) for generating the generalized Golay sequence is greater than or equal to a sum of last $M - \left⌈M/2\right⌉$ elements, so that computational complexity of performing correlation detection on the first sequence can be reduced.

It should be understood that a specific modulation mode of the first sequence and the to-be-transmitted data is not limited in this embodiment of this application. For example, the modulation mode may be on-off keying (on-off keying, OOK) modulation.

It should be understood that the terminal device may directly determine the first sequence, or may obtain the first sequence by performing Manchester coding based on a base sequence related to a specific generalized Golay sequence. This is not limited in this application.

Based on the foregoing solution, the terminal device may perform Manchester coding on the base sequence related to the specific generalized Golay sequence, to determine the first sequence, and modulate the first sequence and the to-be-transmitted data to generate the first signal. This reduces the computational complexity of correlation detection for Manchester-coded preambles and postambles while improving their timing precision.

With reference to the first aspect, in some implementations of the first aspect, the generalized Golay sequence includes $\frac{N}{{2}^{K}}$ elements, and that the base sequence is related to the generalized Golay sequence includes: an n^{th} element *Aₙ* in the generalized Golay sequence and an n^{th} element *xₙ* in the base sequence satisfy: *Aₙ =* 1 - 2*xₙ*, where $0 \leq n \leq \frac{N}{{2}^{K}} - 1$, and *n is* an integer.

With reference to the first aspect, in some implementations of the first aspect, that the base sequence is related to the generalized Golay sequence includes: an n^{th} element *Aₙ* in the generalized Golay sequence and an n^{th} element *xₙ* in the base sequence satisfy: *Aₙ* = 2*xₙ* - 1; or an n^{th} element *Aₙ* in the generalized Golay sequence and an (N-n-1)^{th} element *x*_{*N-n*-1} in the base sequence satisfy: *Aₙ =* 1 *-* 2*x*_{*N-n*-1} or *Aₙ =* 2*x*_{*N-n*-1} *-* 1, where $0 \leq n \leq \frac{N}{{2}^{K}} - 1$, and *n is* an integer.

It should be understood that, that the first sequence is the same as the sequence obtained by performing Manchester coding on the base sequence may alternatively be understood as: the first sequence is the same as a sequence obtained by performing Manchester coding on an equivalent sequence of the base sequence.

By way of example, but not limitation, the equivalent sequence of the base sequence may be obtained after negation is performed on elements in the base sequence. In other words, the n^{th} element *Aₙ* in the generalized Golay sequence and the n^{th} element *xₙ* in the base sequence satisfy: *Aₙ* = 2*xₙ* - 1, where $0 \leq n \leq \frac{N}{{2}^{K}} - 1$, and *n* is an integer.

By way of example, but not limitation, the equivalent sequence of the base sequence may be obtained after reverse is performed on elements in the base sequence. In other words, the n^{th} element *Aₙ* in the generalized Golay sequence and the (N-n-1)^{th} element *x*_{*N-n*-1} in the base sequence satisfy: *Aₙ* = 1 *-* 2*x*_{*N-n*-1}, where $0 \leq n \leq \frac{N}{{2}^{K}} - 1$, and *n* is an integer.

By way of example, but not limitation, the equivalent sequence of the base sequence may be obtained after negation and reverse are performed on elements in the base sequence. In other words, the n^{th} element *Aₙ* in the generalized Golay sequence and the (N-n-1)^{th} element *x*_{*N-n*-1} in the base sequence satisfy: *Aₙ =* 2*x*_{*N-n*-1} *-* 1, where $0 \leq n \leq \frac{N}{{2}^{K}} - 1$, and *n is* an integer.

Based on the foregoing solution, the first sequence may be obtained after Manchester coding is performed on the equivalent sequence of the base sequence, thereby improving flexibility.

With reference to the first aspect, in some implementations of the first aspect, the method further includes: receiving first indication information and second indication information, where the first indication information indicates the base sequence, and the second indication information indicates K.

It should be understood that the first indication information and the second indication information may be included in a same piece of information. In other words, a sending device may indicate the base sequence and K by using the information.

Based on the foregoing solution, the base sequence used by the terminal device and the length K for performing Manchester coding may be indicated by a network device.

With reference to the first aspect, in some implementations of the first aspect, the modulating the first sequence and the to-be-transmitted data, to generate the first signal includes: modulating each element in the first sequence with the to-be-transmitted data after Y consecutive repetitions of the element, to generate the first signal, where Y is an integer greater than or equal to 1.

By way of example, but not limitation, if the first sequence is [0, 1] and Y=1, a first sequence after the repetition is [0, 1].

By way of example, but not limitation, if the first sequence is [0, 1] and Y=2, a first sequence after the repetition is [0, 0, 1, 1].

By way of example, but not limitation, if the first sequence is [0, 1, 1, 0] and Y=4, a first sequence after the repetition is [0, 0, 0, 0, 1, 1, 1, 1, 1, 1, 1, 1, 0, 0, 0, 0].

With reference to the first aspect, in some implementations of the first aspect, two adjacent levels in the 2*^{K}* levels representing any element in the base sequence are different.

With reference to the first aspect, in some implementations of the first aspect, the generalized Golay sequence is determined based on [*W*₁], [*W*₂], and the second sequence [P], and the n^{th} element *Aₙ* in the generalized Golay sequence is equal to *a*_{*M*+1}(*n*)*,* where *a*_{*M*+1}(*n*) satisfies the following formulas: ${a}_{m + 1} \left(n\right) = {a}_{m} \left(n\right) + {W}_{m , 1} {b}_{m} \left(n-{2}^{{P}_{m}}\right)$ ${b}_{m + 1} \left(n\right) = {a}_{m} \left(n\right) - {W}_{m , 2} {b}_{m} \left(n-{2}^{{P}_{m}}\right) ,$ where *a*_{*M*+1}(*n*) is *a*_{*m*+1}(*n*) when *m* = *M, a*₁(*n*) = *δ*(*n*), *b*₁(*n*) = *δ*(*n*), when *n =* 0, *δ*(*n*) = 1, and when *n* ≠ 0, *δ*(*n*) = 0; and *W*_{*m*,1} ∈ {1, -1}, *W*_{*m*,2} ∈ {1, -1}, $0 \leq n \leq \frac{N}{{2}^{K}} - 1$, and n is an integer.

With reference to the first aspect, in some implementations of the first aspect, $\frac{N}{{2}^{K}} = 8$, and the base sequence is one of the following:
[0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1].

With reference to the first aspect, in some implementations of the first aspect, {[*W*₁], [*W*₂], *[P]}* corresponding to the base sequence is one of the following, and the base sequence is in one-to-one correspondence with {[*W*₁], [*W*₂], [*P*]}: {[-1, 1, 1], [-1, 1, -1], [2, 0, 1]}, {[1, 1, -1], [1, 1, -1], [2, 0, 1]}, {[1, -1, 1], [1, -1, -1], [2, 0, 1]}, {[-1, -1, -1], [-1, -1, -1], [2, 0, 1]}, {[1, - 1, 1], [1, -1, -1], [2, 1, 0]}, or {[-1, -1, -1], [-1, -1, -1], [2, 1, 0]}.

It should be understood that {[*W*₁], [*W*₂], [*P*]} corresponding to the base sequence may be understood as {[*W*₁], [*W*₂], [*P*]} used to generate the generalized Golay sequence related to the base sequence.

It should be understood that, that the base sequence is in one-to-one correspondence with {[*W*₁], [*W*₂], [*P*]} may be understood as: the base sequence is in one-to-one correspondence with {[*W*₁], [*W*₂], [*P*]} according to the foregoing order.

By way of example, but not limitation, a base sequence [0, 0, 0, 1, 1, 0, 1, 1] corresponds to {[-1, 1, 1], [-1, 1, -1], [2, 0, 1]}, a base sequence [0, 0, 1, 0, 0, 1, 1, 1] corresponds to {[1, 1, -1], [1, 1, -1], [2, 0, 1]}, a base sequence [0, 1, 0, 0, 0, 0, 0, 1] corresponds to {[1, -1, 1], [1, -1, -1], [2, 0, 1]}, a base sequence [0, 1, 1, 1, 1, 1, 0, 1] corresponds to {[-1, -1, -1], [-1, -1, -1], [2, 0, 1]}, a base sequence [0, 0, 1, 0, 0, 0, 0, 1] corresponds to {[1, -1, 1], [1, -1, -1], [2, 1, 0]}, and a base sequence [0, 1, 1, 1, 1, 0, 1, 1] corresponds to {[-1, -1, -1], [-1, -1, -1], [2, 1, 0]}.

With reference to the first aspect, in some implementations of the first aspect, $\frac{N}{{2}^{K}} = 16$, the base sequence is one of the following, and the base sequence is in one-to-one correspondence with {[*W*₁], [*W*₂], [*P*]}:
[0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1].

With reference to the first aspect, in some implementations of the first aspect, {[*W*₁], [*W*₂], [*P*]} corresponding to the base sequence is one of the following, and the base sequence is in one-to-one correspondence with {[*W*₁], [*W*₂], [*P*]}:
{[-1, 1, 1, -1], [-1, 1, 1, -1], [3, 2, 0, 1]}, {[-1, 1, -1, 1], [-1, 1, -1, -1], [3, 2, 0, 1]}, {[1, 1, -1, -1], [1, 1, -1, -1], [3, 2, 0, 1]}, {[-1, -1, 1, 1], [-1, -1, 1, -1], [3, 2, 0, 1]}, {[1, -1, 1, - 1], [1, -1, 1, -1], [3, 2, 0, 1]}, {[1, -1, -1, 1], [1, -1, -1, -1], [3, 2, 0, 1]}, {[-1, -1, -1, -1], [-1, - 1, -1, -1], [3, 2, 0, 1]}, {[1, 1, 1, 1], [1, 1, 1, 1], [3, 2, 0, 1]}, {[-1, 1, 1, -1], [-1, 1, 1, -1], [3, 2, 1, 0]}, {[1, 1, 1, 1], [1, 1, 1, 1], [3, 2, 1, 0]}, {[-1, 1, 1, -1], [-1, 1, 1, -1], [3, 1, 0, 2]}, {[-1, 1, -1, 1], [-1, 1, -1, -1], [3, 1, 0, 2]}, {[1, 1, -1, -1], [1, 1, -1, -1], [3, 1, 0, 2]}, {[-1, -1, -1, 1], [1, -1, -1, -1], [2, 3, 1, 0]}, {[-1, 1, -1, -1], [1, 1, -1, -1], [2, 3, 1, 0]}, {[1, 1, 1, 1], [1, 1, 1, 1], [3, 1, 0, 2]}, {[-1, -1, 1, 1], [-1, -1, 1, -1], [3, 1, 2, 0]}, {[1, -1, 1, -1], [1, -1, 1, -1], [3, 1, 2, 0]}, {[1, - 1, -1, 1], [1, -1, -1, -1], [3, 1, 2, 0]}, {[-1, -1, -1, -1], [-1, -1, -1, -1], [3, 1, 2, 0]}, {[-1, 1, 1, 1], [1, 1, 1, -1], [2, 3, 0, 1]}, {[-1, 1, -1, 1], [-1, 1, -1, -1], [3, 0, 1, 2]}, {[-1, -1, 1, -1], [1, -1, 1, -1], [2, 3, 0, 1]}, {[1, 1, -1, -1], [1, 1, -1, -1], [3, 0, 1, 2]}, {[-1, -1, -1, 1], [1, -1, -1, -1], [2, 3, 0, 1]}, {[1, -1, -1, 1], [1, -1, -1, -1], [3, 0, 1, 2]}, {[-1, 1, -1, -1], [1, 1, -1, -1], [2, 3, 0, 1]}, {[-1, -1, -1, -1], [-1, -1, -1, -1], [3, 0, 1, 2]}, {[-1, 1, 1, -1], [-1, 1, 1, -1], [3, 0, 2, 1]}, {[-1, 1, -1, 1], [-1, 1, -1, -1], [3, 0, 2, 1]}, {[1, 1, -1, -1], [1, 1, -1, -1], [3, 0, 2, 1]}, {[-1, -1, 1, 1], [-1, -1, 1, -1], [3, 0, 2, 1]}, {[1, -1, 1, -1], [1, -1, 1, -1], [3, 0, 2, 1]}, {[1, -1, -1, 1], [1, -1, -1, -1], [3, 0, 2, 1]}, {[-1, -1, -1, -1], [-1, -1, -1, -1], [3, 0, 2, 1]}, {[1, 1, 1, 1], [1, 1, 1, 1], [3, 0, 2, 1]}, {[-1, -1, 1, 1], [-1, -1, 1, -1], [2, 3, 1, 0]}, {[1, -1, 1, -1], [1, -1, 1, -1], [2, 3, 1, 0]}, {[-1, 1, -1, 1], [-1, 1, -1, -1], [1, 3, 2, 0]}, {[1, 1, -1, -1], [1, 1, -1, -1], [1, 3, 2, 0]}, {[-1, 1, -1, 1], [-1, 1, -1, - 1], [0, 3, 1, 2]}, or {[1, 1, -1, -1], [1, 1, -1, -1], [0, 3, 1, 2]}.

It should be understood that, that the base sequence is in one-to-one correspondence with {[*W*₁], [*W*₂], [*P*]} may be understood as: the base sequence is in one-to-one correspondence with {[*W*₁], [*W*₂], [*P*]} according to the foregoing order.

With reference to the first aspect, in some implementations of the first aspect, $\frac{N}{{2}^{K}} = 32$, and the base sequence is one of the following:
[0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
[0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
[0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
[0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
[0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
[0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
[0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
[0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
[0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
[0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
[0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
[0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
[0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
[0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
[0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
[0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
[0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
[0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
[0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
[0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
[0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
[0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
[0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
[0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
[0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
[0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
[0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
[0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
[0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
[0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
[0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
[0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
[0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
[0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
[0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
[0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
[0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
[0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
[0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
[0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
[0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
[0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
[0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
[0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
[0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
[0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
[0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
[0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
[0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
[0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
[0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
[0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
[0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
[0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
[0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
[0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
[0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
[0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
[0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
[0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
[0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
[0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
[0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
[0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
[0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
[0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
[0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
[0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
[0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
[0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
[0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
[0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1].

With reference to the first aspect, in some implementations of the first aspect, {[*W*₁], [*W*₂], [*P*]} corresponding to the base sequence is one of the following:
{[-1, 1, 1, 1, 1], [-1, 1, 1, 1, -1], [3, 2, 4, 1, 0]}, {[1, 1, 1, 1, -1], [1, 1, 1, 1, -1], [3, 2, 4, 1, 0]}, {[-1, 1, 1, -1, 1], [-1, 1, 1, -1, -1], [3, 2, 4, 1, 0]}, {[1, 1, 1, -1, -1], [1, 1, 1, -1, -1], [3, 2, 4, 1, 0]}, {[-1, -1, 1, 1, 1], [-1, -1, 1, 1, -1], [3, 2, 4, 1, 0]}, {[1, -1, 1, 1, -1], [1, -1, 1, 1, -1], [3, 2, 4, 1, 0]}, {[-1, -1, 1, -1, 1], [-1, -1, 1, -1, -1], [3, 2, 4, 1, 0]}, {[1, -1, 1, -1, -1], [1, -1, 1, -1, -1], [3, 2, 4, 1, 0]}, {[-1, 1, 1, 1, 1], [-1, 1, 1, 1, -1], [2, 3, 4, 1, 0]}, {[1, 1, 1, 1, -1], [1, 1, 1, 1, -1], [2, 3, 4, 1, 0]}, {[-1, -1, 1, 1, 1], [-1, -1, 1, 1, -1], [2, 3, 4, 1, 0]}, {[1, -1, 1, 1, -1], [1, -1, 1, 1, -1], [2, 3, 4, 1, 0]}, {[-1, -1, 1, -1, 1], [-1, -1, 1, -1, -1], [2, 3, 4, 1, 0]}, {[1, -1, 1, -1, -1], [1, -1, 1, -1, -1], [2, 3, 4, 1, 0]}, {[-1, 1, 1, -1, 1], [-1, 1, 1, -1, -1], [4, 1, 2, 3, 0]}, {[1, 1, 1, -1, -1], [1, 1, 1, -1, -1], [4, 1, 2, 3, 0]}, {[1, 1, -1, -1, 1], [1, 1, -1, -1, -1], [4, 1, 2, 3, 0]}, {[-1, 1, - 1, -1, -1], [-1, 1, -1, -1, -1], [4, 1, 2, 3, 0]}, {[-1, -1, 1, -1, 1], [-1, -1, 1, -1, -1], [4, 1, 2, 3, 0]}, {[1, -1, 1, -1, -1], [1, -1, 1, -1, -1], [4, 1, 2, 3, 0]}, {[1, -1, -1, -1, 1], [1, -1, -1, -1, -1], [4, 1, 2, 3, 0]}, {[-1, -1, -1, -1, -1], [-1, -1, -1, -1, -1], [4, 1, 2, 3, 0]}, {[1, 1, -1, 1, 1], [1, 1, -1, 1, - 1], [0, 4, 3, 1, 2]}, {[-1, 1, -1, 1, -1], [-1, 1, -1, 1, -1], [0, 4, 3, 1, 2]}, {[-1, 1, 1, -1, 1], [-1, 1, 1, -1, -1], [0, 4, 3, 2, 1]}, {[1, 1, 1, -1, -1], [1, 1, 1, -1, -1], [0, 4, 3, 2, 1]}, {[1, 1, -1, 1, 1], [1, 1, - 1, 1, -1], [0, 4, 3, 2, 1]}, {[-1, 1, -1, 1, -1], [-1, 1, -1, 1, -1], [0, 4, 3, 2, 1]}, {[-1, 1, 1, 1, 1], [-1, 1, 1, 1, -1], [0, 3, 4, 1, 2]}, {[1, 1, 1, 1, -1], [1, 1, 1, 1, -1], [0, 3, 4, 1, 2]}, {[-1, 1, 1, -1, 1], [-1, 1, 1, -1, -1], [0, 3, 4, 1, 2]}, {[1, 1, 1, -1, -1], [1, 1, 1, -1, -1], [0, 3, 4, 1, 2]}, {[-1, -1, 1, -1, 1], [-1, -1, 1, -1, -1], [0, 3, 4, 1, 2]}, {[1, -1, 1, -1, -1], [1, -1, 1, -1, -1], [0, 3, 4, 1, 2]}, {[-1, 1, 1, 1, 1], [-1, 1, 1, 1, -1], [0, 3, 4, 2, 1]}, {[1, 1, 1, 1, -1], [1, 1, 1, 1, -1], [0, 3, 4, 2, 1]}, {[-1, 1, 1, - 1, 1], [-1, 1, 1, -1, -1], [0, 3, 4, 2, 1]}, {[1, 1, 1, -1, -1], [1, 1, 1, -1, -1], [0, 3, 4, 2, 1]}, {[-1, -1, 1, 1, 1], [-1, -1, 1, 1, -1], [0, 3, 4, 2, 1]}, {[1, -1, 1, 1, -1], [1, -1, 1, 1, -1], [0, 3, 4, 2, 1]}, {[-1, -1, 1, -1, 1], [-1, -1, 1, -1, -1], [0, 3, 4, 2, 1]}, {[1, -1, 1, -1, -1], [1, -1, 1, -1, -1], [0, 3, 4, 2, 1]}, {[1, 1, -1, 1, 1], [1, 1, -1, 1, -1], [3, 2, 1, 4, 0]}, {[-1, 1, -1, 1, -1], [-1, 1, -1, 1, -1], [3, 2, 1, 4, 0]}, {[-1, 1, 1, 1, 1], [-1, 1, 1, 1, -1], [3, 1, 2, 4, 0]}, {[1, 1, 1, 1, -1], [1, 1, 1, 1, -1], [3, 1, 2, 4, 0]}, {[1, 1, -1, -1, 1], [1, 1, -1, -1, -1], [4, 1, 3, 2, 0]}, {[-1, 1, -1, -1, -1], [-1, 1, -1, -1, -1], [4, 1, 3, 2, 0]}, {[1, -1, -1, -1, 1], [1, -1, -1, -1, -1], [4, 1, 3, 2, 0]}, {[-1, -1, -1, -1, -1], [-1, -1, - 1, -1, -1], [4, 1, 3, 2, 0]}, {[1, 1, 1, 1, -1], [1, 1, 1, 1, -1], [4, 2, 3, 1, 0]}, {[-1, 1, 1, 1, 1], [-1, 1, 1, 1, -1], [4, 2, 3, 1, 0]}, {[1, -1, 1, 1, -1], [1, -1, 1, 1, -1], [4, 2, 3, 1, 0]}, {[-1, -1, 1, 1, 1], [-1, -1, 1, 1, -1], [4, 2, 3, 1, 0]}, {[1, 1, 1, -1, -1], [1, 1, 1, -1, -1], [4, 2, 3, 1, 0]}, {[-1, 1, 1, -1, 1], [-1, 1, 1, -1, -1], [4, 2, 3, 1, 0]}, {[1, -1, 1, -1, -1], [1, -1, 1, -1, -1], [4, 2, 3, 1, 0]}, {[-1, -1, 1, -1, 1], [-1, -1, 1, -1, -1], [4, 2, 3, 1, 0]}, {[1, 1, -1, -1, 1], [1, 1, -1, -1, -1], [4, 2, 3, 1, 0]}, {[-1, 1, -1, -1, -1], [-1, 1, -1, -1, -1], [4, 2, 3, 1, 0]}, {[1, -1, -1, -1, 1], [1, -1, -1, -1, -1], [4, 2, 3, 1, 0]}, {[-1, -1, -1, -1, -1], [-1, -1, -1, -1, -1], [4, 2, 3, 1, 0]}, {[1, -1, 1, 1, -1], [1, -1, 1, 1, -1], [3, 4, 1, 2, 0]}, {[-1, -1, 1, 1, 1], [-1, -1, 1, 1, -1], [3, 4, 1, 2, 0]}, {[1, -1, 1, -1, -1], [1, -1, 1, - 1, -1], [3, 4, 1, 2, 0]}, {[-1, -1, 1, -1, 1], [-1, -1, 1, -1, -1], [3, 4, 1, 2, 0]}, {[1, -1, -1, -1, 1], [1, -1, -1, -1, -1], [3, 4, 1, 2, 0]}, {[-1, -1, -1, -1, -1], [-1, -1, -1, -1, -1], [3, 4, 1, 2, 0]}, {[1, 1, - 1, 1, 1], [1, 1, -1, 1, -1], [4, 3, 2, 1, 0]}, {[-1, 1, -1, 1, -1], [-1, 1, -1, 1, -1], [4, 3, 2, 1, 0]}, {[1, -1, -1, 1, 1], [1, -1, -1, 1, -1], [4, 3, 2, 1, 0]}, {[-1, -1, -1, 1, -1], [-1, -1, -1, 1, -1], [4, 3, 2, 1, 0]}, {[1, 1, 1, -1, -1], [1, 1, 1, -1, -1], [4, 3, 2, 1, 0]}, {[-1, 1, 1, -1, 1], [-1, 1, 1, -1, -1], [4, 3, 2, 1, 0]}, {[1, -1, 1, -1, -1], [1, -1, 1, -1, -1], [4, 3, 2, 1, 0]}, {[-1, -1, 1, -1, 1], [-1, -1, 1, -1, -1], [4, 3, 2, 1, 0]}, {[1, -1, -1, 1, 1], [1, -1, -1, 1, -1], [3, 4, 2, 1, 0]}, {[-1, -1, -1, 1, -1], [-1, -1, - 1, 1, -1], [3, 4, 2, 1, 0]}, {[1, -1, 1, -1, -1], [1, -1, 1, -1, -1], [3, 4, 2, 1, 0]}, {[-1, -1, 1, -1, 1], [-1, -1, 1, -1, -1], [3, 4, 2, 1, 0]}, {[1, -1, -1, -1, 1], [1, -1, -1, -1, -1], [3, 4, 2, 1, 0]}, or {[-1, - 1, -1, -1, -1], [-1, -1, -1, -1, -1], [3, 4, 2, 1, 0]}.

It should be understood that, that the base sequence is in one-to-one correspondence with {[*W*₁], [*W*₂], [*P*]} may be understood as: the base sequence is in one-to-one correspondence with {[*W*₁], [*W*₂], [*P*]} according to the foregoing order.

With reference to the first aspect, in some implementations of the first aspect, $\frac{N}{{2}^{K}} = 32$, and the base sequence is one of the following:
[0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
[0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
[0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
[0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
[0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
[0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
[0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
[0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
[0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
[0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
[0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
[0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
[0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
[0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
[0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
[0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
[0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
[0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
[0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
[0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
[0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
[0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
[0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
[0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
[0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
[0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
[0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
[0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
[0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
[0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
[0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
[0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
[0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
[0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
[0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
[0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
[0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
[0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
[0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
[0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
[0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

With reference to the first aspect, in some implementations of the first aspect, {[*W*₁], [*W*₂], [*P*]} corresponding to the base sequence is one of the following:
{[1, -1, 1, -1, 1, 1], [1, -1, 1, -1, 1, -1], [4, 5, 1, 2, 0, 3]}, {[1, -1, 1, -1, 1, -1], [1, -1, 1, -1, 1, -1], [4, 5, 1, 2, 0, 3]}, {[-1, -1, 1, -1, 1, 1], [-1, -1, 1, -1, 1, -1], [4, 5, 1, 2, 0, 3]}, {[-1, -1, 1, -1, 1, -1], [-1, -1, 1, -1, 1, -1], [4, 5, 1, 2, 0, 3]}, {[1, -1, 1, -1, -1, 1], [1, -1, 1, -1, -1, - 1], [4, 5, 1, 2, 0, 3]}, {[1, -1, 1, -1, -1, -1], [1, -1, 1, -1, -1, -1], [4, 5, 1, 2, 0, 3]}, {[-1, -1, 1, - 1, -1, 1], [-1, -1, 1, -1, -1, -1], [4, 5, 1, 2, 0, 3]}, {[-1, -1, 1, -1, -1, -1], [-1, -1, 1, -1, -1, -1], [4, 5, 1, 2, 0, 3]}, {[-1, 1, 1, 1, 1, -1], [1, 1, 1, 1, 1, -1], [4, 5, 0, 1, 3, 2]}, {[-1, -1, 1, 1, 1, 1], [1, -1, 1, 1, 1, -1], [4, 5, 0, 1, 3, 2]}, {[-1, 1, -1, 1, 1, -1], [1, 1, -1, 1, 1, -1], [4, 5, 0, 1, 3, 2]}, {[-1, -1, -1, 1, 1, 1], [1, -1, -1, 1, 1, -1], [4, 5, 0, 1, 3, 2]}, {[-1, 1, 1, -1, -1, 1], [1, 1, 1, -1, -1, -1], [4, 5, 0, 1, 3, 2]}, {[-1, -1, 1, -1, -1, -1], [1, -1, 1, -1, -1, -1], [4, 5, 0, 1, 3, 2]}, {[-1, 1, -1, -1, -1, 1], [1, 1, -1, -1, -1, -1], [4, 5, 0, 1, 3, 2]}, {[-1, -1, -1, -1, -1, -1], [1, -1, -1, -1, -1, -1], [4, 5, 0, 1, 3, 2]}, {[-1, -1, -1, 1, -1, -1], [-1, -1, -1, 1, 1, -1], [4, 5, 1, 0, 3, 2]}, {[-1, -1, -1, -1, - 1, -1], [-1, -1, -1, -1, 1, -1], [4, 5, 1, 0, 3, 2]}, {[1, -1, -1, 1, 1, -1], [1, -1, -1, 1, -1, -1], [4, 5, 1, 0, 3, 2]}, {[1, -1, -1, -1, 1, -1], [1, -1, -1, -1, -1, -1], [4, 5, 1, 0, 3, 2]}, {[1, 1, -1, 1, -1, 1], [1, 1, -1, 1, -1, -1], [5, 3, 2, 4, 0, 1]}, {[-1, 1, -1, 1, -1, -1], [-1, 1, -1, 1, -1, -1], [5, 3, 2, 4, 0, 1]}, {[1, -1, -1, 1, -1, 1], [1, -1, -1, 1, -1, -1], [5, 3, 2, 4, 0, 1]}, {[-1, -1, -1, 1, -1, -1], [-1, -1, -1, 1, -1, -1], [5, 3, 2, 4, 0, 1]}, {[1, 1, -1, -1, -1, -1], [1, 1, -1, -1, -1, -1], [5, 3, 2, 4, 0, 1]}, {[-1, 1, -1, -1, -1, 1], [-1, 1, -1, -1, -1, -1], [5, 3, 2, 4, 0, 1]}, {[1, -1, -1, -1, -1, -1], [1, -1, -1, - 1, -1, -1], [5, 3, 2, 4, 0, 1]}, {[-1, -1, -1, -1, -1, 1], [-1, -1, -1, -1, -1, -1], [5, 3, 2, 4, 0, 1]}, {[1, 1, -1, 1, -1, 1], [1, 1, -1, 1, -1, -1], [5, 2, 4, 3, 0, 1]}, {[-1, 1, -1, 1, -1, -1], [-1, 1, -1, 1, -1, -1], [5, 2, 4, 3, 0, 1]}, {[1, -1, -1, 1, -1, 1], [1, -1, -1, 1, -1, -1], [5, 2, 4, 3, 0, 1]}, {[-1, -1, -1, 1, -1, -1], [-1, -1, -1, 1, -1, -1], [5, 2, 4, 3, 0, 1]}, {[1, 1, -1, -1, -1, -1], [1, 1, -1, -1, -1, -1], [5, 2, 4, 3, 0, 1]}, {[-1, 1, -1, -1, -1, 1], [-1, 1, -1, -1, -1, -1], [5, 2, 4, 3, 0, 1]}, {[1, -1, -1, -1, -1, -1], [1, -1, -1, -1, -1, -1], [5, 2, 4, 3, 0, 1]}, {[-1, -1, -1, -1, -1, 1], [-1, -1, -1, -1, -1, -1], [5, 2, 4, 3, 0, 1]}, {[1, -1, -1, 1, -1, 1], [1, -1, -1, 1, -1, -1], [3, 4, 2, 5, 0, 1]}, {[-1, -1, -1, 1, -1, -1], [-1, -1, -1, 1, -1, -1], [3, 4, 2, 5, 0, 1]}, {[1, -1, -1, -1, -1, -1], [1, -1, -1, -1, -1, -1], [3, 4, 2, 5, 0, 1]}, {[-1, -1, -1, -1, -1, 1], [-1, -1, -1, -1, -1, -1], [3, 4, 2, 5, 0, 1]}, {[-1, 1, 1, 1, 1, 1], [1, 1, 1, 1, 1, -1], [4, 5, 0, 3, 1, 2]}, {[-1, 1, 1, 1, 1, -1], [1, 1, 1, 1, 1, -1], [4, 5, 0, 3, 1, 2]}, {[-1, -1, 1, 1, 1, 1], [1, -1, 1, 1, 1, -1], [4, 5, 0, 3, 1, 2]}, {[-1, -1, 1, 1, 1, -1], [1, -1, 1, 1, 1, -1], [4, 5, 0, 3, 1, 2]}, {[-1, 1, -1, 1, 1, 1], [1, 1, -1, 1, 1, -1], [4, 5, 0, 3, 1, 2]}, {[-1, 1, -1, 1, 1, -1], [1, 1, -1, 1, 1, -1], [4, 5, 0, 3, 1, 2]}, {[-1, -1, -1, 1, 1, 1], [1, -1, -1, 1, 1, -1], [4, 5, 0, 3, 1, 2]}, {[-1, -1, -1, 1, 1, -1], [1, -1, -1, 1, 1, -1], [4, 5, 0, 3, 1, 2]}, {[-1, 1, 1, -1, -1, 1], [1, 1, 1, -1, -1, -1], [4, 5, 0, 3, 1, 2]}, {[-1, 1, 1, -1, -1, -1], [1, 1, 1, -1, -1, -1], [4, 5, 0, 3, 1, 2]}, {[-1, -1, 1, -1, -1, 1], [1, -1, 1, -1, -1, -1], [4, 5, 0, 3, 1, 2]}, {[-1, -1, 1, -1, -1, -1], [1, -1, 1, -1, -1, -1], [4, 5, 0, 3, 1, 2]}, {[-1, 1, -1, -1, -1, 1], [1, 1, -1, -1, -1, -1], [4, 5, 0, 3, 1, 2]}, {[-1, 1, -1, -1, -1, -1], [1, 1, -1, -1, -1, -1], [4, 5, 0, 3, 1, 2]}, {[-1, -1, -1, -1, -1, 1], [1, -1, -1, -1, -1, -1], [4, 5, 0, 3, 1, 2]}, {[-1, -1, -1, -1, -1, -1], [1, -1, -1, -1, -1, -1], [4, 5, 0, 3, 1, 2]}, {[1, -1, -1, 1, -1, 1], [1, -1, -1, 1, -1, -1], [4, 5, 2, 3, 0, 1]}, {[-1, -1, -1, 1, -1, -1], [-1, -1, -1, 1, -1, -1], [4, 5, 2, 3, 0, 1]}, {[1, -1, -1, -1, -1, -1], [1, -1, -1, -1, -1, -1], [4, 5, 2, 3, 0, 1]}, or {[-1, -1, -1, -1, -1, 1], [-1, -1, - 1, -1, -1, -1], [4, 5, 2, 3, 0, 1]}.

It should be understood that, that the base sequence is in one-to-one correspondence with {[*W*₁], [*W*₂], [*P*]} may be understood as: the base sequence is in one-to-one correspondence with {[*W*₁], [*W*₂], [*P*]} according to the foregoing order.

According to a second aspect, a communication method is provided. The method includes: receiving a first signal, where the first signal includes uplink data and a first sequence, the first sequence is the same as a sequence obtained by performing Manchester coding on a base sequence, the first sequence includes N elements, the base sequence includes $\frac{N}{{2}^{K}}$ elements, any element in the base sequence is represented by 2*^{K}* levels after Manchester coding, the 2*^{K}* levels include two different levels, the base sequence is related to a generalized Golay sequence, the generalized Golay sequence is generated by an M-stage register, a register depth 2*^{Pₘ}* of an m^{th} stage in the M-stage register is determined by an m^{th} element *Pₘ* in a second sequence [P], N is an even number greater than or equal to 2, K and M are integers greater than or equal to 1, m is an integer less than or equal to M and greater than or equal to 1, *Pₘ* is an integer greater than or equal to 0, and a sum of first $\left⌈M/2\right⌉$ elements in the second sequence is greater than or equal to a sum of last $M - \left⌈M/2\right⌉$ elements; and detecting the first signal.

The solution in the second aspect may be executed by a network device, or may be executed by a chip, an integrated circuit, or the like in the network device. This is not limited herein. For ease of description, the following uses the network device as an example for description.

For specific descriptions of the base sequence and the first sequence, refer to related content in the first aspect. Details are not described herein again.

Based on the foregoing solution, the network device may detect the first signal obtained by performing Manchester coding and modulation on a base sequence related to a specific generalized Golay sequence. This reduces the computational complexity of correlation detection for Manchester-coded preambles and postambles while improving their timing precision.

With reference to the second aspect, in some implementations of the second aspect, the detecting the first signal includes: detecting the first signal to determine a start position or an end position of the first sequence in the first signal.

It should be understood that, when detecting the first signal, the network device generates the first sequence, and perform sliding correlation on the first signal in a receiving time window. A position with a largest correlation value corresponds to the start position of the first sequence in the first signal.

With reference to the second aspect, in some implementations of the second aspect, the generalized Golay sequence includes $\frac{N}{{2}^{K}}$ elements, and that the base sequence is related to the generalized Golay sequence includes: an n^{th} element *Aₙ* in the generalized Golay sequence and an n^{th} element *xₙ* in the base sequence satisfy: *Aₙ =* 1 - 2*xₙ*, where $0 \leq n \leq \frac{N}{{2}^{K}} - 1$, and *n is* an integer.

With reference to the second aspect, in some implementations of the second aspect, that the base sequence is related to the generalized Golay sequence includes: an n^{th} element *Aₙ* in the generalized Golay sequence and an n^{th} element *xₙ* in the base sequence satisfy: *Aₙ* = 2*xₙ* - 1; or an n^{th} element *Aₙ* in the generalized Golay sequence and an (N-n-1)^{th} element *x*_{*N-n*-1} in the base sequence satisfy: *Aₙ* = 1 *-* 2*x*_{*N-n*-1} or *Aₙ =* 2*x*_{*N-n*-1} *-* 1, where $0 \leq n \leq \frac{N}{{2}^{K}} - 1$, and *n is* an integer.

With reference to the second aspect, in some implementations of the second aspect, two adjacent levels in the 2*^{K}* levels representing any element in the base sequence are different.

With reference to the second aspect, in some implementations of the second aspect, the generalized Golay sequence is determined based on [*W*₁], [*W*₂], and the second sequence [P], and the n^{th} element *Aₙ* in the generalized Golay sequence is equal to *a*_{*M*+1}(*n*), where *a*_{*M*+1}(*n*) satisfies the following formulas: ${a}_{m + 1} \left(n\right) = {a}_{m} \left(n\right) + {W}_{m , 1} {b}_{m} \left(n-{2}^{{P}_{m}}\right)$ ${b}_{m + 1} \left(n\right) = {a}_{m} \left(n\right) - {W}_{m , 2} {b}_{m} \left(n-{2}^{{P}_{m}}\right) ,$ where *a*_{*M*+1}(*n*) is *a*_{*m*+1}(*n*) when *m* = *M*, *a*₁(*n*) = *δ*(*n*), *b*₁(*n*) = *δ*(*n*), when *n* = 0, *δ*(*n*) = 1, and when *n* ≠ 0, *δ*(*n*) = 0; and *W*_{*m*,1} ∈ {1, -1}, *W*_{*m*,2} ∈ {1, -1}, $0 \leq n \leq \frac{N}{{2}^{K}} - 1$, and n is an integer.

It should be understood that, for specific base sequences whose quantity of elements are 8, 16, 32, and 64 and {[*W*₁], [*W*₂], [*P*]} corresponding to the specific base sequences that are provided in this embodiment of this application, refer to related content in the first aspect. Details are not described herein again.

According to a third aspect, a communication method is provided. The method includes: determining a first sequence, where the first sequence is the same as a sequence obtained by performing Manchester coding on a base sequence, the first sequence includes N elements, the base sequence includes $\frac{N}{{2}^{K}}$ elements, any element in the base sequence is represented by 2*^{K}* levels after Manchester coding, the 2*^{K}* levels include two different levels, N is an even number greater than or equal to 2, and K is an integer greater than or equal to 1; modulating the first sequence and to-be-transmitted data, to generate a first signal; and sending the first signal, where
$\frac{N}{{2}^{K}} = 8$, and the base sequence is one of the following:
   [0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1];
   $\frac{N}{{2}^{K}} = 16$, and the base sequence is one of the following:
      [0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1];
      $\frac{N}{{2}^{K}} = 32$, and the base sequence is one of the following:
         [0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
         [0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
         [0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
         [0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
         [0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
         [0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
         [0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
         [0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
         [0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
         [0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
         [0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
         [0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
         [0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
         [0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
         [0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
         [0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
         [0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
         [0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
         [0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
         [0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
         [0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
         [0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
         [0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
         [0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
         [0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
         [0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
         [0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
         [0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
         [0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
         [0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
         [0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
         [0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
         [0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
         [0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
         [0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
         [0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
         [0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
         [0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
         [0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
         [0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
         [0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
         [0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
         [0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
         [0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
         [0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
         [0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
         [0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
         [0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
         [0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
         [0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
         [0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
         [0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
         [0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
         [0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
         [0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
         [0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
         [0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
         [0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
         [0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
         [0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
         [0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
         [0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
         [0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
         [0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
         [0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
         [0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
         [0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
         [0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
         [0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
         [0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
         [0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
         [0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
         [0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
         [0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
         [0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
         [0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
         [0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
         [0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
         [0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
         [0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
         [0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1]; or
         $\frac{N}{{2}^{K}} = 64$, and the base sequence is one of the following:
            [0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
            [0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
            [0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
            [0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
            [0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
            [0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
            [0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
            [0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
            [0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
            [0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
            [0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
            [0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
            [0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
            [0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
            [0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
            [0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
            [0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
            [0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
            [0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
            [0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
            [0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
            [0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
            [0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
            [0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
            [0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
            [0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
            [0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
            [0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
            [0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
            [0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
            [0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
            [0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
            [0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
            [0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
            [0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
            [0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
            [0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
            [0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
            [0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
            [0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
            [0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
            [0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
            [0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
            [0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
            [0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0];
            [0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
            [0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
            [0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
            [0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
            [0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
            [0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
            [0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
            [0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
            [0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
            [0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
            [0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
            [0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
            [0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
            [0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
            [0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

The solution in the third aspect may be executed by a terminal device, or may be executed by a chip, an integrated circuit, or the like in the terminal device. This is not limited herein. For ease of description, the following uses the terminal device as an example for description.

With reference to the third aspect, in some implementations of the third aspect, the base sequence is related to a generalized Golay sequence, the generalized Golay sequence is determined based on [*W*₁], [*W*₂], and [P], and an n^{th} element *Aₙ* in the generalized Golay sequence is equal to *a*_{*M*+1}(*n*), where *a*_{*M*+1}(*n*) satisfies the following formulas: ${a}_{m + 1} \left(n\right) = {a}_{m} \left(n\right) + {W}_{m , 1} {b}_{m} \left(n-{2}^{{P}_{m}}\right)$ ${b}_{m + 1} \left(n\right) = {a}_{m} \left(n\right) - {W}_{m , 2} {b}_{m} \left(n-{2}^{{P}_{m}}\right) ,$ where M is an integer greater than or equal to 1, m is an integer less than or equal to M and greater than or equal to 1, *a*₁(*n*) = *δ*(*n*) , *b*₁(*n*) = *δ*(*n*) , when *n* = 0, *δ*(*n*) = 1, and when *n* ≠ 0, *δ*(*n*) = 0; and *W*_{*m*,1} ∈ {1, -1}, *W*_{*m*,2} ∈ {1, -1}, $0 \leq n \leq \frac{N}{{2}^{K}} - 1$, n is an integer, and {[*W*₁], [*W*₂], *[P]}* is in one-to-one correspondence with the base sequence, where
$\frac{N}{{2}^{K}} = 8$, and {[*W*₁], [*W*₂], *[P]}* corresponding to the base sequence is one of the following:
{[-1, 1, 1], [-1, 1, -1], [2, 0, 1]}, {[1, 1, -1], [1, 1, -1], [2, 0, 1]}, {[1, -1, 1], [1, -1, - 1], [2, 0, 1]}, {[-1, -1, -1], [-1, -1, -1], [2, 0, 1]}, {[1, -1, 1], [1, -1, -1], [2, 1, 0]}, or {[-1, -1, -1], [-1, -1, -1], [2, 1, 0]};
$\frac{N}{{2}^{K}} = 16$, and {[*W*₁], [*W*₂], [*P*]} corresponding to the base sequence is one of the following:
   {[-1, 1, 1, -1], [-1, 1, 1, -1], [3, 2, 0, 1]}, {[-1, 1, -1, 1], [-1, 1, -1, -1], [3, 2, 0, 1]}, {[1, 1, -1, -1], [1, 1, -1, -1], [3, 2, 0, 1]}, {[-1, -1, 1, 1], [-1, -1, 1, -1], [3, 2, 0, 1]}, {[1, -1, 1, - 1], [1, -1, 1, -1], [3, 2, 0, 1]}, {[1, -1, -1, 1], [1, -1, -1, -1], [3, 2, 0, 1]}, {[-1, -1, -1, -1], [-1, - 1, -1, -1], [3, 2, 0, 1]}, {[1, 1, 1, 1], [1, 1, 1, 1], [3, 2, 0, 1]}, {[-1, 1, 1, -1], [-1, 1, 1, -1], [3, 2, 1, 0]}, {[1, 1, 1, 1], [1, 1, 1, 1], [3, 2, 1, 0]}, {[-1, 1, 1, -1], [-1, 1, 1, -1], [3, 1, 0, 2]}, {[-1, 1, -1, 1], [-1, 1, -1, -1], [3, 1, 0, 2]}, {[1, 1, -1, -1], [1, 1, -1, -1], [3, 1, 0, 2]}, {[-1, -1, -1, 1], [1, -1, -1, -1], [2, 3, 1, 0]}, {[-1, 1, -1, -1], [1, 1, -1, -1], [2, 3, 1, 0]}, {[1, 1, 1, 1], [1, 1, 1, 1], [3, 1, 0, 2]}, {[-1, -1, 1, 1], [-1, -1, 1, -1], [3, 1, 2, 0]}, {[1, -1, 1, -1], [1, -1, 1, -1], [3, 1, 2, 0]}, {[1, - 1, -1, 1], [1, -1, -1, -1], [3, 1, 2, 0]}, {[-1, -1, -1, -1], [-1, -1, -1, -1], [3, 1, 2, 0]}, {[-1, 1, 1, 1], [1, 1, 1, -1], [2, 3, 0, 1]}, {[-1, 1, -1, 1], [-1, 1, -1, -1], [3, 0, 1, 2]}, {[-1, -1, 1, -1], [1, -1, 1, -1], [2, 3, 0, 1]}, {[1, 1, -1, -1], [1, 1, -1, -1], [3, 0, 1, 2]}, {[-1, -1, -1, 1], [1, -1, -1, -1], [2, 3, 0, 1]}, {[1, -1, -1, 1], [1, -1, -1, -1], [3, 0, 1, 2]}, {[-1, 1, -1, -1], [1, 1, -1, -1], [2, 3, 0, 1]}, {[-1, -1, -1, -1], [-1, -1, -1, -1], [3, 0, 1, 2]}, {[-1, 1, 1, -1], [-1, 1, 1, -1], [3, 0, 2, 1]}, {[-1, 1, -1, 1], [-1, 1, -1, -1], [3, 0, 2, 1]}, {[1, 1, -1, -1], [1, 1, -1, -1], [3, 0, 2, 1]}, {[-1, -1, 1, 1], [-1, -1, 1, -1], [3, 0, 2, 1]}, {[1, -1, 1, -1], [1, -1, 1, -1], [3, 0, 2, 1]}, {[1, -1, -1, 1], [1, -1, -1, -1], [3, 0, 2, 1]}, {[-1, -1, -1, -1], [-1, -1, -1, -1], [3, 0, 2, 1]}, {[1, 1, 1, 1], [1, 1, 1, 1], [3, 0, 2, 1]}, {[-1, -1, 1, 1], [-1, -1, 1, -1], [2, 3, 1, 0]}, {[1, -1, 1, -1], [1, -1, 1, -1], [2, 3, 1, 0]}, {[-1, 1, -1, 1], [-1, 1, -1, -1], [1, 3, 2, 0]}, {[1, 1, -1, -1], [1, 1, -1, -1], [1, 3, 2, 0]}, {[-1, 1, -1, 1], [-1, 1, -1, - 1], [0, 3, 1, 2]}, or {[1, 1, -1, -1], [1, 1, -1, -1], [0, 3, 1, 2]};
   $\frac{N}{{2}^{K}} = 32$, and {[*W*₁], [*W*₂], [*P*]} corresponding to the base sequence is one of the following:
      {[-1, 1, 1, 1, 1], [-1, 1, 1, 1, -1], [3, 2, 4, 1, 0]}, {[1, 1, 1, 1, -1], [1, 1, 1, 1, -1], [3, 2, 4, 1, 0]}, {[-1, 1, 1, -1, 1], [-1, 1, 1, -1, -1], [3, 2, 4, 1, 0]}, {[1, 1, 1, -1, -1], [1, 1, 1, -1, -1], [3, 2, 4, 1, 0]}, {[-1, -1, 1, 1, 1], [-1, -1, 1, 1, -1], [3, 2, 4, 1, 0]}, {[1, -1, 1, 1, -1], [1, -1, 1, 1, -1], [3, 2, 4, 1, 0]}, {[-1, -1, 1, -1, 1], [-1, -1, 1, -1, -1], [3, 2, 4, 1, 0]}, {[1, -1, 1, -1, -1], [1, -1, 1, -1, -1], [3, 2, 4, 1, 0]}, {[-1, 1, 1, 1, 1], [-1, 1, 1, 1, -1], [2, 3, 4, 1, 0]}, {[1, 1, 1, 1, -1], [1, 1, 1, 1, -1], [2, 3, 4, 1, 0]}, {[-1, -1, 1, 1, 1], [-1, -1, 1, 1, -1], [2, 3, 4, 1, 0]}, {[1, -1, 1, 1, -1], [1, -1, 1, 1, -1], [2, 3, 4, 1, 0]}, {[-1, -1, 1, -1, 1], [-1, -1, 1, -1, -1], [2, 3, 4, 1, 0]}, {[1, -1, 1, -1, -1], [1, -1, 1, -1, -1], [2, 3, 4, 1, 0]}, {[-1, 1, 1, -1, 1], [-1, 1, 1, -1, -1], [4, 1, 2, 3, 0]}, {[1, 1, 1, -1, -1], [1, 1, 1, -1, -1], [4, 1, 2, 3, 0]}, {[1, 1, -1, -1, 1], [1, 1, -1, -1, -1], [4, 1, 2, 3, 0]}, {[-1, 1, - 1, -1, -1], [-1, 1, -1, -1, -1], [4, 1, 2, 3, 0]}, {[-1, -1, 1, -1, 1], [-1, -1, 1, -1, -1], [4, 1, 2, 3, 0]}, {[1, -1, 1, -1, -1], [1, -1, 1, -1, -1], [4, 1, 2, 3, 0]}, {[1, -1, -1, -1, 1], [1, -1, -1, -1, -1], [4, 1, 2, 3, 0]}, {[-1, -1, -1, -1, -1], [-1, -1, -1, -1, -1], [4, 1, 2, 3, 0]}, {[1, 1, -1, 1, 1], [1, 1, -1, 1, - 1], [0, 4, 3, 1, 2]}, {[-1, 1, -1, 1, -1], [-1, 1, -1, 1, -1], [0, 4, 3, 1, 2]}, {[-1, 1, 1, -1, 1], [-1, 1, 1, -1, -1], [0, 4, 3, 2, 1]}, {[1, 1, 1, -1, -1], [1, 1, 1, -1, -1], [0, 4, 3, 2, 1]}, {[1, 1, -1, 1, 1], [1, 1, - 1, 1, -1], [0, 4, 3, 2, 1]}, {[-1, 1, -1, 1, -1], [-1, 1, -1, 1, -1], [0, 4, 3, 2, 1]}, {[-1, 1, 1, 1, 1], [-1, 1, 1, 1, -1], [0, 3, 4, 1, 2]}, {[1, 1, 1, 1, -1], [1, 1, 1, 1, -1], [0, 3, 4, 1, 2]}, {[-1, 1, 1, -1, 1], [-1, 1, 1, -1, -1], [0, 3, 4, 1, 2]}, {[1, 1, 1, -1, -1], [1, 1, 1, -1, -1], [0, 3, 4, 1, 2]}, {[-1, -1, 1, -1, 1], [-1, -1, 1, -1, -1], [0, 3, 4, 1, 2]}, {[1, -1, 1, -1, -1], [1, -1, 1, -1, -1], [0, 3, 4, 1, 2]}, {[-1, 1, 1, 1, 1], [-1, 1, 1, 1, -1], [0, 3, 4, 2, 1]}, {[1, 1, 1, 1, -1], [1, 1, 1, 1, -1], [0, 3, 4, 2, 1]}, {[-1, 1, 1, - 1, 1], [-1, 1, 1, -1, -1], [0, 3, 4, 2, 1]}, {[1, 1, 1, -1, -1], [1, 1, 1, -1, -1], [0, 3, 4, 2, 1]}, {[-1, -1, 1, 1, 1], [-1, -1, 1, 1, -1], [0, 3, 4, 2, 1]}, {[1, -1, 1, 1, -1], [1, -1, 1, 1, -1], [0, 3, 4, 2, 1]}, {[-1, -1, 1, -1, 1], [-1, -1, 1, -1, -1], [0, 3, 4, 2, 1]}, {[1, -1, 1, -1, -1], [1, -1, 1, -1, -1], [0, 3, 4, 2, 1]}, {[1, 1, -1, 1, 1], [1, 1, -1, 1, -1], [3, 2, 1, 4, 0]}, {[-1, 1, -1, 1, -1], [-1, 1, -1, 1, -1], [3, 2, 1, 4, 0]}, {[-1, 1, 1, 1, 1], [-1, 1, 1, 1, -1], [3, 1, 2, 4, 0]}, {[1, 1, 1, 1, -1], [1, 1, 1, 1, -1], [3, 1, 2, 4, 0]}, {[1, 1, -1, -1, 1], [1, 1, -1, -1, -1], [4, 1, 3, 2, 0]}, {[-1, 1, -1, -1, -1], [-1, 1, -1, -1, -1], [4, 1, 3, 2, 0]}, {[1, -1, -1, -1, 1], [1, -1, -1, -1, -1], [4, 1, 3, 2, 0]}, {[-1, -1, -1, -1, -1], [-1, -1, - 1, -1, -1], [4, 1, 3, 2, 0]}, {[1, 1, 1, 1, -1], [1, 1, 1, 1, -1], [4, 2, 3, 1, 0]}, {[-1, 1, 1, 1, 1], [-1, 1, 1, 1, -1], [4, 2, 3, 1, 0]}, {[1, -1, 1, 1, -1], [1, -1, 1, 1, -1], [4, 2, 3, 1, 0]}, {[-1, -1, 1, 1, 1], [-1, -1, 1, 1, -1], [4, 2, 3, 1, 0]}, {[1, 1, 1, -1, -1], [1, 1, 1, -1, -1], [4, 2, 3, 1, 0]}, {[-1, 1, 1, -1, 1], [-1, 1, 1, -1, -1], [4, 2, 3, 1, 0]}, {[1, -1, 1, -1, -1], [1, -1, 1, -1, -1], [4, 2, 3, 1, 0]}, {[-1, -1, 1, -1, 1], [-1, -1, 1, -1, -1], [4, 2, 3, 1, 0]}, {[1, 1, -1, -1, 1], [1, 1, -1, -1, -1], [4, 2, 3, 1, 0]}, {[-1, 1, -1, -1, -1], [-1, 1, -1, -1, -1], [4, 2, 3, 1, 0]}, {[1, -1, -1, -1, 1], [1, -1, -1, -1, -1], [4, 2, 3, 1, 0]}, {[-1, -1, -1, -1, -1], [-1, -1, -1, -1, -1], [4, 2, 3, 1, 0]}, {[1, -1, 1, 1, -1], [1, -1, 1, 1, -1], [3, 4, 1, 2, 0]}, {[-1, -1, 1, 1, 1], [-1, -1, 1, 1, -1], [3, 4, 1, 2, 0]}, {[1, -1, 1, -1, -1], [1, -1, 1, - 1, -1], [3, 4, 1, 2, 0]}, {[-1, -1, 1, -1, 1], [-1, -1, 1, -1, -1], [3, 4, 1, 2, 0]}, {[1, -1, -1, -1, 1], [1, -1, -1, -1, -1], [3, 4, 1, 2, 0]}, {[-1, -1, -1, -1, -1], [-1, -1, -1, -1, -1], [3, 4, 1, 2, 0]}, {[1, 1, - 1, 1, 1], [1, 1, -1, 1, -1], [4, 3, 2, 1, 0]}, {[-1, 1, -1, 1, -1], [-1, 1, -1, 1, -1], [4, 3, 2, 1, 0]}, {[1, -1, -1, 1, 1], [1, -1, -1, 1, -1], [4, 3, 2, 1, 0]}, {[-1, -1, -1, 1, -1], [-1, -1, -1, 1, -1], [4, 3, 2, 1, 0]}, {[1, 1, 1, -1, -1], [1, 1, 1, -1, -1], [4, 3, 2, 1, 0]}, {[-1, 1, 1, -1, 1], [-1, 1, 1, -1, -1], [4, 3, 2, 1, 0]}, {[1, -1, 1, -1, -1], [1, -1, 1, -1, -1], [4, 3, 2, 1, 0]}, {[-1, -1, 1, -1, 1], [-1, -1, 1, -1, -1], [4, 3, 2, 1, 0]}, {[1, -1, -1, 1, 1], [1, -1, -1, 1, -1], [3, 4, 2, 1, 0]}, {[-1, -1, -1, 1, -1], [-1, -1, - 1, 1, -1], [3, 4, 2, 1, 0]}, {[1, -1, 1, -1, -1], [1, -1, 1, -1, -1], [3, 4, 2, 1, 0]}, {[-1, -1, 1, -1, 1], [-1, -1, 1, -1, -1], [3, 4, 2, 1, 0]}, {[1, -1, -1, -1, 1], [1, -1, -1, -1, -1], [3, 4, 2, 1, 0]}, or {[-1, - 1, -1, -1, -1], [-1, -1, -1, -1, -1], [3, 4, 2, 1, 0]}; or
      $\frac{N}{{2}^{K}} = 64$, and {[*W*₁], [*W*₂], [*P*]} corresponding to the base sequence is one of the following:
         {[1, -1, 1, -1, 1, 1], [1, -1, 1, -1, 1, -1], [4, 5, 1, 2, 0, 3]}, {[1, -1, 1, -1, 1, -1], [1, -1, 1, -1, 1, -1], [4, 5, 1, 2, 0, 3]}, {[-1, -1, 1, -1, 1, 1], [-1, -1, 1, -1, 1, -1], [4, 5, 1, 2, 0, 3]}, {[-1, -1, 1, -1, 1, -1], [-1, -1, 1, -1, 1, -1], [4, 5, 1, 2, 0, 3]}, {[1, -1, 1, -1, -1, 1], [1, -1, 1, -1, -1, - 1], [4, 5, 1, 2, 0, 3]}, {[1, -1, 1, -1, -1, -1], [1, -1, 1, -1, -1, -1], [4, 5, 1, 2, 0, 3]}, {[-1, -1, 1, - 1, -1, 1], [-1, -1, 1, -1, -1, -1], [4, 5, 1, 2, 0, 3]}, {[-1, -1, 1, -1, -1, -1], [-1, -1, 1, -1, -1, -1], [4, 5, 1, 2, 0, 3]}, {[-1, 1, 1, 1, 1, -1], [1, 1, 1, 1, 1, -1], [4, 5, 0, 1, 3, 2]}, {[-1, -1, 1, 1, 1, 1], [1, -1, 1, 1, 1, -1], [4, 5, 0, 1, 3, 2]}, {[-1, 1, -1, 1, 1, -1], [1, 1, -1, 1, 1, -1], [4, 5, 0, 1, 3, 2]}, {[-1, -1, -1, 1, 1, 1], [1, -1, -1, 1, 1, -1], [4, 5, 0, 1, 3, 2]}, {[-1, 1, 1, -1, -1, 1], [1, 1, 1, -1, -1, -1], [4, 5, 0, 1, 3, 2]}, {[-1, -1, 1, -1, -1, -1], [1, -1, 1, -1, -1, -1], [4, 5, 0, 1, 3, 2]}, {[-1, 1, -1, -1, -1, 1], [1, 1, -1, -1, -1, -1], [4, 5, 0, 1, 3, 2]}, {[-1, -1, -1, -1, -1, -1], [1, -1, -1, -1, -1, -1], [4, 5, 0, 1, 3, 2]}, {[-1, -1, -1, 1, -1, -1], [-1, -1, -1, 1, 1, -1], [4, 5, 1, 0, 3, 2]}, {[-1, -1, -1, -1, - 1, -1], [-1, -1, -1, -1, 1, -1], [4, 5, 1, 0, 3, 2]}, {[1, -1, -1, 1, 1, -1], [1, -1, -1, 1, -1, -1], [4, 5, 1, 0, 3, 2]}, {[1, -1, -1, -1, 1, -1], [1, -1, -1, -1, -1, -1], [4, 5, 1, 0, 3, 2]}, {[1, 1, -1, 1, -1, 1], [1, 1, -1, 1, -1, -1], [5, 3, 2, 4, 0, 1]}, {[-1, 1, -1, 1, -1, -1], [-1, 1, -1, 1, -1, -1], [5, 3, 2, 4, 0, 1]}, {[1, -1, -1, 1, -1, 1], [1, -1, -1, 1, -1, -1], [5, 3, 2, 4, 0, 1]}, {[-1, -1, -1, 1, -1, -1], [-1, -1, -1, 1, -1, -1], [5, 3, 2, 4, 0, 1]}, {[1, 1, -1, -1, -1, -1], [1, 1, -1, -1, -1, -1], [5, 3, 2, 4, 0, 1]}, {[-1, 1, -1, -1, -1, 1], [-1, 1, -1, -1, -1, -1], [5, 3, 2, 4, 0, 1]}, {[1, -1, -1, -1, -1, -1], [1, -1, -1, - 1, -1, -1], [5, 3, 2, 4, 0, 1]}, {[-1, -1, -1, -1, -1, 1], [-1, -1, -1, -1, -1, -1], [5, 3, 2, 4, 0, 1]}, {[1, 1, -1, 1, -1, 1], [1, 1, -1, 1, -1, -1], [5, 2, 4, 3, 0, 1]}, {[-1, 1, -1, 1, -1, -1], [-1, 1, -1, 1, -1, -1], [5, 2, 4, 3, 0, 1]}, {[1, -1, -1, 1, -1, 1], [1, -1, -1, 1, -1, -1], [5, 2, 4, 3, 0, 1]}, {[-1, -1, -1, 1, -1, -1], [-1, -1, -1, 1, -1, -1], [5, 2, 4, 3, 0, 1]}, {[1, 1, -1, -1, -1, -1], [1, 1, -1, -1, -1, -1], [5, 2, 4, 3, 0, 1]}, {[-1, 1, -1, -1, -1, 1], [-1, 1, -1, -1, -1, -1], [5, 2, 4, 3, 0, 1]}, {[1, -1, -1, -1, -1, -1], [1, -1, -1, -1, -1, -1], [5, 2, 4, 3, 0, 1]}, {[-1, -1, -1, -1, -1, 1], [-1, -1, -1, -1, -1, -1], [5, 2, 4, 3, 0, 1]}, {[1, -1, -1, 1, -1, 1], [1, -1, -1, 1, -1, -1], [3, 4, 2, 5, 0, 1]}, {[-1, -1, -1, 1, -1, -1], [-1, -1, -1, 1, -1, -1], [3, 4, 2, 5, 0, 1]}, {[1, -1, -1, -1, -1, -1], [1, -1, -1, -1, -1, -1], [3, 4, 2, 5, 0, 1]}, {[-1, -1, -1, -1, -1, 1], [-1, -1, -1, -1, -1, -1], [3, 4, 2, 5, 0, 1]}, {[-1, 1, 1, 1, 1, 1], [1, 1, 1, 1, 1, -1], [4, 5, 0, 3, 1, 2]}, {[-1, 1, 1, 1, 1, -1], [1, 1, 1, 1, 1, -1], [4, 5, 0, 3, 1, 2]}, {[-1, -1, 1, 1, 1, 1], [1, -1, 1, 1, 1, -1], [4, 5, 0, 3, 1, 2]}, {[-1, -1, 1, 1, 1, -1], [1, -1, 1, 1, 1, -1], [4, 5, 0, 3, 1, 2]}, {[-1, 1, -1, 1, 1, 1], [1, 1, -1, 1, 1, -1], [4, 5, 0, 3, 1, 2]}, {[-1, 1, -1, 1, 1, -1], [1, 1, -1, 1, 1, -1], [4, 5, 0, 3, 1, 2]}, {[-1, -1, -1, 1, 1, 1], [1, -1, -1, 1, 1, -1], [4, 5, 0, 3, 1, 2]}, {[-1, -1, -1, 1, 1, -1], [1, -1, -1, 1, 1, -1], [4, 5, 0, 3, 1, 2]}, {[-1, 1, 1, -1, -1, 1], [1, 1, 1, -1, -1, -1], [4, 5, 0, 3, 1, 2]}, {[-1, 1, 1, -1, -1, -1], [1, 1, 1, -1, -1, -1], [4, 5, 0, 3, 1, 2]}, {[-1, -1, 1, -1, -1, 1], [1, -1, 1, -1, -1, -1], [4, 5, 0, 3, 1, 2]}, {[-1, -1, 1, -1, -1, -1], [1, -1, 1, -1, -1, -1], [4, 5, 0, 3, 1, 2]}, {[-1, 1, -1, -1, -1, 1], [1, 1, -1, -1, -1, -1], [4, 5, 0, 3, 1, 2]}, {[-1, 1, -1, -1, -1, -1], [1, 1, -1, -1, -1, -1], [4, 5, 0, 3, 1, 2]}, {[-1, -1, -1, -1, -1, 1], [1, -1, -1, -1, -1, -1], [4, 5, 0, 3, 1, 2]}, {[-1, -1, -1, -1, -1, -1], [1, -1, -1, -1, -1, -1], [4, 5, 0, 3, 1, 2]}, {[1, -1, -1, 1, -1, 1], [1, -1, -1, 1, -1, -1], [4, 5, 2, 3, 0, 1]}, {[-1, -1, -1, 1, -1, -1], [-1, -1, -1, 1, -1, -1], [4, 5, 2, 3, 0, 1]}, {[1, -1, -1, -1, -1, -1], [1, -1, -1, -1, -1, -1], [4, 5, 2, 3, 0, 1]}, or {[-1, -1, -1, -1, -1, 1], [-1, -1, - 1, -1, -1, -1], [4, 5, 2, 3, 0, 1]}.

It should be understood that, that the base sequence is in one-to-one correspondence with {[*W*₁], [*W*₂], [*P*]} may be understood as: the base sequence is in one-to-one correspondence with {[*W*₁], [*W*₂], [*P*]} according to the foregoing order.

By way of example, but not limitation, a base sequence [0, 0, 0, 1, 1, 0, 1, 1] corresponds to {[-1, 1, 1], [-1, 1, -1], [2, 0, 1]}, a base sequence [0, 0, 1, 0, 0, 1, 1, 1] corresponds to {[1, 1, -1], [1, 1, -1], [2, 0, 1]}, a base sequence [0, 1, 0, 0, 0, 0, 0, 1] corresponds to {[1, -1, 1], [1, -1, -1], [2, 0, 1]}, a base sequence [0, 1, 1, 1, 1, 1, 0, 1] corresponds to {[-1, -1, -1], [-1, -1, -1], [2, 0, 1]}, a base sequence [0, 0, 1, 0, 0, 0, 0, 1] corresponds to {[1, -1, 1], [1, -1, -1], [2, 1, 0]}, and a base sequence [0, 1, 1, 1, 1, 0, 1, 1] corresponds to {[-1, -1, -1], [-1, -1, -1], [2, 1, 0]}.

With reference to the third aspect, in some implementations of the third aspect, the generalized Golay sequence includes $\frac{N}{{2}^{K}}$ elements, and that the base sequence is related to the generalized Golay sequence includes: the n^{th} element *Aₙ* in the generalized Golay sequence and an n^{th} element *xₙ* in the base sequence satisfy: *Aₙ* = 1 - 2*xₙ*, where $0 \leq n \leq \frac{N}{{2}^{K}} - 1$, and *n* is an integer.

With reference to the third aspect, in some implementations of the third aspect, that the base sequence is related to the generalized Golay sequence includes: the n^{th} element *Aₙ* in the generalized Golay sequence and an n^{th} element *xₙ* in the base sequence satisfy: *Aₙ* = 2*xₙ* - 1; or the n^{th} element *Aₙ* in the generalized Golay sequence and an (N-n-1)^{th} element *x*_{*N-n-*1} in the base sequence satisfy: *Aₙ* = 1 - 2*x*_{*N-n-*1} or *Aₙ* = 2*x*_{*N-n-*1} - 1, where $0 \leq n \leq \frac{N}{{2}^{K}} - 1$, and *n* is an integer.

With reference to the third aspect, in some implementations of the third aspect, first indication information and second indication information are received, where the first indication information indicates the base sequence, and the second indication information indicates K.

With reference to the third aspect, in some implementations of the third aspect, the modulating the first sequence and the to-be-transmitted data, to generate the first signal includes: modulating each element in the first sequence with the to-be-transmitted data after Y consecutive repetitions of the element, to generate the first signal, where Y is an integer greater than or equal to 1.

With reference to the third aspect, in some implementations of the third aspect, two adjacent levels in the 2*^{K}* levels representing any element in the base sequence are different.

According to a fourth aspect, a communication method is provided. The method includes: receiving a first signal, where the first signal includes uplink data and a first sequence, the first sequence is the same as a sequence obtained by performing Manchester coding on a base sequence, the first sequence includes N elements, the base sequence includes $\frac{N}{{2}^{K}}$ elements, any element in the base sequence is represented by 2*^{K}* levels after Manchester coding, the 2*^{K}* levels include two different levels, N is an even number greater than or equal to 2, and K is an integer greater than or equal to 1; and detecting the first signal, where
$\frac{N}{{2}^{K}} = 8$, and the base sequence is one of the following:
[0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1];
$\frac{N}{{2}^{K}} = 16$, and the base sequence is one of the following:
   [0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1];
   $\frac{N}{{2}^{K}} = 32$, and the base sequence is one of the following:
      [0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
      [0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
      [0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
      [0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
      [0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
      [0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
      [0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
      [0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
      [0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
      [0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
      [0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
      [0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
      [0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
      [0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
      [0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
      [0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
      [0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
      [0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
      [0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
      [0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
      [0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
      [0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
      [0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
      [0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
      [0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
      [0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
      [0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
      [0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
      [0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
      [0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
      [0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
      [0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
      [0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
      [0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
      [0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
      [0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
      [0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
      [0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
      [0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
      [0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
      [0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
      [0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
      [0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
      [0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
      [0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
      [0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
      [0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
      [0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
      [0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
      [0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
      [0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
      [0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
      [0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
      [0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
      [0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
      [0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
      [0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
      [0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
      [0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
      [0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
      [0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
      [0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
      [0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
      [0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
      [0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
      [0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
      [0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
      [0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
      [0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
      [0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
      [0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
      [0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
      [0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
      [0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
      [0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
      [0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
      [0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
      [0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
      [0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
      [0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
      [0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1]; or
      $\frac{N}{{2}^{K}} = 64$, and the base sequence is one of the following:
         [0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
         [0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
         [0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
         [0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
         [0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
         [0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
         [0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
         [0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
         [0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
         [0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
         [0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
         [0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
         [0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
         [0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
         [0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
         [0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
         [0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
         [0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
         [0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
         [0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
         [0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
         [0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
         [0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
         [0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
         [0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
         [0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
         [0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
         [0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
         [0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
         [0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
         [0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
         [0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
         [0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
         [0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
         [0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
         [0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
         [0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
         [0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
         [0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
         [0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
         [0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
         [0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
         [0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
         [0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
         [0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0];
         [0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
         [0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
         [0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
         [0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
         [0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
         [0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
         [0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
         [0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
         [0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
         [0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
         [0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
         [0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
         [0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
         [0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
         [0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

The solution in the fourth aspect may be executed by a network device, or may be executed by a chip, an integrated circuit, or the like in the network device. This is not limited herein. For ease of description, the following uses the network device as an example for description.

With reference to the fourth aspect, in some implementations of the fourth aspect, the base sequence is related to a generalized Golay sequence, the generalized Golay sequence is determined based on [*W*₁], [*W*₂], and [P], and an n^{th} element *Aₙ* in the generalized Golay sequence is equal to *a*_{*M*+1}*(n),* where *a*_{*M*+1}(*n*) satisfies the following formulas: ${a}_{m + 1} \left(n\right) = {a}_{m} \left(n\right) + {W}_{m , 1} {b}_{m} \left(n-{2}^{{P}_{m}}\right)$ ${b}_{m + 1} \left(n\right) = {a}_{m} \left(n\right) - {W}_{m , 2} {b}_{m} \left(n-{2}^{{P}_{m}}\right) ,$
where M is an integer greater than or equal to 1, m is an integer less than or equal to M and greater than or equal to 1, *a*₁(*n*) = *δ*(*n*) , *b*₁(*n*) = *δ*(*n*) , when *n* = 0, *δ*(*n*) = 1, and when *n* ≠ 0, *δ*(*n*) = 0; and *W*_{*m*,1} ∈ {1, -1}, *W*_{*m*,2} ∈ {1, -1}, $0 \leq n \leq \frac{N}{{2}^{K}} - 1$, n is an integer, and {[*W*₁], [*W*₂], [*P*]} is in one-to-one correspondence with the base sequence, where
$\frac{N}{{2}^{K}} = 8$, and {[*W*₁], [*W*₂], [*P*]} corresponding to the base sequence is one of the following:
   {[-1, 1, 1], [-1, 1, -1], [2, 0, 1]}, {[1, 1, -1], [1, 1, -1], [2, 0, 1]}, {[1, -1, 1], [1, -1, - 1], [2, 0, 1]}, {[-1, -1, -1], [-1, -1, -1], [2, 0, 1]}, {[1, -1, 1], [1, -1, -1], [2, 1, 0]}, or {[-1, -1, -1], [-1, -1, -1], [2, 1, 0]};
   $\frac{N}{{2}^{K}} = 16$, and {[*W*₁], [*W*₂], [*P*]} corresponding to the base sequence is one of the following:
      {[-1, 1, 1, -1], [-1, 1, 1, -1], [3, 2, 0, 1]}, {[-1, 1, -1, 1], [-1, 1, -1, -1], [3, 2, 0, 1]}, {[1, 1, -1, -1], [1, 1, -1, -1], [3, 2, 0, 1]}, {[-1, -1, 1, 1], [-1, -1, 1, -1], [3, 2, 0, 1]}, {[1, -1, 1, - 1], [1, -1, 1, -1], [3, 2, 0, 1]}, {[1, -1, -1, 1], [1, -1, -1, -1], [3, 2, 0, 1]}, {[-1, -1, -1, -1], [-1, - 1, -1, -1], [3, 2, 0, 1]}, {[1, 1, 1, 1], [1, 1, 1, 1], [3, 2, 0, 1]}, {[-1, 1, 1, -1], [-1, 1, 1, -1], [3, 2, 1, 0]}, {[1, 1, 1, 1], [1, 1, 1, 1], [3, 2, 1, 0]}, {[-1, 1, 1, -1], [-1, 1, 1, -1], [3, 1, 0, 2]}, {[-1, 1, -1, 1], [-1, 1, -1, -1], [3, 1, 0, 2]}, {[1, 1, -1, -1], [1, 1, -1, -1], [3, 1, 0, 2]}, {[-1, -1, -1, 1], [1, -1, -1, -1], [2, 3, 1, 0]}, {[-1, 1, -1, -1], [1, 1, -1, -1], [2, 3, 1, 0]}, {[1, 1, 1, 1], [1, 1, 1, 1], [3, 1, 0, 2]}, {[-1, -1, 1, 1], [-1, -1, 1, -1], [3, 1, 2, 0]}, {[1, -1, 1, -1], [1, -1, 1, -1], [3, 1, 2, 0]}, {[1, - 1, -1, 1], [1, -1, -1, -1], [3, 1, 2, 0]}, {[-1, -1, -1, -1], [-1, -1, -1, -1], [3, 1, 2, 0]}, {[-1, 1, 1, 1], [1, 1, 1, -1], [2, 3, 0, 1]}, {[-1, 1, -1, 1], [-1, 1, -1, -1], [3, 0, 1, 2]}, {[-1, -1, 1, -1], [1, -1, 1, -1], [2, 3, 0, 1]}, {[1, 1, -1, -1], [1, 1, -1, -1], [3, 0, 1, 2]}, {[-1, -1, -1, 1], [1, -1, -1, -1], [2, 3, 0, 1]}, {[1, -1, -1, 1], [1, -1, -1, -1], [3, 0, 1, 2]}, {[-1, 1, -1, -1], [1, 1, -1, -1], [2, 3, 0, 1]}, {[-1, -1, -1, -1], [-1, -1, -1, -1], [3, 0, 1, 2]}, {[-1, 1, 1, -1], [-1, 1, 1, -1], [3, 0, 2, 1]}, {[-1, 1, -1, 1], [-1, 1, -1, -1], [3, 0, 2, 1]}, {[1, 1, -1, -1], [1, 1, -1, -1], [3, 0, 2, 1]}, {[-1, -1, 1, 1], [-1, -1, 1, -1], [3, 0, 2, 1]}, {[1, -1, 1, -1], [1, -1, 1, -1], [3, 0, 2, 1]}, {[1, -1, -1, 1], [1, -1, -1, -1], [3, 0, 2, 1]}, {[-1, -1, -1, -1], [-1, -1, -1, -1], [3, 0, 2, 1]}, {[1, 1, 1, 1], [1, 1, 1, 1], [3, 0, 2, 1]}, {[-1, -1, 1, 1], [-1, -1, 1, -1], [2, 3, 1, 0]}, {[1, -1, 1, -1], [1, -1, 1, -1], [2, 3, 1, 0]}, {[-1, 1, -1, 1], [-1, 1, -1, -1], [1, 3, 2, 0]}, {[1, 1, -1, -1], [1, 1, -1, -1], [1, 3, 2, 0]}, {[-1, 1, -1, 1], [-1, 1, -1, - 1], [0, 3, 1, 2]}, or {[1, 1, -1, -1], [1, 1, -1, -1], [0, 3, 1, 2]};
      $\frac{N}{{2}^{K}} = 32$, and {[*W*₁], [*W*₂], [*P*]} corresponding to the base sequence is one of the following:
         {[-1, 1, 1, 1, 1], [-1, 1, 1, 1, -1], [3, 2, 4, 1, 0]}, {[1, 1, 1, 1, -1], [1, 1, 1, 1, -1], [3, 2, 4, 1, 0]}, {[-1, 1, 1, -1, 1], [-1, 1, 1, -1, -1], [3, 2, 4, 1, 0]}, {[1, 1, 1, -1, -1], [1, 1, 1, -1, -1], [3, 2, 4, 1, 0]}, {[-1, -1, 1, 1, 1], [-1, -1, 1, 1, -1], [3, 2, 4, 1, 0]}, {[1, -1, 1, 1, -1], [1, -1, 1, 1, -1], [3, 2, 4, 1, 0]}, {[-1, -1, 1, -1, 1], [-1, -1, 1, -1, -1], [3, 2, 4, 1, 0]}, {[1, -1, 1, -1, -1], [1, -1, 1, -1, -1], [3, 2, 4, 1, 0]}, {[-1, 1, 1, 1, 1], [-1, 1, 1, 1, -1], [2, 3, 4, 1, 0]}, {[1, 1, 1, 1, -1], [1, 1, 1, 1, -1], [2, 3, 4, 1, 0]}, {[-1, -1, 1, 1, 1], [-1, -1, 1, 1, -1], [2, 3, 4, 1, 0]}, {[1, -1, 1, 1, -1], [1, -1, 1, 1, -1], [2, 3, 4, 1, 0]}, {[-1, -1, 1, -1, 1], [-1, -1, 1, -1, -1], [2, 3, 4, 1, 0]}, {[1, -1, 1, -1, -1], [1, -1, 1, -1, -1], [2, 3, 4, 1, 0]}, {[-1, 1, 1, -1, 1], [-1, 1, 1, -1, -1], [4, 1, 2, 3, 0]}, {[1, 1, 1, -1, -1], [1, 1, 1, -1, -1], [4, 1, 2, 3, 0]}, {[1, 1, -1, -1, 1], [1, 1, -1, -1, -1], [4, 1, 2, 3, 0]}, {[-1, 1, - 1, -1, -1], [-1, 1, -1, -1, -1], [4, 1, 2, 3, 0]}, {[-1, -1, 1, -1, 1], [-1, -1, 1, -1, -1], [4, 1, 2, 3, 0]}, {[1, -1, 1, -1, -1], [1, -1, 1, -1, -1], [4, 1, 2, 3, 0]}, {[1, -1, -1, -1, 1], [1, -1, -1, -1, -1], [4, 1, 2, 3, 0]}, {[-1, -1, -1, -1, -1], [-1, -1, -1, -1, -1], [4, 1, 2, 3, 0]}, {[1, 1, -1, 1, 1], [1, 1, -1, 1, - 1], [0, 4, 3, 1, 2]}, {[-1, 1, -1, 1, -1], [-1, 1, -1, 1, -1], [0, 4, 3, 1, 2]}, {[-1, 1, 1, -1, 1], [-1, 1, 1, -1, -1], [0, 4, 3, 2, 1]}, {[1, 1, 1, -1, -1], [1, 1, 1, -1, -1], [0, 4, 3, 2, 1]}, {[1, 1, -1, 1, 1], [1, 1, - 1, 1, -1], [0, 4, 3, 2, 1]}, {[-1, 1, -1, 1, -1], [-1, 1, -1, 1, -1], [0, 4, 3, 2, 1]}, {[-1, 1, 1, 1, 1], [-1, 1, 1, 1, -1], [0, 3, 4, 1, 2]}, {[1, 1, 1, 1, -1], [1, 1, 1, 1, -1], [0, 3, 4, 1, 2]}, {[-1, 1, 1, -1, 1], [-1, 1, 1, -1, -1], [0, 3, 4, 1, 2]}, {[1, 1, 1, -1, -1], [1, 1, 1, -1, -1], [0, 3, 4, 1, 2]}, {[-1, -1, 1, -1, 1], [-1, -1, 1, -1, -1], [0, 3, 4, 1, 2]}, {[1, -1, 1, -1, -1], [1, -1, 1, -1, -1], [0, 3, 4, 1, 2]}, {[-1, 1, 1, 1, 1], [-1, 1, 1, 1, -1], [0, 3, 4, 2, 1]}, {[1, 1, 1, 1, -1], [1, 1, 1, 1, -1], [0, 3, 4, 2, 1]}, {[-1, 1, 1, - 1, 1], [-1, 1, 1, -1, -1], [0, 3, 4, 2, 1]}, {[1, 1, 1, -1, -1], [1, 1, 1, -1, -1], [0, 3, 4, 2, 1]}, {[-1, -1, 1, 1, 1], [-1, -1, 1, 1, -1], [0, 3, 4, 2, 1]}, {[1, -1, 1, 1, -1], [1, -1, 1, 1, -1], [0, 3, 4, 2, 1]}, {[-1, -1, 1, -1, 1], [-1, -1, 1, -1, -1], [0, 3, 4, 2, 1]}, {[1, -1, 1, -1, -1], [1, -1, 1, -1, -1], [0, 3, 4, 2, 1]}, {[1, 1, -1, 1, 1], [1, 1, -1, 1, -1], [3, 2, 1, 4, 0]}, {[-1, 1, -1, 1, -1], [-1, 1, -1, 1, -1], [3, 2, 1, 4, 0]}, {[-1, 1, 1, 1, 1], [-1, 1, 1, 1, -1], [3, 1, 2, 4, 0]}, {[1, 1, 1, 1, -1], [1, 1, 1, 1, -1], [3, 1, 2, 4, 0]}, {[1, 1, -1, -1, 1], [1, 1, -1, -1, -1], [4, 1, 3, 2, 0]}, {[-1, 1, -1, -1, -1], [-1, 1, -1, -1, -1], [4, 1, 3, 2, 0]}, {[1, -1, -1, -1, 1], [1, -1, -1, -1, -1], [4, 1, 3, 2, 0]}, {[-1, -1, -1, -1, -1], [-1, -1, - 1, -1, -1], [4, 1, 3, 2, 0]}, {[1, 1, 1, 1, -1], [1, 1, 1, 1, -1], [4, 2, 3, 1, 0]}, {[-1, 1, 1, 1, 1], [-1, 1, 1, 1, -1], [4, 2, 3, 1, 0]}, {[1, -1, 1, 1, -1], [1, -1, 1, 1, -1], [4, 2, 3, 1, 0]}, {[-1, -1, 1, 1, 1], [-1, -1, 1, 1, -1], [4, 2, 3, 1, 0]}, {[1, 1, 1, -1, -1], [1, 1, 1, -1, -1], [4, 2, 3, 1, 0]}, {[-1, 1, 1, -1, 1], [-1, 1, 1, -1, -1], [4, 2, 3, 1, 0]}, {[1, -1, 1, -1, -1], [1, -1, 1, -1, -1], [4, 2, 3, 1, 0]}, {[-1, -1, 1, -1, 1], [-1, -1, 1, -1, -1], [4, 2, 3, 1, 0]}, {[1, 1, -1, -1, 1], [1, 1, -1, -1, -1], [4, 2, 3, 1, 0]}, {[-1, 1, -1, -1, -1], [-1, 1, -1, -1, -1], [4, 2, 3, 1, 0]}, {[1, -1, -1, -1, 1], [1, -1, -1, -1, -1], [4, 2, 3, 1, 0]}, {[-1, -1, -1, -1, -1], [-1, -1, -1, -1, -1], [4, 2, 3, 1, 0]}, {[1, -1, 1, 1, -1], [1, -1, 1, 1, -1], [3, 4, 1, 2, 0]}, {[-1, -1, 1, 1, 1], [-1, -1, 1, 1, -1], [3, 4, 1, 2, 0]}, {[1, -1, 1, -1, -1], [1, -1, 1, - 1, -1], [3, 4, 1, 2, 0]}, {[-1, -1, 1, -1, 1], [-1, -1, 1, -1, -1], [3, 4, 1, 2, 0]}, {[1, -1, -1, -1, 1], [1, -1, -1, -1, -1], [3, 4, 1, 2, 0]}, {[-1, -1, -1, -1, -1], [-1, -1, -1, -1, -1], [3, 4, 1, 2, 0]}, {[1, 1, - 1, 1, 1], [1, 1, -1, 1, -1], [4, 3, 2, 1, 0]}, {[-1, 1, -1, 1, -1], [-1, 1, -1, 1, -1], [4, 3, 2, 1, 0]}, {[1, -1, -1, 1, 1], [1, -1, -1, 1, -1], [4, 3, 2, 1, 0]}, {[-1, -1, -1, 1, -1], [-1, -1, -1, 1, -1], [4, 3, 2, 1, 0]}, {[1, 1, 1, -1, -1], [1, 1, 1, -1, -1], [4, 3, 2, 1, 0]}, {[-1, 1, 1, -1, 1], [-1, 1, 1, -1, -1], [4, 3, 2, 1, 0]}, {[1, -1, 1, -1, -1], [1, -1, 1, -1, -1], [4, 3, 2, 1, 0]}, {[-1, -1, 1, -1, 1], [-1, -1, 1, -1, -1], [4, 3, 2, 1, 0]}, {[1, -1, -1, 1, 1], [1, -1, -1, 1, -1], [3, 4, 2, 1, 0]}, {[-1, -1, -1, 1, -1], [-1, -1, - 1, 1, -1], [3, 4, 2, 1, 0]}, {[1, -1, 1, -1, -1], [1, -1, 1, -1, -1], [3, 4, 2, 1, 0]}, {[-1, -1, 1, -1, 1], [-1, -1, 1, -1, -1], [3, 4, 2, 1, 0]}, {[1, -1, -1, -1, 1], [1, -1, -1, -1, -1], [3, 4, 2, 1, 0]}, or {[-1, - 1, -1, -1, -1], [-1, -1, -1, -1, -1], [3, 4, 2, 1, 0]}; or
         $\frac{N}{{2}^{K}} = 64$, and {[*W*₁], [*W*₂], [*P*]} corresponding to the base sequence is one of the following:
            {[1, -1, 1, -1, 1, 1], [1, -1, 1, -1, 1, -1], [4, 5, 1, 2, 0, 3]}, {[1, -1, 1, -1, 1, -1], [1, -1, 1, -1, 1, -1], [4, 5, 1, 2, 0, 3]}, {[-1, -1, 1, -1, 1, 1], [-1, -1, 1, -1, 1, -1], [4, 5, 1, 2, 0, 3]}, {[-1, -1, 1, -1, 1, -1], [-1, -1, 1, -1, 1, -1], [4, 5, 1, 2, 0, 3]}, {[1, -1, 1, -1, -1, 1], [1, -1, 1, -1, -1, - 1], [4, 5, 1, 2, 0, 3]}, {[1, -1, 1, -1, -1, -1], [1, -1, 1, -1, -1, -1], [4, 5, 1, 2, 0, 3]}, {[-1, -1, 1, - 1, -1, 1], [-1, -1, 1, -1, -1, -1], [4, 5, 1, 2, 0, 3]}, {[-1, -1, 1, -1, -1, -1], [-1, -1, 1, -1, -1, -1], [4, 5, 1, 2, 0, 3]}, {[-1, 1, 1, 1, 1, -1], [1, 1, 1, 1, 1, -1], [4, 5, 0, 1, 3, 2]}, {[-1, -1, 1, 1, 1, 1], [1, -1, 1, 1, 1, -1], [4, 5, 0, 1, 3, 2]}, {[-1, 1, -1, 1, 1, -1], [1, 1, -1, 1, 1, -1], [4, 5, 0, 1, 3, 2]}, {[-1, -1, -1, 1, 1, 1], [1, -1, -1, 1, 1, -1], [4, 5, 0, 1, 3, 2]}, {[-1, 1, 1, -1, -1, 1], [1, 1, 1, -1, -1, -1], [4, 5, 0, 1, 3, 2]}, {[-1, -1, 1, -1, -1, -1], [1, -1, 1, -1, -1, -1], [4, 5, 0, 1, 3, 2]}, {[-1, 1, -1, -1, -1, 1], [1, 1, -1, -1, -1, -1], [4, 5, 0, 1, 3, 2]}, {[-1, -1, -1, -1, -1, -1], [1, -1, -1, -1, -1, -1], [4, 5, 0, 1, 3, 2]}, {[-1, -1, -1, 1, -1, -1], [-1, -1, -1, 1, 1, -1], [4, 5, 1, 0, 3, 2]}, {[-1, -1, -1, -1, - 1, -1], [-1, -1, -1, -1, 1, -1], [4, 5, 1, 0, 3, 2]}, {[1, -1, -1, 1, 1, -1], [1, -1, -1, 1, -1, -1], [4, 5, 1, 0, 3, 2]}, {[1, -1, -1, -1, 1, -1], [1, -1, -1, -1, -1, -1], [4, 5, 1, 0, 3, 2]}, {[1, 1, -1, 1, -1, 1], [1, 1, -1, 1, -1, -1], [5, 3, 2, 4, 0, 1]}, {[-1, 1, -1, 1, -1, -1], [-1, 1, -1, 1, -1, -1], [5, 3, 2, 4, 0, 1]}, {[1, -1, -1, 1, -1, 1], [1, -1, -1, 1, -1, -1], [5, 3, 2, 4, 0, 1]}, {[-1, -1, -1, 1, -1, -1], [-1, -1, -1, 1, -1, -1], [5, 3, 2, 4, 0, 1]}, {[1, 1, -1, -1, -1, -1], [1, 1, -1, -1, -1, -1], [5, 3, 2, 4, 0, 1]}, {[-1, 1, -1, -1, -1, 1], [-1, 1, -1, -1, -1, -1], [5, 3, 2, 4, 0, 1]}, {[1, -1, -1, -1, -1, -1], [1, -1, -1, - 1, -1, -1], [5, 3, 2, 4, 0, 1]}, {[-1, -1, -1, -1, -1, 1], [-1, -1, -1, -1, -1, -1], [5, 3, 2, 4, 0, 1]}, {[1, 1, -1, 1, -1, 1], [1, 1, -1, 1, -1, -1], [5, 2, 4, 3, 0, 1]}, {[-1, 1, -1, 1, -1, -1], [-1, 1, -1, 1, -1, -1], [5, 2, 4, 3, 0, 1]}, {[1, -1, -1, 1, -1, 1], [1, -1, -1, 1, -1, -1], [5, 2, 4, 3, 0, 1]}, {[-1, -1, -1, 1, -1, -1], [-1, -1, -1, 1, -1, -1], [5, 2, 4, 3, 0, 1]}, {[1, 1, -1, -1, -1, -1], [1, 1, -1, -1, -1, -1], [5, 2, 4, 3, 0, 1]}, {[-1, 1, -1, -1, -1, 1], [-1, 1, -1, -1, -1, -1], [5, 2, 4, 3, 0, 1]}, {[1, -1, -1, -1, -1, -1], [1, -1, -1, -1, -1, -1], [5, 2, 4, 3, 0, 1]}, {[-1, -1, -1, -1, -1, 1], [-1, -1, -1, -1, -1, -1], [5, 2, 4, 3, 0, 1]}, {[1, -1, -1, 1, -1, 1], [1, -1, -1, 1, -1, -1], [3, 4, 2, 5, 0, 1]}, {[-1, -1, -1, 1, -1, -1], [-1, -1, -1, 1, -1, -1], [3, 4, 2, 5, 0, 1]}, {[1, -1, -1, -1, -1, -1], [1, -1, -1, -1, -1, -1], [3, 4, 2, 5, 0, 1]}, {[-1, -1, -1, -1, -1, 1], [-1, -1, -1, -1, -1, -1], [3, 4, 2, 5, 0, 1]}, {[-1, 1, 1, 1, 1, 1], [1, 1, 1, 1, 1, -1], [4, 5, 0, 3, 1, 2]}, {[-1, 1, 1, 1, 1, -1], [1, 1, 1, 1, 1, -1], [4, 5, 0, 3, 1, 2]}, {[-1, -1, 1, 1, 1, 1], [1, -1, 1, 1, 1, -1], [4, 5, 0, 3, 1, 2]}, {[-1, -1, 1, 1, 1, -1], [1, -1, 1, 1, 1, -1], [4, 5, 0, 3, 1, 2]}, {[-1, 1, -1, 1, 1, 1], [1, 1, -1, 1, 1, -1], [4, 5, 0, 3, 1, 2]}, {[-1, 1, -1, 1, 1, -1], [1, 1, -1, 1, 1, -1], [4, 5, 0, 3, 1, 2]}, {[-1, -1, -1, 1, 1, 1], [1, -1, -1, 1, 1, -1], [4, 5, 0, 3, 1, 2]}, {[-1, -1, -1, 1, 1, -1], [1, -1, -1, 1, 1, -1], [4, 5, 0, 3, 1, 2]}, {[-1, 1, 1, -1, -1, 1], [1, 1, 1, -1, -1, -1], [4, 5, 0, 3, 1, 2]}, {[-1, 1, 1, -1, -1, -1], [1, 1, 1, -1, -1, -1], [4, 5, 0, 3, 1, 2]}, {[-1, -1, 1, -1, -1, 1], [1, -1, 1, -1, -1, -1], [4, 5, 0, 3, 1, 2]}, {[-1, -1, 1, -1, -1, -1], [1, -1, 1, -1, -1, -1], [4, 5, 0, 3, 1, 2]}, {[-1, 1, -1, -1, -1, 1], [1, 1, -1, -1, -1, -1], [4, 5, 0, 3, 1, 2]}, {[-1, 1, -1, -1, -1, -1], [1, 1, -1, -1, -1, -1], [4, 5, 0, 3, 1, 2]}, {[-1, -1, -1, -1, -1, 1], [1, -1, -1, -1, -1, -1], [4, 5, 0, 3, 1, 2]}, {[-1, -1, -1, -1, -1, -1], [1, -1, -1, -1, -1, -1], [4, 5, 0, 3, 1, 2]}, {[1, -1, -1, 1, -1, 1], [1, -1, -1, 1, -1, -1], [4, 5, 2, 3, 0, 1]}, {[-1, -1, -1, 1, -1, -1], [-1, -1, -1, 1, -1, -1], [4, 5, 2, 3, 0, 1]}, {[1, -1, -1, -1, -1, -1], [1, -1, -1, -1, -1, -1], [4, 5, 2, 3, 0, 1]}, or {[-1, -1, -1, -1, -1, 1], [-1, -1, - 1, -1, -1, -1], [4, 5, 2, 3, 0, 1]}.

It should be understood that, that the base sequence is in one-to-one correspondence with {[*W*₁], [*W*₂], [*P*]} may be understood as: the base sequence is in one-to-one correspondence with {[*W*₁], [*W*₂], [*P*]} according to the foregoing order.

By way of example, but not limitation, a base sequence [0, 0, 0, 1, 1, 0, 1, 1] corresponds to {[-1, 1, 1], [-1, 1, -1], [2, 0, 1]}, a base sequence [0, 0, 1, 0, 0, 1, 1, 1] corresponds to {[1, 1, -1], [1, 1, -1], [2, 0, 1]}, a base sequence [0, 1, 0, 0, 0, 0, 0, 1] corresponds to {[1, -1, 1], [1, -1, -1], [2, 0, 1]}, a base sequence [0, 1, 1, 1, 1, 1, 0, 1] corresponds to {[-1, -1, -1], [-1, -1, -1], [2, 0, 1]}, a base sequence [0, 0, 1, 0, 0, 0, 0, 1] corresponds to {[1, -1, 1], [1, -1, -1], [2, 1, 0]}, and a base sequence [0, 1, 1, 1, 1, 0, 1, 1] corresponds to {[-1, -1, -1], [-1, -1, -1], [2, 1, 0]}.

With reference to the fourth aspect, in some implementations of the fourth aspect, the generalized Golay sequence includes $\frac{N}{{2}^{K}}$ elements, and that the base sequence is related to the generalized Golay sequence includes: the n^{th} element *Aₙ* in the generalized Golay sequence and an n^{th} element *xₙ* in the base sequence satisfy: *Aₙ =* 1 - 2*xₙ*, where $0 \leq n \leq \frac{N}{{2}^{K}} - 1$, and *n* is an integer.

With reference to the fourth aspect, in some implementations of the fourth aspect, that the base sequence is related to the generalized Golay sequence includes: the n^{th} element *Aₙ* in the generalized Golay sequence and an n^{th} element *xₙ* in the base sequence satisfy: *Aₙ* = 2*xₙ* - 1; or the n^{th} element *Aₙ* in the generalized Golay sequence and an (N-n-1)^{th} element *x*_{*N-n*-1} in the base sequence satisfy: *Aₙ* = 1 *-* 2*x*_{*N-n*-1} or *Aₙ =* 2*x*_{*N-n*-1} *-* 1, where $0 \leq n \leq \frac{N}{{2}^{K}} - 1$, and *n* is an integer.

With reference to the fourth aspect, in some implementations of the fourth aspect, the detecting the first signal includes: detecting the first signal to determine a start position or an end position of the first sequence in the first signal.

With reference to the fourth aspect, in some implementations of the fourth aspect, two adjacent levels in the 2*^{K}* levels representing any element in the base sequence are different.

According to a fifth aspect, a communication apparatus is provided. The communication apparatus includes: a processing unit, configured to determine a first sequence, where the first sequence is the same as a sequence obtained by performing Manchester (Manchester) coding on a base sequence, the first sequence includes N elements, the base sequence includes $\frac{N}{{2}^{K}}$ elements, any element in the base sequence is represented by 2*^{K}* levels after Manchester coding, the 2*^{K}* levels include two different levels, the base sequence is related to a generalized Golay sequence, the generalized Golay sequence is generated by an M-stage register, a register depth 2*^{Pₘ}* of an m^{th} stage in the M-stage register is determined by an m^{th} element *Pₘ* in a second sequence [P], N is an even number greater than or equal to 2, K and M are integers greater than or equal to 1, m is an integer less than or equal to M and greater than or equal to 1, *Pₘ* is an integer greater than or equal to 0, and a sum of first [M/2] elements in the second sequence is greater than or equal to a sum of last $M - \left⌈M/2\right⌉$ elements; and the processing unit is further configured to modulate the first sequence and to-be-transmitted data, to generate a first signal; and a transceiver unit, configured to send the first signal.

The transceiver unit may perform receiving and sending in the first aspect, and the processing unit may perform processing other than receiving and sending in the first aspect.

According to a sixth aspect, a communication apparatus is provided. The communication apparatus includes: a transceiver unit, configured to receive a first signal, where the first signal includes uplink data and a first sequence, the first sequence is the same as a sequence obtained by performing Manchester coding on a base sequence, the first sequence includes N elements, the base sequence includes $\frac{N}{{2}^{K}}$ elements, any element in the base sequence is represented by 2*^{K}* levels after Manchester coding, the 2*^{K}* levels include two different levels, the base sequence is related to a generalized Golay sequence, the generalized Golay sequence is generated by an M-stage register, a register depth 2*^{Pₘ}* of an m^{th} stage in the M-stage register is determined by an m^{th} element *Pₘ* in a second sequence [P], N is an even number greater than or equal to 2, K and M are integers greater than or equal to 1, m is an integer less than or equal to M and greater than or equal to 1, *Pₘ* is an integer greater than or equal to 0, and a sum of first $\left⌈M/2\right⌉$ elements in the second sequence is greater than or equal to a sum of last $M - \left⌈M/2\right⌉$ elements; and a processing unit, configured to detect the first signal.

The transceiver unit may perform receiving and sending in the second aspect, and the processing unit may perform processing other than receiving and sending in the second aspect.

According to a seventh aspect, a communication apparatus is provided. The communication apparatus includes: a processing unit, configured to determine a first sequence, where the first sequence is the same as a sequence obtained by performing Manchester coding on a base sequence, the first sequence includes N elements, the base sequence includes $\frac{N}{{2}^{K}}$ elements, any element in the base sequence is represented by 2*^{K}* levels after Manchester coding, the 2*^{K}* levels include two different levels, N is an even number greater than or equal to 2, and K is an integer greater than or equal to 1; and the processing unit is further configured to modulate the first sequence and to-be-transmitted data, to generate a first signal; and a transceiver unit, configured to send the first signal, where
$\frac{N}{{2}^{K}} = 8$, and the base sequence is one of the following:
[0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1];
$\frac{N}{{2}^{K}} = 16$, and the base sequence is one of the following:
   [0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1];
   $\frac{N}{{2}^{K}} = 32$, and the base sequence is one of the following:
      [0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
      [0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
      [0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
      [0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
      [0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
      [0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
      [0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
      [0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
      [0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
      [0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
      [0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
      [0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
      [0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
      [0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
      [0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
      [0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
      [0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
      [0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
      [0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
      [0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
      [0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
      [0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
      [0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
      [0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
      [0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
      [0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
      [0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
      [0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
      [0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
      [0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
      [0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
      [0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
      [0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
      [0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
      [0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
      [0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
      [0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
      [0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
      [0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
      [0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
      [0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
      [0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
      [0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
      [0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
      [0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
      [0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
      [0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
      [0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
      [0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
      [0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
      [0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
      [0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
      [0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
      [0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
      [0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
      [0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
      [0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
      [0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
      [0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
      [0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
      [0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
      [0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
      [0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
      [0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
      [0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
      [0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
      [0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
      [0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
      [0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
      [0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
      [0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
      [0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
      [0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
      [0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
      [0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
      [0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
      [0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
      [0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
      [0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
      [0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
      [0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1]; or
      $\frac{N}{{2}^{K}} = 64$, and the base sequence is one of the following:
         [0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
         [0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
         [0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
         [0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
         [0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
         [0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
         [0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
         [0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
         [0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
         [0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
         [0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
         [0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
         [0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
         [0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
         [0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
         [0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
         [0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
         [0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
         [0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
         [0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
         [0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
         [0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
         [0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
         [0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
         [0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
         [0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
         [0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
         [0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
         [0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
         [0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
         [0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
         [0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
         [0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
         [0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
         [0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
         [0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
         [0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
         [0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
         [0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
         [0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
         [0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
         [0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
         [0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
         [0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
         [0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0];
         [0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
         [0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
         [0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
         [0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
         [0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
         [0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
         [0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
         [0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
         [0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
         [0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
         [0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
         [0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
         [0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
         [0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
         [0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

The transceiver unit may perform receiving and sending in the third aspect, and the processing unit may perform processing other than receiving and sending in the third aspect.

According to an eighth aspect, a communication apparatus is provided. The communication apparatus includes: a transceiver unit, configured to receive a first signal, where the first signal includes uplink data and a first sequence, the first sequence is the same as a sequence obtained by performing Manchester coding on a base sequence, the first sequence includes N elements, the base sequence includes $\frac{N}{{2}^{K}}$ elements, any element in the base sequence is represented by 2*^{K}* levels after Manchester coding, the 2*^{K}* levels include two different levels, N is an even number greater than or equal to 2, and K is an integer greater than or equal to 1; and a processing unit, configured to detect the first signal, where $\frac{N}{{2}^{K}} = 8$, and the base sequence is one of the following:
[0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1];
$\frac{N}{{2}^{K}} = 16$, and the base sequence is one of the following:
   [0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1];
   $\frac{N}{{2}^{K}} = 32$, and the base sequence is one of the following:
      [0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
      [0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
      [0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
      [0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
      [0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
      [0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
      [0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
      [0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
      [0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
      [0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
      [0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
      [0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
      [0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
      [0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
      [0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
      [0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
      [0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
      [0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
      [0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
      [0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
      [0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
      [0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
      [0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
      [0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
      [0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
      [0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
      [0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
      [0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
      [0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
      [0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
      [0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
      [0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
      [0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
      [0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
      [0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
      [0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
      [0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
      [0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
      [0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
      [0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
      [0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
      [0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
      [0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
      [0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
      [0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
      [0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
      [0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
      [0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
      [0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
      [0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
      [0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
      [0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
      [0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
      [0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
      [0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
      [0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
      [0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
      [0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
      [0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
      [0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
      [0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
      [0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
      [0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
      [0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
      [0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
      [0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
      [0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
      [0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
      [0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
      [0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
      [0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
      [0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
      [0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
      [0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
      [0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
      [0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
      [0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
      [0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
      [0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
      [0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
      [0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1]; or
      $\frac{N}{{2}^{K}} = 64$, and the base sequence is one of the following:
         [0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
         [0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
         [0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
         [0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
         [0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
         [0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
         [0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
         [0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
         [0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
         [0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
         [0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
         [0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
         [0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
         [0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
         [0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
         [0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
         [0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
         [0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
         [0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
         [0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
         [0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
         [0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
         [0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
         [0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
         [0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
         [0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
         [0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
         [0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
         [0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
         [0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
         [0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
         [0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
         [0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
         [0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
         [0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
         [0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
         [0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
         [0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
         [0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
         [0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
         [0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
         [0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
         [0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
         [0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
         [0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0];
         [0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
         [0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
         [0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
         [0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
         [0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
         [0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
         [0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
         [0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
         [0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
         [0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
         [0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
         [0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
         [0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
         [0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
         [0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

The transceiver unit may perform receiving and sending in the fourth aspect, and the processing unit may perform processing other than receiving and sending in the fourth aspect.

According to a ninth aspect, a communication apparatus is provided. The communication apparatus includes a transceiver, a processor, and a memory. The processor is configured to control the transceiver to send and receive a signal. The memory is configured to store a computer program. The processor is configured to invoke the computer program from the memory and run the computer program, so that the communication apparatus performs the method according to any possible implementation of the first aspect to the third aspect.

Optionally, there are one or more processors, and there are one or more memories.

Optionally, the memory and the processor may be integrated together, or the memory and the processor may be separately deployed.

Optionally, the communication apparatus further includes a transmitter machine (transmitter) and a receiver machine (receiver).

According to a tenth aspect, a communication system is provided. The communication system includes a terminal device and a network device. The terminal device is configured to perform the method in any possible implementation of the first aspect or the third aspect, and the network device is configured to perform the method in any possible implementation of the second aspect or the fourth aspect.

According to an eleventh aspect, a computer program is provided. When the computer program is run, the method according to any possible implementation of the first aspect to the fourth aspect is performed.

According to a twelfth aspect, a computer-readable storage medium is provided. The computer-readable storage medium stores a computer program or code, and when the computer program or the code is run, the method according to any possible implementation of the first aspect to the fourth aspect is performed.

According to a thirteenth aspect, a chip is provided. The chip includes at least one processor. The at least one processor is coupled to a memory. The memory is configured to store a computer program. The processor is configured to invoke the computer program from the memory and run the computer program, so that a communication apparatus on which a chip system is installed performs the method according to any possible implementation of the first aspect to the fourth aspect.

The chip may include an input circuit or an interface configured to send information or data and an output circuit or an interface configured to receive information or data.

According to a fourteenth aspect, a computer program product is provided. The computer program product includes computer program code, and when the computer program code is run, the method according to any possible implementation of the first aspect to the fourth aspect is performed.

According to a fifteenth aspect, a communication method is provided. The method includes: A terminal device performs the method according to any possible implementation of the first aspect or the third aspect, and a network device performs the method according to any possible implementation of the second aspect or the fourth aspect.

### BRIEF DESCRIPTION OF DRAWINGS

FIG. 1 is a diagram of a communication system 100 to which an embodiment of this application is applicable;
FIG. 2 is a diagram of Manchester coding;
FIG. 3 is a diagram of performing correlation detection based on a generalized Golay sequence;
FIG. 4 is a diagram of a structure of an uplink frame used by a passive terminal device and a semi-passive terminal device;
FIG. 5 is a diagram of autocorrelation performance of a sequence;
FIG. 6 is a diagram of autocorrelation performance of a sequence before and after Manchester coding;
FIG. 7 is a schematic flowchart of a communication method according to an embodiment of this application;
FIG. 8 is a diagram of computational complexity of a base sequence according to an embodiment of this application;
FIG. 9 is a diagram of autocorrelation performance of a base sequence according to an embodiment of this application;
FIG. 10 is a block diagram of a communication apparatus 1000 according to an embodiment of this application;
FIG. 11 is a block diagram of a communication apparatus 1100 according to an embodiment of this application;
FIG. 12 is a block diagram of a communication apparatus 1200 according to an embodiment of this application;
FIG. 13 is a block diagram of a communication apparatus 1300 according to an embodiment of this application; and
FIG. 14 is a block diagram of a communication apparatus 1400 according to an embodiment of this application.

### DESCRIPTION OF EMBODIMENTS

The following describes technical solutions of this application with reference to accompanying drawings.

First, a communication system to which an embodiment of this application is applicable is described.

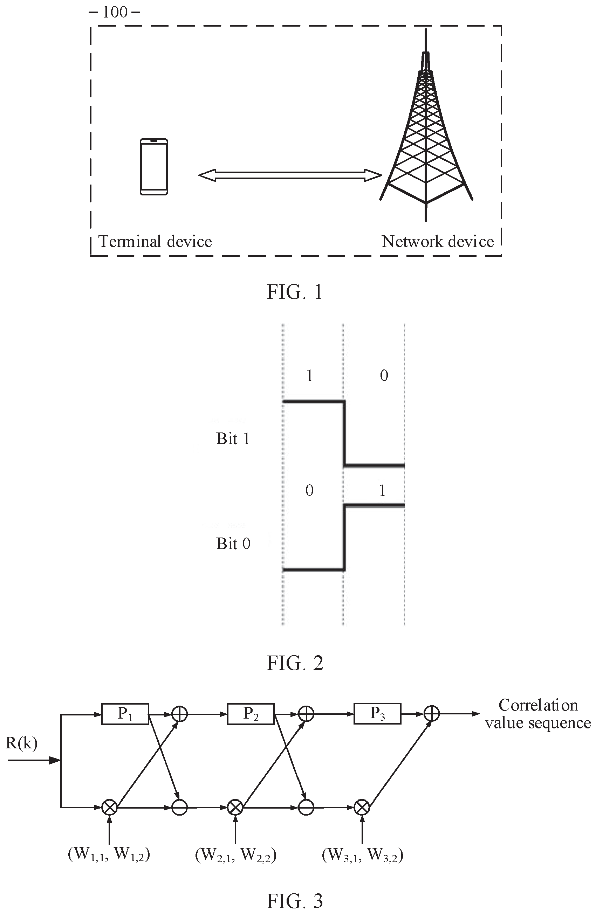

FIG. 1 is a diagram of a communication system 100 to which an embodiment of this application is applicable. As shown in FIG. 1, the communication system 100 includes a network device and a terminal device.

The terminal device is a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus.

The terminal device may alternatively be a satellite phone, a cellular phone, a smartphone, a wireless data card, a wireless modem, or a machine type communication device, a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a compute device or another processing device connected to a wireless modem, a vehicle-mounted device, a communication device carried on a high-altitude aircraft, a wearable device, a drone, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

Alternatively, the terminal device may be a device having a radio frequency identification (Radio Frequency Identification, RFID) function. For example, the terminal device may be an RFID tag. The terminal device may be one of an active RFID tag, a passive RFID tag, and a semi-passive RFID tag. In some embodiments, the terminal device may be an apparatus having an internet of things (Internet of Thing, IoT) function. For example, the terminal device may be an IoT tag.

A communication apparatus configured to implement a function of the terminal device may be a terminal device, or may be an apparatus, for example, a chip system, that can support the terminal device in implementing the function. The apparatus may be mounted in the terminal device or used together with the terminal device. In this application, the chip system may include a chip, or may include a chip and another discrete component.

The network device is a device having a wireless transceiver function, and is configured to communicate with the terminal device. The network device may be a node in a radio access network (radio access network, RAN), or may be referred to as a base station, or may be referred to as a RAN node, or may be an evolved NodeB (evolved NodeB, eNB or eNodeB) in a long term evolution (Long Term Evolution, LTE) system, or may be a base station in a 5G network such as a gNodeB (gNB), a base station in a public land mobile network (public land mobile network, PLMN) evolved after 5G, a broadband network gateway (broadband network gateway, BNG), an aggregation switch, or a third generation partnership project (3rd generation partnership project, 3GPP) access device.

The RAN may be configured as a RAN defined in a 3GPP protocol, an open radio access network (open radio access network, O-RAN), a cloud access network (cloud radio access network, C-RAN), or the like. The network device may further include base stations in various forms, for example, a macro base station, a micro base station (also referred to as a small cell), a relay station, a transmission reception point (transmission reception point, TRP), a transmission point (transmission point, TP), a mobile switching center, a device that functions as a base station in device-to-device (device-to-device, D2D), vehicle-to-everything (vehicle-to-everything, V2X), and machine-to-machine (machine-to-machine, M2M) communication, a network device in a non-terrestrial network (non-terrestrial network, NTN), and the like. This is not specifically limited.

The network device may further include a network element or a module that implements a part of functions of a base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) protocol, an enhanced common public radio interface (enhanced common public radio interface, eCPRI) protocol, a fronthaul interface protocol between a DU and an RU in an O-RAN system, or the like. This is not limited.

A communication apparatus configured to implement a function of the network device may be a network device, or may be an apparatus, for example, a chip system, that can support the network device in implementing the function. The apparatus may be mounted in the network device or used together with the network device. In embodiments of this application, the chip system may include a chip, or may include a chip and another discrete device.

For ease of understanding of embodiments of this application, several basic concepts in embodiments of this application are briefly described.

### 1. Manchester coding (Manchester coding)

Manchester coding is also referred to as self-synchronizing code or phase encoding (phase encoding, PE), and can maintain synchronization between a sending device and a receiving device through signal changes. In Manchester coding, level changes indicate bits 0 and 1. As shown in FIG. 2, in Manchester coding, bit 0 is encoded into two levels {0, 1}, and bit 1 is encoded into two levels {1, 0}.

### 2. Radio frequency identification (radio frequency identification, RFID) technology

RFID technology is a type of of automatic identification technology, and enables noncontact bidirectional data communication via wireless radio frequency. RFID technology enables a reader/writer to read from and write to tags via wireless radio frequency, to identify a target and exchange data. Typical RFID application scenarios include animal chips, automotive anti-theft devices, access control, parking lot control, production line automation, and material management.

The working principle of passive RFID technology is as follows: After entering the magnetic field of a reader/writer, the tag may receive a radio frequency signal sent by the reader/writer and send product information (for a passive tag or a passive tag (passive tag)) stored in a tag chip using energy obtained through an induced current, or actively send a signal at a specific frequency to send information (for an active tag or an active tag (active tag)) stored in the chip. The reader/writer reads the information from the tag, decodes the information, and sends the information to an information processing system for related data processing.

### 3. On-off keying (On-Off Keying, OOK) modulation

OOK modulation is a form of binary amplitude shift keying. OOK is a special case of amplitude shift keying (amplitude shift keying, ASK) modulation. A symbol with high amplitude (or envelope, level, or energy) (for example, above a threshold, or non-zero) is referred to as OOK modulation symbol 1, or OOK modulation symbol ON (ON), or OOK modulation symbol on. A symbol with low amplitude (or envelope, level, or energy) (for example, below a threshold, or zero) is referred to as OOK modulation symbol 0, or OOK modulation symbol OFF (OFF), or OOK modulation symbol off. The amplitude level is defined relative to the demodulation threshold of a receiver. An amplitude above the demodulation threshold is considered high, and amplitude below the demodulation threshold is considered low. In other words, within a symbol duration, if the signal amplitude is 0, that is, no signal is sent, it indicates that 0 is transmitted; if a signal amplitude is not 0, it indicates that 1 is transmitted.

### 4. Generalized Golay (Golay) sequence

Generation of a generalized Golay sequence is determined by *W*₁, *W*₂, and P, where P = [*P*₁, *P*₂, ... , *P*_{*M*-1}, *P_{M}*] *, W*₁ = [*W*_{1,1}, *W*_{2,1}, ... , *W*_{*M*,1}], and *W_{b}* = [*W*_{1,2}, *W*_{2,2}, *... , W*_{*M,*2}] . *Pₖ* ∈ {0,1, *... , M* = 1}, *W*_{*k*,1} ∈ {1, -1}, *W*_{*k*,2} ∈ {1, -1}, *k =* 1, 2, ... , *M, M = log*₂*N,* N is the length of the generalized Golay sequence, and the generation formula of the generalized Golay sequence is: ${a}_{1} \left(i\right) = δ \left(i\right)$ ${b}_{1} \left(i\right) = δ \left(i\right)$ ${a}_{n + 1} \left(i\right) = {a}_{n} \left(i\right) + {W}_{n , 1} {b}_{n} \left(i-{2}^{{P}_{n}}\right) , {W}_{n , 1} ∈ \left\{1,-1\right\}$ ${b}_{n + 1} \left(i\right) = {a}_{n} \left(i\right) - {W}_{n , 2} {b}_{n} \left(i-{2}^{{P}_{n}}\right) , {W}_{n , 2} ∈ \left\{1,-1\right\}$ where n ∈ [1, M], and *Pₖ = τ* represents that a register depth of a k^{th} register is 2*^{τ}* (it is assumed that the register depth is 2*^{τ}*, meaning that the register depth is formed by 2*^{τ}* bit storage units). The output *a*_{*M*+1} = [*a*_{*M*+1}(1), *a*_{*M*+1}(2), *... , a*_{*M*+1}(*N*)] of the final adder constitutes the final generalized Golay sequence.

Using N=4 as an example, *W*₁ = [1, -1], *W*₂ = [1, -1], and P = [0, 1]. A specific procedure of the generalized Golay sequence is provided:
Step 1: Perform initialization, to obtain *a*₁ = [1, 0, 0, 0] and *b*₁ = [1, 0, 0, 0].
Step 2: *a*₂(*i*) = *a*₁(*i*) + *W*_{1,1} * *b*₁(*i* - 1) , *b*₂(*i*) = *a*₁(*i*) - *W*_{1,2} * *b*₁(*i* - 1) , and values are substituted into the formulas to obtain *a*₂ = [1, 1,0, 0] and *b*₂ = [1, -1, 0, 0] through calculation.
Step 3: *a*₃(*i*) = *a*₂(*i*) + *W*_{*2*,1} * *b*₂(*i* - 2) , *b*₃(*i*) = *a*₂(*i*) - *W*_{2,2} ** b*₂(*i* - 2) , and values are substituted into the formulas to obtain *a*₃ = [1, 1, -1, 1] and *b*₃ = [1, 1, 1, -1] through calculation.

In this case, a finally obtained generalized Golay sequence is *a*₃ = [1,1, -1, 1].

Correlation of the generalized Golay sequence may be implemented by using the following shift register-based correlator, where R = [R(1), R(2), ..., R(N + L)] is a received sequence, and L is a size of a sliding window. R(1) is input at a moment *T*₁, R(2) is input at a moment *T*₂, the rest is deduced by analogy, and R(N + L) is input at a moment *T_{N+L} .* In this case, a correlation value output at a moment *T_{N}* is ${\sum }_{i = 1}^{N} R \left(i\right) ∗ {a}_{M + 1} \left(i\right)$. In addition, when the correlator is directly used to calculate a correlation value, the correlator outputs *N + L* correlation values, that is, global aperiodic autocorrelation of the received sequence and a local sequence.

The correlator may be understood as an algorithm module that is formed by an M-stage register, M stages of multipliers, M stages of adders, and M-1 stages of subtractors and that performs correlation detection, or a device that can perform a corresponding algorithm.

To more intuitively understand a specific manner of performing correlation with a generalized Golay sequence, the following provides an example of performing correlation with a generalized Golay sequence whose length is N=4. It is assumed that P = [0,1] and *Wₐ = W_{b} =* [1, -1], an obtained generalized Golay sequence A=[1, 1, -1, 1] whose length is 4 is obtained. It is assumed that a received sequence is R=[1, 1, -1, 1, 0, 0, 0], the last three elements 0 in R may be understood as a data signal, and a sliding window is L=3. Aperiodic autocorrelation values obtained by sliding N+L=7 levels are [1, 0, -1, 4, -1, 0, 1] respectively. It is assumed that *P*₁ = 0, a register depth thereof is 2⁰ = 1; and it is assumed that *P*₂ = 1, and a register depth thereof is 2¹ = 2. In the following, *D*₁ = [0] is used to represent a bit memory status of the register *P*₁, and *D*₂ = [0, 0] is used to represent a bit memory status of the register *P*₂. A specific procedure of outputting correlation values after the received sequence R is input into a related machine in FIG. 3 is as follows:
R(1)=1 is input at a moment *T*₁, so that an output of 1 is obtained, *D*₁ is updated to [1], and *D*₂ is updated to [1, 0];
R(2)=1 is input at a moment *T*₂, so that an output of 0 is obtained, *D*₁ is updated to [1], and *D*₂ is updated to [2, 1];
R(3)=-1 is input at a moment *T*₃, so that an output of-1 is obtained, *D*₁ is updated to [-1], and *D*₂ is updated to [0, 2];
R(4)=1 is input at a moment *T*₄, so that an output of 4 is obtained, *D*₁ is updated to [1], and *D*₂ is updated to [0, 0];
R(5)=0 is input at a moment *T*₅, so that an output of-1 is obtained, *D*₁ is updated to [0], and *D*₂ is updated to [1, 0];
R(6)=0 is input at a moment *T*₆, so that an output of 0 is obtained, *D*₁ is updated to [0], and *D*₂ is updated to [0, 1]; and
R(7)=0 is input at a moment *T*₇, so that an output of 1 is obtained, *D*₁ is updated to [0], and *D*₂ is updated to [0, 0].

A correlation value corresponding to the moment *T*₄ is the largest, indicating that the moment *T*₄ is a start position of the sequence A in the received signal.

It can be learned that, when the foregoing method is used for the generalized Golay sequence, only *log*₂(*N*) times of addition and *log*₂(*N*) *-* 1 times of subtraction need to be performed, and generally, N - 1 times of addition need to be performed for performing correlation with a non-generalized Golay sequence whose sequence length is N. Specifically, as shown in FIG. 3, for a generalized Golay sequence whose sequence length is N=8, *log*₂(8) = 3 times of addition and *log*₂(8) - 1 = 2 times of subtraction need to be performed to calculate each correlation value.

### 5. Passive (passive) internet of things (internet of things, IoT) and semi-passive (semi-passive) internet of things

Passive IoT and semi-passive IoT are low-cost and low-power internet of things solutions, and can be widely applied to scenarios such as automatic warehousing, sensors, and positioning. Due to constraints of power consumption and costs, a passive terminal device and a semi-passive terminal device (such as a tag) cannot autonomously generate carriers. Energy of the tag is obtained by collecting energy of a carrier sent by a base station. Therefore, during signal transmission, the base station needs to first send a single-frequency signal (or a monophonic signal) that carries no information to the tag as tag transmission energy. When the energy of the carrier is greater than a threshold, the tag is activated. During uplink transmission, a passive IoT tag can transmit uplink information only in a backscatter (backscatter) manner. The backscatter means that a tag modulates a received carrier and then directly reflects a modulated carrier back. Due to constraints of power consumption and costs, modulation is usually performed through OOK modulation.

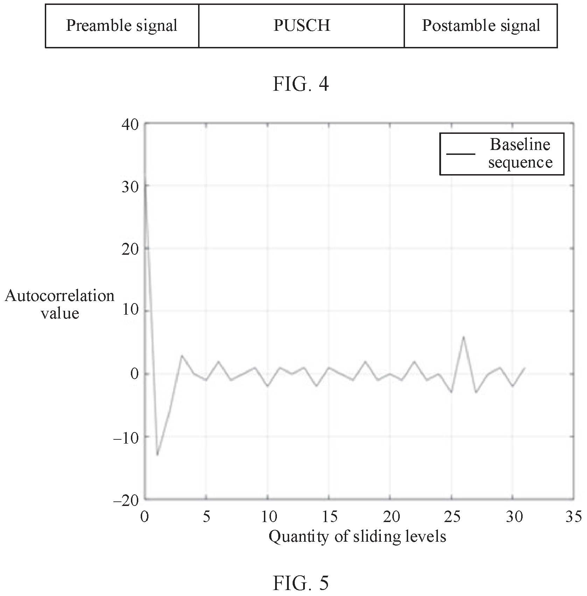

FIG. 4 is a diagram of a structure of an uplink frame used by a passive terminal device and a semi-passive terminal device. As shown in FIG. 4, during uplink data transmission, a terminal device adds a preamble (preamble) before a data signal, and adds a postamble (postamble) after the data. A base station performs timing by detecting the preamble and the postamble, to determine a position of the data. A detection method is as follows: The base station receives a signal in a time window in which the preamble/postamble may arrive, and generates a local preamble signal to perform sliding correlation with the received signal. A position with a largest correlation value is determined as a timing position of the preamble/postamble.

Generally, aperiodic autocorrelation of a synchronization sequence b = [*b*₀, *b*₁, ..., *b*_{*N*-1}] is defined as ${A}_{b} \left(τ\right) = abs \left({\sum }_{i = 0}^{N - 1} {b}_{i} {b}_{i + τ}\right)$, *τ* ∈ Z, and when i + τ > N - 1 or i + τ < 0, *b*_{*i*+*τ*} = 0. An uplink receiver machine may avoid impact of a channel phase on a received sequence in a receiving manner like coherent receiving or envelope detection. Therefore, the definition of the aperiodic autocorrelation is updated to ${A}_{b} \left(τ\right) = {\sum }_{i = 0}^{N - 1} {b}_{i} {b}_{i + τ} , τ ∈ Z$, and when i + τ > N - 1 or i + τ < *0, b*_{*i*+*τ*} = 0. Therefore, correlation values obtained by sliding different levels may include a negative value, and a larger absolute value of the negative value indicates better autocorrelation performance.

FIG. 5 is a diagram of autocorrelation performance distribution of a sequence. As shown in FIG. 5, aperiodic autocorrelation distribution of a sequence [0, 1, 0, 1, 1, 0, 0, 1, 1, 0, 1, 0, 0, 1, 1, 0, 0, 1, 0, 1, 0, 1, 1, 0, 0, 1, 0, 1, 0, 1, 1, 0] is provided. For this sequence, peak value of a secondary peak of autocorrelation is 6, and an autocorrelation value after shifting by one level is -13. This ensures rapid roll-off of correlation values near a main peak, and can effectively improve timing precision. It may be understood that a synchronization position is likely to be mistakenly detected as a level position corresponding to the secondary peak. Therefore, a lower secondary peak leads to higher timing precision. In addition, a smaller correlation value after shifting by one level ensures that a timing error is more concentrated near the main peak, thereby improving timing precision.

Currently, in passive and semi-passive uplink transmission, to remove phase noise near a zero frequency when a signal is received, a low-pass filter needs to be used. Therefore, Manchester coding needs to be performed on both a preamble and data to implement frequency shifting, so as to prevent the low-pass filter from reducing power of the preamble and a data signal.

However, performing Manchester coding to implement frequency shifting may lead to a further increase in a requirement of uplink transmission for timing precision.

In one aspect, for uplink data, if a determined synchronization position after Manchester coding offsets, incorrect demodulation of the uplink data may be caused. Specifically, a data transmission rate is determined by an encoding bit rate, a Manchester coding length, and a quantity of level repetitions. Assuming that the encoding bit rate is fixed, to ensure that the data transmission rate remains unchanged, a product of the coding length and the quantity of level repetitions needs to be a fixed value. For example, a data transmission rate when the Manchester coding length is M=1 and the quantity of level repetitions is 4 is the same as a data transmission rate when the Manchester coding length is M=3 and the quantity of level repetitions is 1. For example, the data is [0, 1]. A data sequence obtained when the Manchester coding length is M=1 and the quantity of level repetitions is 4 is [0, 0, 0, 0, 1, 1, 1, 1, 1, 1, 1, 1, 0, 0, 0, 0], and a data sequence obtained when the Manchester coding length is M=3 and the quantity of level repetitions is 1 is [0, 1, 0, 1, 0, 1, 0, 1, 1, 0, 1, 0, 1, 0, 1, 0]. It may be found that once a synchronization position offsets by one level, [1, 0] may be obtained by performing demodulation on the data sequence obtained when the Manchester coding length is M=3 and the quantity of level repetitions is 1, which is completely opposite to the original data, and [0, 1] can still be obtained by performing demodulation correctly on the data sequence obtained when the Manchester coding length is M=1 and the quantity of level repetitions is 4.

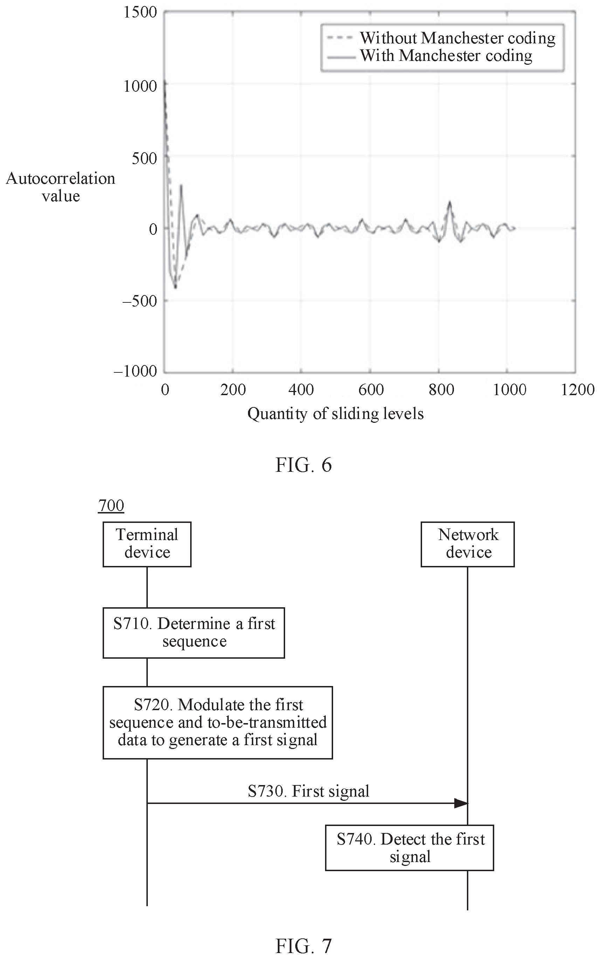

In another aspect, for a preamble sequence or a postamble sequence, the Manchester coding affects autocorrelation performance of the preamble sequence or the postamble sequence. FIG. 6 shows distribution of autocorrelation values obtained when Manchester coding is not performed on a sequence [0, 1, 0, 1, 1, 0, 0, 1, 1, 0, 1, 0, 0, 1, 1, 0, 0, 1, 0, 1, 0, 1, 1, 0, 0, 1, 0, 1, 0, 1, 1, 0] and obtained after Manchester coding is performed on the sequence. It may be found that a new secondary peak is generated in autocorrelation values of the sequence after Manchester coding is performed. As a result, timing precision is affected.

In addition, Manchester coding increases the sequence length and computational complexity. Assuming that the sequence length is N and a size of a sliding correlation window is L, L times of correlation need to be performed when correlation is performed on a received signal and a local sequence, and N-1 times of addition need to be performed for each correlation. Therefore, total computational complexity is (N-1)*L*. In addition, as the sequence length and the sliding window length increase, computational complexity continuously increases when correlation detection is performed on a preamble sequence or a postamble sequence.

In view of this, embodiments of this application provide a communication method and a communication apparatus, to significantly improve synchronization precision when a passive terminal device or a semi-passive terminal device performs uplink transmission, and reduce computational complexity of performing correlation detection on a sequence.

The foregoing briefly describes terms in this application, which are not described in detail again in the following embodiments. In addition, the foregoing descriptions of the terms are merely descriptions for ease of understanding, and do not limit the protection scope of embodiments of this application.

For ease of understanding of embodiments of this application, the following descriptions are provided.
(1) In this application, unless otherwise stated or there is a logic conflict, terms and/or descriptions in different embodiments are consistent and may be mutually referenced, and technical features in different embodiments may be combined into a new embodiment based on an internal logical relationship thereof.
(2) In this application, "at least one" means one or more, and "a plurality of" means at least two (including two). The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. "At least one item (piece) of the following" or a similar expression thereof means any combination of these items, including a singular item (piece) or any combination of plural items (pieces). For example, at least one item (piece) of a, b, and c may indicate a, b, c, a and b, a and c, b and c, or a, b, and c. Each of a, b, and c may be singular or plural.
(3) In this application, "first", "second", and various numbers are merely for differentiation for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.
(4) In this application, the terms "include" and "have" and any other variants thereof are intended to cover non-exclusive inclusion. For example, a process, method, system, product, or device that includes a series of steps or units is not necessarily limited to the steps or units that are expressly listed, but may include other steps or units that are not expressly listed or inherent to the process, method, product, or device.
(5) In this application, "indicate" may include "directly indicate" and "indirectly indicate". When a piece of indication information indicates A, the indication information may directly indicate A or indirectly indicate A, but it does not indicate that the indication information definitely carries A.
(6) In this application, a "protocol" may be a standard protocol in the communication field, for example, may include a 5G protocol, a new radio (new radio, NR) protocol, and a related protocol applied to a future communication system. This is not limited in this application. "Predefinition" may include definition in advance, for example, definition in a protocol. "Pre-configuration" may be implemented by pre-storing corresponding code or a corresponding table in a device, or may be implemented in another manner that may indicate related information. A specific implementation thereof is not limited in this application.
(7) In this application, "communication" may also be described as "data transmission", "information transmission", "data processing", or the like. "Transmission" includes "sending" and "receiving".
(8) In this application, a configuration may be a dynamic configuration (configured) performed by a network device by using signaling or a message, or may be a pre-configuration (pre-configured), that is, may be implemented by pre-storing corresponding code or a corresponding table in a device (for example, a terminal device) or may be implemented in another manner that may indicate related information. A specific implementation thereof is not limited in this application.
(9) In this application, during comparison between A and B, a specific implementation of "when A is greater than or equal to B, manner A is performed; and when A is less than or equal to B, manner B is performed" may be "when A is greater than or equal to B, manner A is performed; or when A is less than B, manner B is performed"; or may be "when A is greater than B, manner A is performed; or when A is less than or equal to B, manner B is performed". This is not limited in this application.

With reference to the accompanying drawings, the following describes in detail a communication method provided in embodiments of this application. Embodiments provided in this application are applicable to the communication system shown in FIG. 1. With reference to FIG. 7, the technical solutions of this application are specifically described. The communication method may be performed by a sending device or a receiving device, or may be performed by a chip or a circuit used in the sending device or the receiving device. The sending device may be a terminal device, a chip or a circuit in the terminal device, or a functional module that can invoke and run a program in the terminal device. The receiving device may be a network device, a chip or a circuit in the network device, a CU or a distributed unit DU in the network device, or a functional module that can invoke and run a program in the network device. For ease of description, the following uses an example in which the communication method is performed by the terminal device and the network device for description.

FIG. 7 is a schematic flowchart of a communication method according to an embodiment of this application. As shown in FIG. 7, the method includes the following steps.

S710. A terminal device determines a first sequence.

The first sequence is the same as a sequence obtained by performing Manchester coding on a base sequence, or the first sequence may be obtained by performing Manchester coding on a base sequence.

Specifically, the first sequence includes N elements, the base sequence includes $\frac{N}{{2}^{K}}$ elements, any element in the base sequence is represented by 2*^{K}* levels after Manchester coding, the 2*^{K}* levels include two different levels, and the two different levels may be two levels: 0 and 1.

It should be noted that, in this embodiment of this application, K is a Manchester coding length. As shown in Table 1, when K=1, each element in the base sequence is represented by 2¹ levels after Manchester coding, where bit 0 is encoded into two levels {01}, and bit 1 is encoded into two levels {10}. When K=2, each element in the base sequence is represented by 2² levels after Manchester coding, where bit 0 is encoded into four levels {0101}, and bit 1 is encoded into four levels {1010}. When K=3, each element in the base sequence is represented by 2³ levels after Manchester coding, where bit 0 is encoded into eight levels {01010101}, and bit 1 is encoded into eight levels {10101010}.

**Table 1 Manchester coding length**

| K | Code (chip) |
|---|---|
| 1 | {01}/{10} |
| 2 | {0101}/{1010} |
| 3 | {0101010101}/{10101010} |

It is easily understood that, in levels obtained by performing Manchester coding on any element in the base sequence, any two adjacent levels are different.

By way of example, but not limitation, the base sequence includes two elements [0, 1], and after Manchester coding with K=1 is performed on the base sequence, four levels [0, 1, 1, 0] are obtained.

By way of example, but not limitation, the base sequence includes four elements [0, 1, 1, 1], and after Manchester coding with K=2 is performed on the base sequence, 16 levels [0, 1, 0, 1, 1, 0, 1, 0, 1, 0, 1, 0, 1, 0, 1, 0] are obtained.

It should be understood that the base sequence is related to a generalized Golay sequence. A value set of elements in the generalized Golay sequence is {1, -1}, and values of elements in the base sequence in this embodiment of this application are {0, 1}. In other words, that the base sequence is related to the generalized Golay sequence may be understood as: an n^{th} element *Aₙ* in the generalized Golay sequence and an n^{th} element *xₙ* in the base sequence satisfy: *Aₙ* = 1 - 2*xₙ*, where $0 \leq n \leq \frac{N}{{2}^{K}} - 1$, and *n* is an integer.

It should be understood that a specific quantity of elements in the base sequence and specific elements are not limited in this application. The following uses an example in which the quantity of elements in the base sequence is 8, 16, 32, or 64 for description.

Example 1: The base sequence includes eight elements, and the base sequence is one of the following:
[0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1].

Example 2: The base sequence includes 16 elements, and the base sequence is one of the following:
[0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1].

Example 3: The base sequence includes 32 elements, and the base sequence is one of the following:
[0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
[0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
[0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
[0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
[0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
[0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
[0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
[0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
[0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
[0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
[0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
[0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
[0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
[0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
[0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
[0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
[0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
[0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
[0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
[0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
[0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
[0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
[0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
[0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
[0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
[0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
[0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
[0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
[0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
[0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
[0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
[0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
[0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
[0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
[0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
[0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
[0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
[0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
[0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
[0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
[0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
[0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
[0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
[0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
[0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
[0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
[0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
[0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
[0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
[0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
[0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
[0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
[0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
[0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
[0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
[0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
[0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
[0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
[0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
[0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
[0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
[0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
[0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
[0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
[0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
[0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
[0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
[0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
[0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
[0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
[0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
[0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1].

Example 4: The base sequence includes 64 elements, and the base sequence is one of the following:
[0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
[0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
[0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
[0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
[0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
[0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
[0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
[0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
[0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
[0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
[0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
[0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
[0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
[0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
[0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
[0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
[0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
[0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
[0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
[0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
[0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
[0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
[0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
[0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
[0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
[0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
[0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
[0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
[0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
[0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
[0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
[0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
[0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
[0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
[0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
[0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
[0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
[0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
[0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
[0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
[0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

It should be understood that, to reduce computational complexity required for performing sliding detection on the first sequence, in this embodiment provided in this application, it is specified that a register depth 2*^{Pₘ}* of an m^{th} stage in an M-stage register in the generalized Golay sequence is determined by an m^{th} element *Pₘ* in a register sequence [P], and a sum of first $\left⌈M/2\right⌉$ elements in the register sequence is greater than or equal to a sum of last $M - \left⌈M/2\right⌉$ elements. In other words, in this embodiment provided in this application, the register sequence P = [*P*₁, *P*₂, ... , *P*_{*M*-1}, *P_{M}*], *Pₖ* ∈ {0, 1, ... , *M* - 1}, *M* = *log*₂*N*, *N* is a sequence length , and ${\sum }_{k = 1}^{\left⌈M/2\right⌉} {P}_{k} \geq {\sum }_{k = \left⌈M/2\right⌉ + 1}^{M} {P}_{k}$.

Based on a rule of the foregoing register sequence, when correlation detection is performed on the first sequence provided in this embodiment of this application, assuming that a size of a sliding window is L, only the last (L+1) times of addition are required. In other words, addition from a moment *T_{N}* to a moment *T*_{*N*+*L*} is required, and addition from a moment *T*₁ to a moment *T*_{*N*-1} may be omitted. Addition and subtraction required for each stage may be obtained through successive recursion. With reference to the related descriptions of FIG. 3, assuming that the size of the sliding window is 3, finally, in outputs of a second-stage adder, only addition from a moment *T*₄ to a moment *T*₇ is required, and it is obtained through recursion that only addition from a moment *T*₂ to a moment *T*₅ is required in a first-stage adder, and only subtraction from the moment *T*₄ to the moment *T*₇ is required in a first-stage subtractor. A recursion process is related to the register sequence P, that is, a register depth of each stage of register. Therefore, an arrangement order of the registers affects actually required computational complexity, that is, a quantity of addition times. ${\sum }_{k = 1}^{\left⌈M/2\right⌉} {P}_{k} \geq {\sum }_{k = \left⌈M/2\right⌉ + 1}^{M} {P}_{k}$ may enable lower computational complexity.

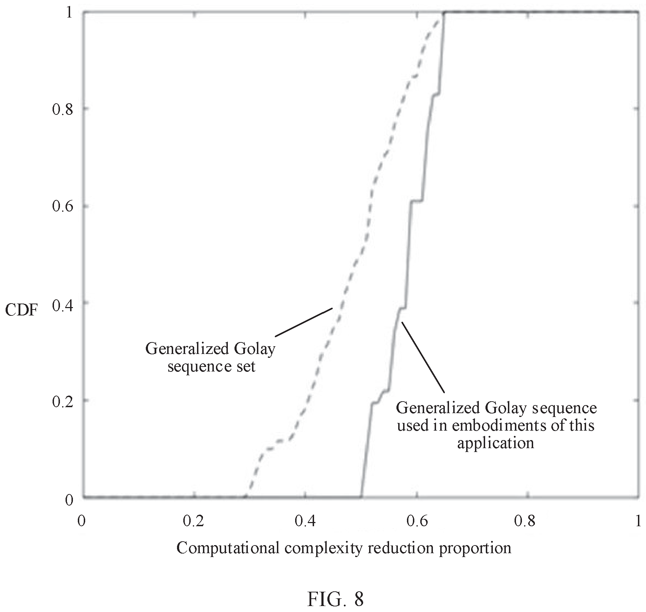

FIG. 8 is a diagram of computational complexity of a base sequence according to an embodiment of this application.

The base sequence in FIG. 8 includes 32 elements, and the base sequence is specifically [0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1]. It may be found that, in comparison with a generalized Golay sequence (or a sequence set) in which Pn is fully arranged, computational complexity of performing sliding correlation detection on the base sequence may be reduced by 50% to 60%.

In a possible implementation, this embodiment of this application further provides { [*W*₁] , [*W*₂], [*P*] } corresponding to the foregoing base sequence, or in other words, this embodiment of this application further provides {[*W*₁], [*W*₂], [*P*]} used to generate a generalized Golay sequence related to the base sequence. The following uses an example in which a quantity of elements in the base sequence is 8, 16, 32, or 64 for description.

Example 5: The base sequence includes eight elements, and { [*W*₁] , [*W*₂], [*P*] } corresponding to the base sequence is one of the following:
{[-1, 1, 1], [-1, 1, -1], [2, 0, 1]}, {[1, 1, -1], [1, 1, -1], [2, 0, 1]}, {[1, -1, 1], [1, -1, - 1], [2, 0, 1]}, {[-1, -1, -1], [-1, -1, -1], [2, 0, 1]}, {[1, -1, 1], [1, -1, -1], [2, 1, 0]}, or {[-1, -1, -1], [-1, -1, -1], [2, 1, 0]}.

It should be understood that the base sequence including eight elements provided in Example 1 is in one-to-one correspondence with { [*W*₁] , [*W*₂], [*P*] } provided in Example 5. Specifically, a base sequence [0, 0, 0, 1, 1, 0, 1, 1] corresponds to {[-1, 1, 1], [-1, 1, -1], [2, 0, 1]}, a base sequence [0, 0, 1, 0, 0, 1, 1, 1] corresponds to {[1, 1, -1], [1, 1, -1], [2, 0, 1]}, a base sequence [0, 1, 0, 0, 0, 0, 0, 1] corresponds to {[1, -1, 1], [1, -1, -1], [2, 0, 1]}, a base sequence [0, 1, 1, 1, 1, 1, 0, 1] corresponds to {[-1, -1, -1], [-1, -1, -1], [2, 0, 1]}, a base sequence [0, 0, 1, 0, 0, 0, 0, 1] corresponds to {[1, -1, 1], [1, -1, -1], [2, 1, 0]}, and a base sequence [0, 1, 1, 1, 1, 0, 1, 1] corresponds to {[-1, -1, -1], [-1, -1, -1], [2, 1, 0]}.

Example 6: The base sequence includes 16 elements, and { [*W*₁] , [*W*₂], [*P*] } corresponding to the base sequence is one of the following:
{[-1, 1, 1, -1], [-1, 1, 1, -1], [3, 2, 0, 1]}, {[-1, 1, -1, 1], [-1, 1, -1, -1], [3, 2, 0, 1]}, {[1, 1, -1, -1], [1, 1, -1, -1], [3, 2, 0, 1]}, {[-1, -1, 1, 1], [-1, -1, 1, -1], [3, 2, 0, 1]}, {[1, -1, 1, - 1], [1, -1, 1, -1], [3, 2, 0, 1]}, {[1, -1, -1, 1], [1, -1, -1, -1], [3, 2, 0, 1]}, {[-1, -1, -1, -1], [-1, - 1, -1, -1], [3, 2, 0, 1]}, {[1, 1, 1, 1], [1, 1, 1, 1], [3, 2, 0, 1]}, {[-1, 1, 1, -1], [-1, 1, 1, -1], [3, 2, 1, 0]}, {[1, 1, 1, 1], [1, 1, 1, 1], [3, 2, 1, 0]}, {[-1, 1, 1, -1], [-1, 1, 1, -1], [3, 1, 0, 2]}, {[-1, 1, -1, 1], [-1, 1, -1, -1], [3, 1, 0, 2]}, {[1, 1, -1, -1], [1, 1, -1, -1], [3, 1, 0, 2]}, {[-1, -1, -1, 1], [1, -1, -1, -1], [2, 3, 1, 0]}, {[-1, 1, -1, -1], [1, 1, -1, -1], [2, 3, 1, 0]}, {[1, 1, 1, 1], [1, 1, 1, 1], [3, 1, 0, 2]}, {[-1, -1, 1, 1], [-1, -1, 1, -1], [3, 1, 2, 0]}, {[1, -1, 1, -1], [1, -1, 1, -1], [3, 1, 2, 0]}, {[1, - 1, -1, 1], [1, -1, -1, -1], [3, 1, 2, 0]}, {[-1, -1, -1, -1], [-1, -1, -1, -1], [3, 1, 2, 0]}, {[-1, 1, 1, 1], [1, 1, 1, -1], [2, 3, 0, 1]}, {[-1, 1, -1, 1], [-1, 1, -1, -1], [3, 0, 1, 2]}, {[-1, -1, 1, -1], [1, -1, 1, -1], [2, 3, 0, 1]}, {[1, 1, -1, -1], [1, 1, -1, -1], [3, 0, 1, 2]}, {[-1, -1, -1, 1], [1, -1, -1, -1], [2, 3, 0, 1]}, {[1, -1, -1, 1], [1, -1, -1, -1], [3, 0, 1, 2]}, {[-1, 1, -1, -1], [1, 1, -1, -1], [2, 3, 0, 1]}, {[-1, -1, -1, -1], [-1, -1, -1, -1], [3, 0, 1, 2]}, {[-1, 1, 1, -1], [-1, 1, 1, -1], [3, 0, 2, 1]}, {[-1, 1, -1, 1], [-1, 1, -1, -1], [3, 0, 2, 1]}, {[1, 1, -1, -1], [1, 1, -1, -1], [3, 0, 2, 1]}, {[-1, -1, 1, 1], [-1, -1, 1, -1], [3, 0, 2, 1]}, {[1, -1, 1, -1], [1, -1, 1, -1], [3, 0, 2, 1]}, {[1, -1, -1, 1], [1, -1, -1, -1], [3, 0, 2, 1]}, {[-1, -1, -1, -1], [-1, -1, -1, -1], [3, 0, 2, 1]}, {[1, 1, 1, 1], [1, 1, 1, 1], [3, 0, 2, 1]}, {[-1, -1, 1, 1], [-1, -1, 1, -1], [2, 3, 1, 0]}, {[1, -1, 1, -1], [1, -1, 1, -1], [2, 3, 1, 0]}, {[-1, 1, -1, 1], [-1, 1, -1, -1], [1, 3, 2, 0]}, {[1, 1, -1, -1], [1, 1, -1, -1], [1, 3, 2, 0]}, {[-1, 1, -1, 1], [-1, 1, -1, - 1], [0, 3, 1, 2]}, or {[1, 1, -1, -1], [1, 1, -1, -1], [0, 3, 1, 2]}.

It should be understood that the base sequence including 16 elements provided in Example 2 is in one-to-one correspondence with {[*W*₁], [*W*₂], [*P*]} provided in Example 6 in a given order. Details are not described herein.

Example 7: The base sequence includes 32 elements, and { [*W*₁] , [*W*₂], [*P*] } corresponding to the base sequence is one of the following:
{[-1, 1, 1, 1, 1], [-1, 1, 1, 1, -1], [3, 2, 4, 1, 0]}, {[1, 1, 1, 1, -1], [1, 1, 1, 1, -1], [3, 2, 4, 1, 0]}, {[-1, 1, 1, -1, 1], [-1, 1, 1, -1, -1], [3, 2, 4, 1, 0]}, {[1, 1, 1, -1, -1], [1, 1, 1, -1, -1], [3, 2, 4, 1, 0]}, {[-1, -1, 1, 1, 1], [-1, -1, 1, 1, -1], [3, 2, 4, 1, 0]}, {[1, -1, 1, 1, -1], [1, -1, 1, 1, -1], [3, 2, 4, 1, 0]}, {[-1, -1, 1, -1, 1], [-1, -1, 1, -1, -1], [3, 2, 4, 1, 0]}, {[1, -1, 1, -1, -1], [1, -1, 1, -1, -1], [3, 2, 4, 1, 0]}, {[-1, 1, 1, 1, 1], [-1, 1, 1, 1, -1], [2, 3, 4, 1, 0]}, {[1, 1, 1, 1, -1], [1, 1, 1, 1, -1], [2, 3, 4, 1, 0]}, {[-1, -1, 1, 1, 1], [-1, -1, 1, 1, -1], [2, 3, 4, 1, 0]}, {[1, -1, 1, 1, -1], [1, -1, 1, 1, -1], [2, 3, 4, 1, 0]}, {[-1, -1, 1, -1, 1], [-1, -1, 1, -1, -1], [2, 3, 4, 1, 0]}, {[1, -1, 1, -1, -1], [1, -1, 1, -1, -1], [2, 3, 4, 1, 0]}, {[-1, 1, 1, -1, 1], [-1, 1, 1, -1, -1], [4, 1, 2, 3, 0]}, {[1, 1, 1, -1, -1], [1, 1, 1, -1, -1], [4, 1, 2, 3, 0]}, {[1, 1, -1, -1, 1], [1, 1, -1, -1, -1], [4, 1, 2, 3, 0]}, {[-1, 1, - 1, -1, -1], [-1, 1, -1, -1, -1], [4, 1, 2, 3, 0]}, {[-1, -1, 1, -1, 1], [-1, -1, 1, -1, -1], [4, 1, 2, 3, 0]}, {[1, -1, 1, -1, -1], [1, -1, 1, -1, -1], [4, 1, 2, 3, 0]}, {[1, -1, -1, -1, 1], [1, -1, -1, -1, -1], [4, 1, 2, 3, 0]}, {[-1, -1, -1, -1, -1], [-1, -1, -1, -1, -1], [4, 1, 2, 3, 0]}, {[1, 1, -1, 1, 1], [1, 1, -1, 1, - 1], [0, 4, 3, 1, 2]}, {[-1, 1, -1, 1, -1], [-1, 1, -1, 1, -1], [0, 4, 3, 1, 2]}, {[-1, 1, 1, -1, 1], [-1, 1, 1, -1, -1], [0, 4, 3, 2, 1]}, {[1, 1, 1, -1, -1], [1, 1, 1, -1, -1], [0, 4, 3, 2, 1]}, {[1, 1, -1, 1, 1], [1, 1, - 1, 1, -1], [0, 4, 3, 2, 1]}, {[-1, 1, -1, 1, -1], [-1, 1, -1, 1, -1], [0, 4, 3, 2, 1]}, {[-1, 1, 1, 1, 1], [-1, 1, 1, 1, -1], [0, 3, 4, 1, 2]}, {[1, 1, 1, 1, -1], [1, 1, 1, 1, -1], [0, 3, 4, 1, 2]}, {[-1, 1, 1, -1, 1], [-1, 1, 1, -1, -1], [0, 3, 4, 1, 2]}, {[1, 1, 1, -1, -1], [1, 1, 1, -1, -1], [0, 3, 4, 1, 2]}, {[-1, -1, 1, -1, 1], [-1, -1, 1, -1, -1], [0, 3, 4, 1, 2]}, {[1, -1, 1, -1, -1], [1, -1, 1, -1, -1], [0, 3, 4, 1, 2]}, {[-1, 1, 1, 1, 1], [-1, 1, 1, 1, -1], [0, 3, 4, 2, 1]}, {[1, 1, 1, 1, -1], [1, 1, 1, 1, -1], [0, 3, 4, 2, 1]}, {[-1, 1, 1, - 1, 1], [-1, 1, 1, -1, -1], [0, 3, 4, 2, 1]}, {[1, 1, 1, -1, -1], [1, 1, 1, -1, -1], [0, 3, 4, 2, 1]}, {[-1, -1, 1, 1, 1], [-1, -1, 1, 1, -1], [0, 3, 4, 2, 1]}, {[1, -1, 1, 1, -1], [1, -1, 1, 1, -1], [0, 3, 4, 2, 1]}, {[-1, -1, 1, -1, 1], [-1, -1, 1, -1, -1], [0, 3, 4, 2, 1]}, {[1, -1, 1, -1, -1], [1, -1, 1, -1, -1], [0, 3, 4, 2, 1]}, {[1, 1, -1, 1, 1], [1, 1, -1, 1, -1], [3, 2, 1, 4, 0]}, {[-1, 1, -1, 1, -1], [-1, 1, -1, 1, -1], [3, 2, 1, 4, 0]}, {[-1, 1, 1, 1, 1], [-1, 1, 1, 1, -1], [3, 1, 2, 4, 0]}, {[1, 1, 1, 1, -1], [1, 1, 1, 1, -1], [3, 1, 2, 4, 0]}, {[1, 1, -1, -1, 1], [1, 1, -1, -1, -1], [4, 1, 3, 2, 0]}, {[-1, 1, -1, -1, -1], [-1, 1, -1, -1, -1], [4, 1, 3, 2, 0]}, {[1, -1, -1, -1, 1], [1, -1, -1, -1, -1], [4, 1, 3, 2, 0]}, {[-1, -1, -1, -1, -1], [-1, -1, - 1, -1, -1], [4, 1, 3, 2, 0]}, {[1, 1, 1, 1, -1], [1, 1, 1, 1, -1], [4, 2, 3, 1, 0]}, {[-1, 1, 1, 1, 1], [-1, 1, 1, 1, -1], [4, 2, 3, 1, 0]}, {[1, -1, 1, 1, -1], [1, -1, 1, 1, -1], [4, 2, 3, 1, 0]}, {[-1, -1, 1, 1, 1], [-1, -1, 1, 1, -1], [4, 2, 3, 1, 0]}, {[1, 1, 1, -1, -1], [1, 1, 1, -1, -1], [4, 2, 3, 1, 0]}, {[-1, 1, 1, -1, 1], [-1, 1, 1, -1, -1], [4, 2, 3, 1, 0]}, {[1, -1, 1, -1, -1], [1, -1, 1, -1, -1], [4, 2, 3, 1, 0]}, {[-1, -1, 1, -1, 1], [-1, -1, 1, -1, -1], [4, 2, 3, 1, 0]}, {[1, 1, -1, -1, 1], [1, 1, -1, -1, -1], [4, 2, 3, 1, 0]}, {[-1, 1, -1, -1, -1], [-1, 1, -1, -1, -1], [4, 2, 3, 1, 0]}, {[1, -1, -1, -1, 1], [1, -1, -1, -1, -1], [4, 2, 3, 1, 0]}, {[-1, -1, -1, -1, -1], [-1, -1, -1, -1, -1], [4, 2, 3, 1, 0]}, {[1, -1, 1, 1, -1], [1, -1, 1, 1, -1], [3, 4, 1, 2, 0]}, {[-1, -1, 1, 1, 1], [-1, -1, 1, 1, -1], [3, 4, 1, 2, 0]}, {[1, -1, 1, -1, -1], [1, -1, 1, - 1, -1], [3, 4, 1, 2, 0]}, {[-1, -1, 1, -1, 1], [-1, -1, 1, -1, -1], [3, 4, 1, 2, 0]}, {[1, -1, -1, -1, 1], [1, -1, -1, -1, -1], [3, 4, 1, 2, 0]}, {[-1, -1, -1, -1, -1], [-1, -1, -1, -1, -1], [3, 4, 1, 2, 0]}, {[1, 1, - 1, 1, 1], [1, 1, -1, 1, -1], [4, 3, 2, 1, 0]}, {[-1, 1, -1, 1, -1], [-1, 1, -1, 1, -1], [4, 3, 2, 1, 0]}, {[1, -1, -1, 1, 1], [1, -1, -1, 1, -1], [4, 3, 2, 1, 0]}, {[-1, -1, -1, 1, -1], [-1, -1, -1, 1, -1], [4, 3, 2, 1, 0]}, {[1, 1, 1, -1, -1], [1, 1, 1, -1, -1], [4, 3, 2, 1, 0]}, {[-1, 1, 1, -1, 1], [-1, 1, 1, -1, -1], [4, 3, 2, 1, 0]}, {[1, -1, 1, -1, -1], [1, -1, 1, -1, -1], [4, 3, 2, 1, 0]}, {[-1, -1, 1, -1, 1], [-1, -1, 1, -1, -1], [4, 3, 2, 1, 0]}, {[1, -1, -1, 1, 1], [1, -1, -1, 1, -1], [3, 4, 2, 1, 0]}, {[-1, -1, -1, 1, -1], [-1, -1, - 1, 1, -1], [3, 4, 2, 1, 0]}, {[1, -1, 1, -1, -1], [1, -1, 1, -1, -1], [3, 4, 2, 1, 0]}, {[-1, -1, 1, -1, 1], [-1, -1, 1, -1, -1], [3, 4, 2, 1, 0]}, {[1, -1, -1, -1, 1], [1, -1, -1, -1, -1], [3, 4, 2, 1, 0]}, or {[-1, - 1, -1, -1, -1], [-1, -1, -1, -1, -1], [3, 4, 2, 1, 0]}.

It should be understood that the base sequence including 32 elements provided in Example 3 is in one-to-one correspondence with {[*W*₁], [*W*₂], [*P*]} provided in Example 7 in a given order. Details are not described herein.

Example 8: The base sequence includes 64 elements, and { [*W*₁] , [*W*₂], [*P*] } corresponding to the base sequence is one of the following:
{[1, -1, 1, -1, 1, 1], [1, -1, 1, -1, 1, -1], [4, 5, 1, 2, 0, 3]}, {[1, -1, 1, -1, 1, -1], [1, -1, 1, -1, 1, -1], [4, 5, 1, 2, 0, 3]}, {[-1, -1, 1, -1, 1, 1], [-1, -1, 1, -1, 1, -1], [4, 5, 1, 2, 0, 3]}, {[-1, -1, 1, -1, 1, -1], [-1, -1, 1, -1, 1, -1], [4, 5, 1, 2, 0, 3]}, {[1, -1, 1, -1, -1, 1], [1, -1, 1, -1, -1, - 1], [4, 5, 1, 2, 0, 3]}, {[1, -1, 1, -1, -1, -1], [1, -1, 1, -1, -1, -1], [4, 5, 1, 2, 0, 3]}, {[-1, -1, 1, - 1, -1, 1], [-1, -1, 1, -1, -1, -1], [4, 5, 1, 2, 0, 3]}, {[-1, -1, 1, -1, -1, -1], [-1, -1, 1, -1, -1, -1], [4, 5, 1, 2, 0, 3]}, {[-1, 1, 1, 1, 1, -1], [1, 1, 1, 1, 1, -1], [4, 5, 0, 1, 3, 2]}, {[-1, -1, 1, 1, 1, 1], [1, -1, 1, 1, 1, -1], [4, 5, 0, 1, 3, 2]}, {[-1, 1, -1, 1, 1, -1], [1, 1, -1, 1, 1, -1], [4, 5, 0, 1, 3, 2]}, {[-1, -1, -1, 1, 1, 1], [1, -1, -1, 1, 1, -1], [4, 5, 0, 1, 3, 2]}, {[-1, 1, 1, -1, -1, 1], [1, 1, 1, -1, -1, -1], [4, 5, 0, 1, 3, 2]}, {[-1, -1, 1, -1, -1, -1], [1, -1, 1, -1, -1, -1], [4, 5, 0, 1, 3, 2]}, {[-1, 1, -1, -1, -1, 1], [1, 1, -1, -1, -1, -1], [4, 5, 0, 1, 3, 2]}, {[-1, -1, -1, -1, -1, -1], [1, -1, -1, -1, -1, -1], [4, 5, 0, 1, 3, 2]}, {[-1, -1, -1, 1, -1, -1], [-1, -1, -1, 1, 1, -1], [4, 5, 1, 0, 3, 2]}, {[-1, -1, -1, -1, - 1, -1], [-1, -1, -1, -1, 1, -1], [4, 5, 1, 0, 3, 2]}, {[1, -1, -1, 1, 1, -1], [1, -1, -1, 1, -1, -1], [4, 5, 1, 0, 3, 2]}, {[1, -1, -1, -1, 1, -1], [1, -1, -1, -1, -1, -1], [4, 5, 1, 0, 3, 2]}, {[1, 1, -1, 1, -1, 1], [1, 1, -1, 1, -1, -1], [5, 3, 2, 4, 0, 1]}, {[-1, 1, -1, 1, -1, -1], [-1, 1, -1, 1, -1, -1], [5, 3, 2, 4, 0, 1]}, {[1, -1, -1, 1, -1, 1], [1, -1, -1, 1, -1, -1], [5, 3, 2, 4, 0, 1]}, {[-1, -1, -1, 1, -1, -1], [-1, -1, -1, 1, -1, -1], [5, 3, 2, 4, 0, 1]}, {[1, 1, -1, -1, -1, -1], [1, 1, -1, -1, -1, -1], [5, 3, 2, 4, 0, 1]}, {[-1, 1, -1, -1, -1, 1], [-1, 1, -1, -1, -1, -1], [5, 3, 2, 4, 0, 1]}, {[1, -1, -1, -1, -1, -1], [1, -1, -1, - 1, -1, -1], [5, 3, 2, 4, 0, 1]}, {[-1, -1, -1, -1, -1, 1], [-1, -1, -1, -1, -1, -1], [5, 3, 2, 4, 0, 1]}, {[1, 1, -1, 1, -1, 1], [1, 1, -1, 1, -1, -1], [5, 2, 4, 3, 0, 1]}, {[-1, 1, -1, 1, -1, -1], [-1, 1, -1, 1, -1, -1], [5, 2, 4, 3, 0, 1]}, {[1, -1, -1, 1, -1, 1], [1, -1, -1, 1, -1, -1], [5, 2, 4, 3, 0, 1]}, {[-1, -1, -1, 1, -1, -1], [-1, -1, -1, 1, -1, -1], [5, 2, 4, 3, 0, 1]}, {[1, 1, -1, -1, -1, -1], [1, 1, -1, -1, -1, -1], [5, 2, 4, 3, 0, 1]}, {[-1, 1, -1, -1, -1, 1], [-1, 1, -1, -1, -1, -1], [5, 2, 4, 3, 0, 1]}, {[1, -1, -1, -1, -1, -1], [1, -1, -1, -1, -1, -1], [5, 2, 4, 3, 0, 1]}, {[-1, -1, -1, -1, -1, 1], [-1, -1, -1, -1, -1, -1], [5, 2, 4, 3, 0, 1]}, {[1, -1, -1, 1, -1, 1], [1, -1, -1, 1, -1, -1], [3, 4, 2, 5, 0, 1]}, {[-1, -1, -1, 1, -1, -1], [-1, -1, -1, 1, -1, -1], [3, 4, 2, 5, 0, 1]}, {[1, -1, -1, -1, -1, -1], [1, -1, -1, -1, -1, -1], [3, 4, 2, 5, 0, 1]}, {[-1, -1, -1, -1, -1, 1], [-1, -1, -1, -1, -1, -1], [3, 4, 2, 5, 0, 1]}, {[-1, 1, 1, 1, 1, 1], [1, 1, 1, 1, 1, -1], [4, 5, 0, 3, 1, 2]}, {[-1, 1, 1, 1, 1, -1], [1, 1, 1, 1, 1, -1], [4, 5, 0, 3, 1, 2]}, {[-1, -1, 1, 1, 1, 1], [1, -1, 1, 1, 1, -1], [4, 5, 0, 3, 1, 2]}, {[-1, -1, 1, 1, 1, -1], [1, -1, 1, 1, 1, -1], [4, 5, 0, 3, 1, 2]}, {[-1, 1, -1, 1, 1, 1], [1, 1, -1, 1, 1, -1], [4, 5, 0, 3, 1, 2]}, {[-1, 1, -1, 1, 1, -1], [1, 1, -1, 1, 1, -1], [4, 5, 0, 3, 1, 2]}, {[-1, -1, -1, 1, 1, 1], [1, -1, -1, 1, 1, -1], [4, 5, 0, 3, 1, 2]}, {[-1, -1, -1, 1, 1, -1], [1, -1, -1, 1, 1, -1], [4, 5, 0, 3, 1, 2]}, {[-1, 1, 1, -1, -1, 1], [1, 1, 1, -1, -1, -1], [4, 5, 0, 3, 1, 2]}, {[-1, 1, 1, -1, -1, -1], [1, 1, 1, -1, -1, -1], [4, 5, 0, 3, 1, 2]}, {[-1, -1, 1, -1, -1, 1], [1, -1, 1, -1, -1, -1], [4, 5, 0, 3, 1, 2]}, {[-1, -1, 1, -1, -1, -1], [1, -1, 1, -1, -1, -1], [4, 5, 0, 3, 1, 2]}, {[-1, 1, -1, -1, -1, 1], [1, 1, -1, -1, -1, -1], [4, 5, 0, 3, 1, 2]}, {[-1, 1, -1, -1, -1, -1], [1, 1, -1, -1, -1, -1], [4, 5, 0, 3, 1, 2]}, {[-1, -1, -1, -1, -1, 1], [1, -1, -1, -1, -1, -1], [4, 5, 0, 3, 1, 2]}, {[-1, -1, -1, -1, -1, -1], [1, -1, -1, -1, -1, -1], [4, 5, 0, 3, 1, 2]}, {[1, -1, -1, 1, -1, 1], [1, -1, -1, 1, -1, -1], [4, 5, 2, 3, 0, 1]}, {[-1, -1, -1, 1, -1, -1], [-1, -1, -1, 1, -1, -1], [4, 5, 2, 3, 0, 1]}, {[1, -1, -1, -1, -1, -1], [1, -1, -1, -1, -1, -1], [4, 5, 2, 3, 0, 1]}, or {[-1, -1, -1, -1, -1, 1], [-1, -1, - 1, -1, -1, -1], [4, 5, 2, 3, 0, 1]}.

It should be understood that the base sequence including 64 elements provided in Example 4 is in one-to-one correspondence with {[*W*₁], [*W*₂], [*P*]} provided in Example 8 in a given order. Details are not described herein.

It should be understood that one base sequence may correspond to at least one {[*W*₁], [*W*₂], [*P*]}. In other words, a generalized Golay sequence related to one base sequence may be generated based on at least one {[*W*₁], [*W*₂], [*P*]}. This is not limited in this embodiment of this application.

It should be understood that, in this embodiment of this application, that the first sequence is the same as the sequence obtained by performing Manchester coding on the base sequence may alternatively be understood as: The first sequence is the same as a sequence obtained by performing Manchester coding on an equivalent sequence of the base sequence. A specific sequence of the equivalent sequence of the base sequence is not limited in this embodiment of this application.

In a possible implementation, the equivalent sequence of the base sequence may be obtained after negation is performed on elements in the base sequence. In other words, the n^{th} element *Aₙ* in the generalized Golay sequence and the n^{th} element *xₙ* in the base sequence satisfy: *Aₙ* = 2*xₙ* - 1, where $0 \leq n \leq \frac{N}{{2}^{K}} - 1$, and *n* is an integer.

In another possible implementation, the equivalent sequence of the base sequence may be obtained after reverse is performed on elements in the base sequence. In other words, the n^{th} element *Aₙ* in the generalized Golay sequence and an (N-n-1)^{th} element *x*_{*N-n*-1} in the base sequence satisfy: *Aₙ =* 1 *-* 2*x*_{*N-n*-1}, where $0 \leq n \leq \frac{N}{{2}^{K}} - 1$, and *n* is an integer.

In still another possible implementation, the equivalent sequence of the base sequence may be obtained after negation and reverse are performed on elements in the base sequence. In other words, the n^{th} element *Aₙ* in the generalized Golay sequence and an (N-n-1)^{th} element *x*_{*N-n*-1} in the base sequence satisfy: *Aₙ =* 2*x*_{*N-n*-1} *-* 1, where $0 \leq n \leq \frac{N}{{2}^{K}} - 1$, and *n* is an integer.

It should be understood that the first sequence may be a preamble sequence or a postamble sequence. This is not limited in this application. In addition, when the first sequence is the preamble sequence, the postamble sequence may be an equivalent sequence of the preamble sequence; or when the first sequence is the postamble sequence, the preamble sequence may be an equivalent sequence of the postamble sequence. For a relationship satisfied by the first sequence and the equivalent sequence of the first sequence, refer to the relationship satisfied by the base sequence and the equivalent sequence of the base sequence. Details are not described herein again.

S720. The terminal device modulates the first sequence and to-be-transmitted data, to generate a first signal.

In a possible implementation, the terminal device performs OOK modulation on the first sequence and the to-be-transmitted data, to generate the first signal.

In another possible implementation, the terminal device repeats each element in the first sequence Y consecutive times, and performs OOK modulation on a first sequence after the repetition and the to-be-transmitted data, to generate the first signal.

By way of example, but not limitation, if the first sequence is [0, 1] and Y=1, the first sequence after the repetition is [0, 1].

By way of example, but not limitation, if the first sequence is [0, 1] and Y=2, the first sequence after the repetition is [0, 0, 1, 1].

By way of example, but not limitation, if the first sequence is [0, 1, 1, 0] and Y=4, the first sequence after the repetition is [0, 0, 0, 0, 1, 1, 1, 1, 1, 1, 1, 1, 0, 0, 0, 0].

S730. The terminal device sends the first signal to a network device, and correspondingly, the network device receives the first signal.

S740. The network device detects the first signal.

Specifically, the network device receives the signal in a time window in which the first signal may arrive, generates a local preamble/postamble signal to perform sliding correlation with the received first signal, and determines a position of the first sequence in the first signal based on a position with a largest correlation value.

Further, the network device demodulates uplink data in the first signal.

Optionally, before step S710, the method 700 further includes the following step (not shown in the figure).

S701. The network device sends first information to the terminal device, and correspondingly, the terminal device receives the first information.

The first information includes first indication information and second indication information, the first indication information indicates the base sequence used by the terminal device, and the second indication information indicates a coding length K of Manchester coding performed by the terminal device.

Correspondingly, the terminal device performs step S710 based on the base sequence and the Manchester coding length that are indicated by the first information.

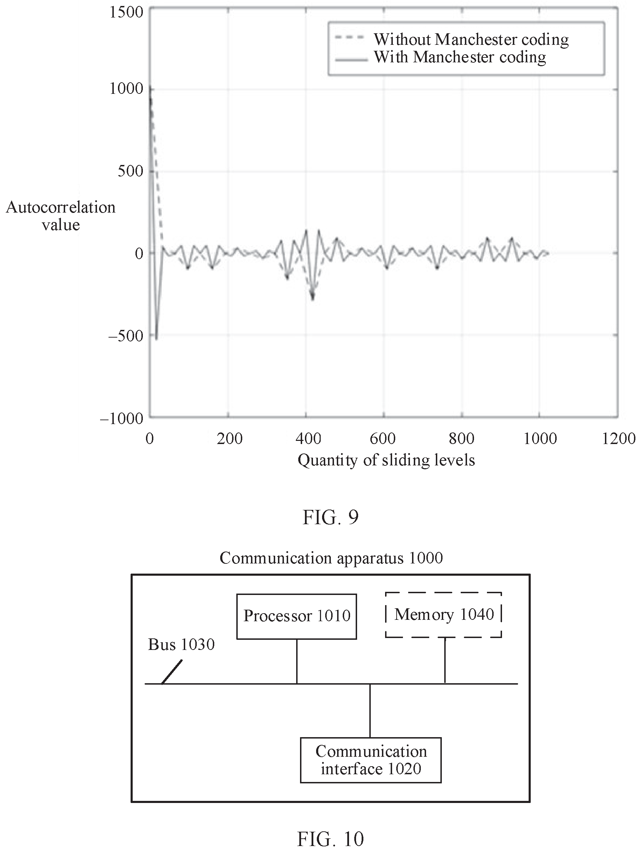

FIG. 9 is a diagram of autocorrelation performance of a base sequence according to an embodiment of this application.

The base sequence in FIG. 9 includes 32 elements, and the base sequence is specifically [0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1]. It may be found that, in comparison with a case in which Manchester coding is not performed on the base sequence and a quantity of level repetitions is 32, a smaller correlation value is obtained by sliding one level on a sequence obtained when Manchester coding with K=1 is performed on the base sequence and the quantity of level repetitions is 16, so that a synchronization position determined by the network device is closer to an ideal synchronization position, and timing precision is greatly improved.

Finally, apparatus embodiments in embodiments of this application are described.

To implement functions in the method provided in this application, both a terminal device and a network device may include a hardware structure and/or a software module, and implement the foregoing functions in a form of a hardware structure, a software module, or a combination of a hardware structure and a software module. Whether a function in the foregoing functions is performed by using the hardware structure, the software module, or the combination of the hardware structure and the software module depends on particular applications and design constraint conditions of the technical solutions.

FIG. 10 is a block diagram of a communication apparatus 1000 according to an embodiment of this application. The communication apparatus 1000 includes a processor 1010 and a communication interface 1020. The processor 1010 and the communication interface 1020 may be connected to each other through a bus 1030. The communication apparatus 1000 may be a terminal device or a network device.

Optionally, the communication apparatus 1000 may further include a memory 1040. The memory 1040 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1040 is configured for related instructions and data.

The processor 1010 may be one or more central processing units (central processing units, CPUs). When the processor 1010 is one CPU, the CPU may be a single-core CPU, or may be a multi-core CPU.

When the communication apparatus 1000 is a terminal device, for example, the processor 1010 is configured to perform the following operations: determining a first sequence; modulating the first sequence and to-be-transmitted data, to generate a first signal; and sending the first signal.

When the communication apparatus 1000 is a network device, for example, the processor 1010 is configured to perform the following operations: receiving a first sequence, processing the first sequence, and the like.

The foregoing content is merely used as an example for description. When the communication apparatus 1000 is a terminal device or a network device, the communication apparatus is responsible for performing a method or steps related to the terminal device or the network device in the foregoing method embodiments.

The foregoing descriptions are merely an example for description. For specific content, refer to the content shown in the foregoing method embodiments. For implementations of the operations in FIG. 10, refer to the corresponding descriptions of the method embodiments shown in FIG. 7 to FIG. 9.

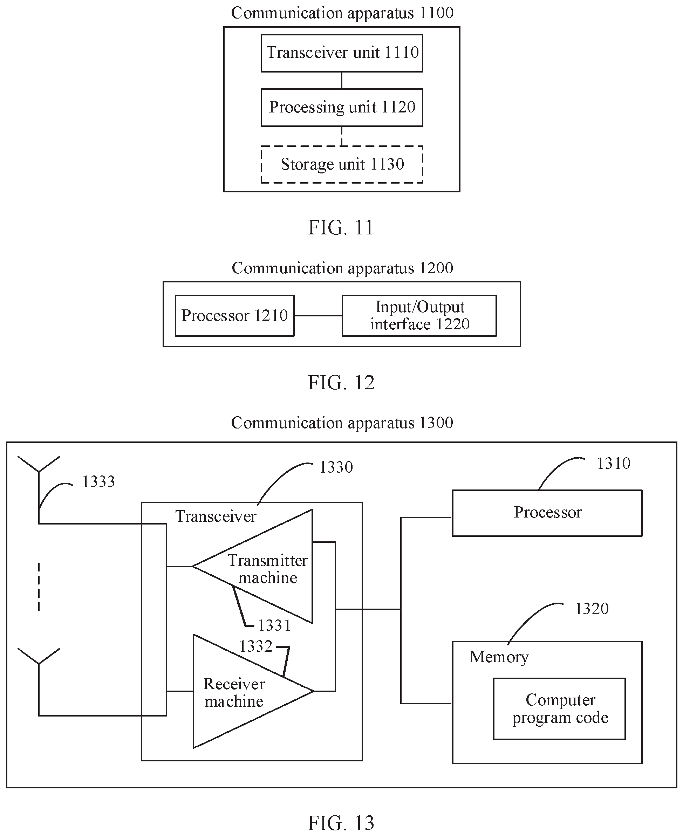

FIG. 11 is a block diagram of a communication apparatus 1100 according to an embodiment of this application. The communication apparatus 1100 may be a terminal device or a network device, or may be a chip or a module in the terminal device or the network device, and is configured to implement the method in the foregoing embodiments.

The communication apparatus 1100 includes a transceiver unit 1110 and a processing unit 1120. The transceiver unit 1110 may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. A unified description is provided herein, and details are not described below again.

When the communication apparatus 1100 is a terminal device, for example, the transceiver unit 1110 is configured to send a first signal. The processing unit 1120 is configured to perform content of steps such as processing and coordination related to the terminal device. For example, the processing unit 1120 is configured to determine a first sequence and the like.

When the communication apparatus 1100 is a network device, for example, the transceiver unit 1110 is configured to receive a first signal. The processing unit 1120 is configured to perform content of steps such as processing and coordination related to the network device. For example, the processing unit 1120 is configured to detect a first signal and the like.

The foregoing content is merely used as an example for description. When the communication apparatus 1100 is a terminal device or a network device, the communication apparatus is responsible for performing a method or steps related to the terminal device or the network device in the foregoing method embodiments.

Optionally, the communication apparatus 1100 further includes a storage unit 1130. The storage unit 1130 is configured to store a program or code used to perform the foregoing method.

The apparatus embodiments shown in FIG. 10 and FIG. 11 are used for implementing content described in FIG. 7 to FIG. 9. For specific execution steps and methods of the apparatuses shown in FIG. 10 and FIG. 11, refer to content described in the foregoing method embodiments.

FIG. 12 is a block diagram of a communication apparatus 1200 according to an embodiment of this application. The communication apparatus 1200 is configured to implement a function of a terminal device or a network device. The communication apparatus 1200 may be a chip in the terminal device or the network device.

The communication apparatus 1200 includes an input/output interface 1220 and a processor 1210. The input/output interface 1220 may be an input/output circuit. The processor 1210 may be a signal processor, a chip, or another integrated circuit that can implement the method in this application. The input/output interface 1220 is configured to input or output a signal or data.

For example, when the communication apparatus 1200 is a terminal device, the input/output interface 1220 is configured to send a first signal. The processor 1210 is configured to: determine a first sequence; and modulate the first sequence and to-be-transmitted data, to generate a first signal. The processor 1210 is further configured to perform some or all steps of any method provided in this application.

For example, the communication apparatus 1200 is a network device, and the input/output interface 1220 is configured to receive a first signal. The processor 1210 is further configured to perform some or all steps of any method provided in this application, for example, process the first signal and the like.

In a possible implementation, the processor 1210 executes instructions stored in a memory, to implement the function implemented by the terminal device or the network device.

Optionally, the communication apparatus 1200 further includes the memory.

Optionally, the processor and the memory are integrated together.

Optionally, the memory is disposed outside the communication apparatus 1200.

In a possible implementation, the processor 1210 may be a logic circuit, and the processor 1210 inputs/outputs a message or signaling through the input/output interface 1220. The logic circuit may be a signal processor, a chip, or another integrated circuit that can implement the method in embodiments of this application.

The foregoing descriptions of the communication apparatus 1200 are merely an example for description. The communication apparatus 1200 can be configured to perform the method in the foregoing embodiments. For specific content, refer to the descriptions of the foregoing method embodiments. Details are not described herein again.

FIG. 13 is a block diagram of a communication apparatus 1300 according to an embodiment of this application. The communication apparatus 1300 may be a network device or a chip. The communication apparatus 1300 is configured to perform operations performed by the network device in the method embodiments shown in FIG. 7 to FIG. 9.

When the communication apparatus 1300 is a network device, for example, a base station. FIG. 13 is a diagram of a simplified structure of the base station. The base station includes a module 1310, a module 1320, and a module 1330. The module 1310 is mainly configured to: perform baseband processing, control the base station, and the like. The module 1310 is usually a control center of the base station, may be usually referred to as a processor, and is configured to control the base station to perform a processing operation on a network device side in the foregoing method embodiments. The module 1320 is mainly configured to store computer program code and data. The module 1330 is mainly configured to: send and receive a radio frequency signal, and perform conversion between the radio frequency signal and a baseband signal. The module 1330 may be usually referred to as a transceiver module, a transceiver machine, a transceiver circuit, a transceiver, or the like. A transceiver module in the module 1330 may also be referred to as a transceiver machine, a transceiver, or the like. The transceiver module includes an antenna 1333 and a radio frequency circuit (not shown in FIG. 13). The radio frequency circuit is mainly configured to perform radio frequency processing.

Optionally, a component for implementing a receiving function in the module 1330 may be considered as a receiver machine, and a component configured to implement a sending function may be considered as a transmitter machine. In other words, the module 1330 includes a receiver machine 1332 and a transmitter machine 1331. The receiver machine may also be referred to as a receiving module, a receiver, a receiver circuit, or the like. The transmitter machine may be referred to as a transmitting module, a transmitter, a transmitter circuit, or the like.

The module 1310 and the module 1320 may include one or more boards, and each board may include one or more processors and one or more memories. The processor is configured to read and run a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver module of the module 1330 is configured to perform a receiving/sending-related process performed by the network device in the embodiments shown in FIG. 7 to FIG. 9. The processor of the module 1310 is configured to perform a processing-related process performed by the network device in the embodiments shown in FIG. 7 to FIG. 9.

FIG. 13 is merely an example rather than a limitation. The network device including the processor, the memory, and the transceiver may not depend on the structures shown in FIG. 10 to FIG. 12.

When the communication apparatus 1300 is a chip, the chip includes a transceiver, a memory, and a processor. The transceiver may be an input/output circuit or a communication interface. The processor is a processor, a microprocessor, or an integrated circuit integrated on the chip. The sending operation of the network device in the foregoing method embodiments may be understood as an output of the chip, and the receiving operation of the network device in the foregoing method embodiments may be understood as an input of the chip.

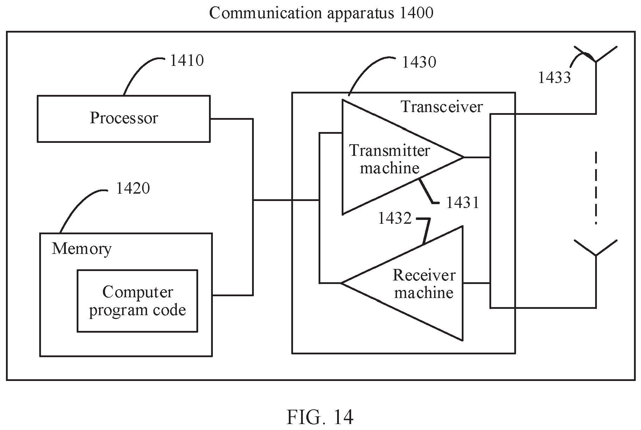

FIG. 14 is a block diagram of a communication apparatus 1400 according to an embodiment of this application. The communication apparatus 1400 may be a terminal device, or a processor or a chip of the terminal device. The communication apparatus 1400 may be configured to perform operations performed by the terminal device in the foregoing method embodiments.

When the communication apparatus 1400 is a terminal device, FIG. 14 is a diagram of a simplified structure of the terminal device. As shown in FIG. 14, the terminal device includes a processor, a memory, and a transceiver. The memory may store computer program code. The transceiver includes a transmitter machine 1431, a receiver machine 1432, a radio frequency circuit (not shown in FIG. 14), an antenna 1433, and an input/output apparatus (not shown in FIG. 14).

The processor is mainly configured to: process a communication protocol and communication data, control the terminal device, run a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may not have an input/output apparatus.

When needing to send data, after performing baseband processing on to-be-sent data, the processor outputs a baseband signal to the radio frequency circuit; and the radio frequency circuit performs radio frequency processing on the baseband signal and then sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

For ease of description, FIG. 14 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver module of the terminal device, and the processor that has a processing function may be considered as a processing module of the terminal device.

As shown in FIG. 14, the terminal device includes a processor 1410, a memory 1420, and a transceiver 1430. The processor 1410 may be referred to as a processing unit, a processing board, a processing module, a processing apparatus, or the like. The transceiver 1430 may also be referred to as a transceiver unit, a transceiver machine, a transceiver apparatus, or the like.

Optionally, a component that is in the transceiver 1430 and that is configured to implement a receiving function may be considered as a receiving module, and a component that is in the transceiver 1430 and that is configured to implement a sending function may be considered as a sending module. In other words, the transceiver 1430 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1410 is configured to perform processing actions of the terminal device in the embodiments shown in FIG. 7 to FIG. 9, and the transceiver 1430 is configured to perform receiving and sending actions of the terminal device in FIG. 4 to FIG. 9.

FIG. 14 is merely an example rather than a limitation. The terminal device including the transceiver module and the processing module may not depend on the structures shown in FIG. 10 to FIG. 12.

When the communication apparatus 1400 is a chip, the chip includes a processor, a memory, and a transceiver. The transceiver may be an input/output circuit or a communication interface. The processor may be a processing module, a microprocessor, or an integrated circuit integrated on the chip.

The sending operation of the terminal device in the foregoing method embodiments may be understood as an output of the chip, and the receiving operation of the terminal device in the foregoing method embodiments may be understood as an input of the chip.

This application further provides a chip, including a processor, configured to: invoke instructions from a memory and run the instructions stored in the memory, so that a communication device on which the chip is installed performs the method in the foregoing examples.

This application further provides another chip, including: an input interface, an output interface, and a processor. The input interface, the output interface, and the processor are connected to each other through an internal connection path. The processor is configured to execute code in a memory. When the code is executed, the processor is configured to perform the method in the foregoing examples. Optionally, the chip further includes the memory. The memory is configured to store a computer program or the code.

This application further provides a processor, configured to be coupled to a memory, and configured to perform a method and a function related to the network device or the terminal device in any one of the foregoing embodiments.

Another embodiment of this application provides a computer program product including instructions. When the computer program product is run on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is run by a computer, the method in the foregoing embodiments is implemented.

A person of ordinary skill in the art may be aware that, units and algorithm steps of examples described in combination with embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatus, and method may be implemented in another manner. For example, the described apparatus embodiments are merely examples. For example, division into the units is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining a first sequence, wherein the first sequence is the same as a sequence obtained by performing Manchester coding on a base sequence, the first sequence comprises N elements, the base sequence comprises $\frac{N}{{2}^{K}}$ elements, any element in the base sequence is represented by 2*^{K}* levels after Manchester coding, the *2^{K}* levels comprise two different levels, the base sequence is related to a generalized Golay sequence, the generalized Golay sequence is generated by an M-stage register, a register depth 2*^{Pₘ}* of an m^{th} stage in the M-stage register is determined by an m^{th} element *Pₘ* in a second sequence [P], N is an even number greater than or equal to 2, K and M are integers greater than or equal to 1, m is an integer less than or equal to M and greater than or equal to 1, *Pₘ* is an integer greater than or equal to 0, and a sum of first $\left⌈M/2\right⌉$ elements in the second sequence is greater than or equal to a sum of last $M - \left⌈M/2\right⌉$ elements;
modulating the first sequence and to-be-transmitted data to generate a first signal; and
sending the first signal.

2. The method according to claim 1, wherein the generalized Golay sequence comprises $\frac{N}{{2}^{K}}$ elements, and that the base sequence is related to the generalized Golay sequence comprises:
an n^{th} element *Aₙ* in the generalized Golay sequence and an n^{th} element *xₙ* in the base sequence satisfy: *Aₙ =* 1 - 2*xₙ,* wherein $0 \leq n \leq \frac{N}{{2}^{K}} - 1$, and *n* is an integer.

3. The method according to claim 1, wherein that the base sequence is related to the generalized Golay sequence comprises:
an n^{th} element *Aₙ* in the generalized Golay sequence and an n^{th} element *xₙ* in the base sequence satisfy: *Aₙ* = 2*xₙ* - 1; or
an n^{th} element *Aₙ* in the generalized Golay sequence and an (N-n-1)^{th} element *x*_{*N-n*-1} in the base sequence satisfy: ${A}_{n} = 1 - 2 {x}_{N - n - 1} , or {A}_{n} = 2 {x}_{N - n - 1} - 1 ,$ wherein $0 \leq n \leq \frac{N}{{2}^{K}} - 1 ,$ and *n* is an integer.

4. The method according to any one of claims 1 to 3, wherein the method further comprises:
receiving first indication information and second indication information, wherein the first indication information indicates the base sequence, and the second indication information indicates K.

5. The method according to any one of claims 1 to 4, wherein the modulating the first sequence and the to-be-transmitted data to generate the first signal comprises:
modulating each element in the first sequence with the to-be-transmitted data after Y consecutive repetitions of the element, to generate the first signal, wherein Y is an integer greater than or equal to 1.

6. The method according to any one of claims 1 to 5, wherein two adjacent levels in the 2*^{K}* levels representing any element in the base sequence are different.

7. The method according to any one of claims 1 to 6, wherein the generalized Golay sequence is determined based on [*W*₁], [*W*₂], and the second sequence [P], and the n^{th} element *Aₙ* in the generalized Golay sequence is equal to *a*_{*M*+1}(*n*), wherein *a*_{*M*+1}(*n*) satisfies the following formulas: ${a}_{m + 1} \left(n\right) = {a}_{m} \left(n\right) + {W}_{m , 1} {b}_{m} \left(n-{2}^{{P}_{m}}\right)$ ${b}_{m + 1} \left(n\right) = {a}_{m} \left(n\right) - {W}_{m , 2} {b}_{m} \left(n-{2}^{{P}_{m}}\right) ,$ wherein *a*₁(*n*) = *δ*(*n*)*, b*₁(*n*) = *δ*(*n*), when *n* = 0, *δ*(*n*) = 1, and when *n* ≠ 0,*δ*(*n*) = 0; and *W*_{*m*,1} ∈ {1, -1}, *W*_{*m*,2} ∈ {1, -1}, $0 \leq n \leq \frac{N}{{2}^{K}} - 1$, and n is an integer.

8. The method according to claim 7, wherein $\frac{N}{{2}^{K}} = 8$, and the base sequence is one of the following:
[0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1].

9. The method according to claim 8, wherein {[*W*₁], [*W*₂], [*P*]} corresponding to the base sequence is one of the following, and the base sequence is in one-to-one correspondence with {[*W*₁], [*W*₂], [*P*]}:
{[-1, 1, 1], [-1, 1, -1], [2, 0, 1]}, {[1, 1, -1], [1, 1, -1], [2, 0, 1]}, {[1, -1, 1], [1, -1, -1], [2, 0, 1]}, {[-1, -1, -1], [-1, -1, -1], [2, 0, 1]}, {[1, -1, 1], [1, -1, -1], [2, 1, 0]}, or {[-1, -1, -1], [-1, -1, -1], [2, 1, 0]}.

10. The method according to claim 7, wherein $\frac{N}{{2}^{K}} = 16$, and the base sequence is one of the following:
[0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1].

11. The method according to claim 10, wherein {[*W*₁], [*W*₂], [*P*]} corresponding to the base sequence is one of the following, and the base sequence is in one-to-one correspondence with {[*W*₁], [*W*₂], [*P*]}:
{[-1, 1, 1, -1], [-1, 1, 1, -1], [3, 2, 0, 1]}, {[-1, 1, -1, 1], [-1, 1, -1, -1], [3, 2, 0, 1]}, {[1, 1, -1, -1], [1, 1, -1, -1], [3, 2, 0, 1]}, {[-1, -1, 1, 1], [-1, -1, 1, -1], [3, 2, 0, 1]}, {[1, -1, 1, -1], [1, -1, 1, -1], [3, 2, 0, 1]}, {[1, -1, -1, 1], [1, -1, -1, -1], [3, 2, 0, 1]}, {[-1, -1, -1, -1], [-1, -1, -1, -1], [3, 2, 0, 1]}, {[1, 1, 1, 1], [1, 1, 1, 1], [3, 2, 0, 1]}, {[-1, 1, 1, -1], [-1, 1, 1, -1], [3, 2, 1, 0]}, {[1, 1, 1, 1], [1, 1, 1, 1], [3, 2, 1, 0]}, {[-1, 1, 1, -1], [-1, 1, 1, -1], [3, 1, 0, 2]}, {[-1, 1, -1, 1], [-1, 1, -1, -1], [3, 1, 0, 2]}, {[1, 1, -1, -1], [1, 1, -1, -1], [3, 1, 0, 2]}, {[-1, -1, -1, 1], [1, -1, -1, - 1], [2, 3, 1, 0]}, {[-1, 1, -1, -1], [1, 1, -1, -1], [2, 3, 1, 0]}, {[1, 1, 1, 1], [1, 1, 1, 1], [3, 1, 0, 2]}, {[-1, -1, 1, 1], [-1, -1, 1, -1], [3, 1, 2, 0]}, {[1, -1, 1, -1], [1, -1, 1, -1], [3, 1, 2, 0]}, {[1, -1, -1, 1], [1, -1, -1, -1], [3, 1, 2, 0]}, {[-1, -1, -1, -1], [-1, -1, -1, -1], [3, 1, 2, 0]}, {[-1, 1, 1, 1], [1, 1, 1, -1], [2, 3, 0, 1]}, {[-1, 1, -1, 1], [-1, 1, -1, -1], [3, 0, 1, 2]}, {[-1, -1, 1, -1], [1, -1, 1, -1], [2, 3, 0, 1]}, {[1, 1, -1, -1], [1, 1, -1, -1], [3, 0, 1, 2]}, {[-1, -1, -1, 1], [1, -1, -1, -1], [2, 3, 0, 1]}, {[1, -1, -1, 1], [1, -1, -1, -1], [3, 0, 1, 2]}, {[-1, 1, -1, -1], [1, 1, -1, -1], [2, 3, 0, 1]}, {[-1, -1, - 1, -1], [-1, -1, -1, -1], [3, 0, 1, 2]}, {[-1, 1, 1, -1], [-1, 1, 1, -1], [3, 0, 2, 1]}, {[-1, 1, -1, 1], [-1, 1, -1, -1], [3, 0, 2, 1]}, {[1, 1, -1, -1], [1, 1, -1, -1], [3, 0, 2, 1]}, {[-1, -1, 1, 1], [-1, -1, 1, - 1], [3, 0, 2, 1]}, {[1, -1, 1, -1], [1, -1, 1, -1], [3, 0, 2, 1]}, {[1, -1, -1, 1], [1, -1, -1, -1], [3, 0, 2, 1]}, {[-1, -1, -1, -1], [-1, -1, -1, -1], [3, 0, 2, 1]}, {[1, 1, 1, 1], [1, 1, 1, 1], [3, 0, 2, 1]}, {[-1, - 1, 1, 1], [-1, -1, 1, -1], [2, 3, 1, 0]}, {[1, -1, 1, -1], [1, -1, 1, -1], [2, 3, 1, 0]}, {[-1, 1, -1, 1], [-1, 1, -1, -1], [1, 3, 2, 0]}, {[1, 1, -1, -1], [1, 1, -1, -1], [1, 3, 2, 0]}, {[-1, 1, -1, 1], [-1, 1, -1, - 1], [0, 3, 1, 2]}, or {[1, 1, -1, -1], [1, 1, -1, -1], [0, 3, 1, 2]}.

12. The method according to claim 7, wherein $\frac{N}{{2}^{K}} = 32$, and the base sequence is one of the following:
[0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
[0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
[0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
[0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
[0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
[0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
[0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
[0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
[0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
[0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
[0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
[0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
[0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
[0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
[0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
[0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
[0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
[0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
[0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
[0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
[0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
[0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
[0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
[0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
[0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
[0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
[0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
[0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
[0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
[0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
[0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
[0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
[0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
[0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
[0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
[0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
[0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
[0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
[0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
[0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
[0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
[0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
[0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
[0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
[0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
[0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
[0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
[0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
[0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
[0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
[0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
[0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
[0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
[0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
[0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
[0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
[0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
[0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
[0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
[0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
[0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
[0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
[0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
[0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
[0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
[0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
[0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
[0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
[0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
[0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
[0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
[0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1].

13. The method according to claim 12, wherein {[*W*₁], [*W*₂], [*P*]} corresponding to the base sequence is one of the following, and the base sequence is in one-to-one correspondence with {[*W*₁], [*W*₂], [*P*]}:
{[-1, 1, 1, 1, 1], [-1, 1, 1, 1, -1], [3, 2, 4, 1, 0]}, {[1, 1, 1, 1, -1], [1, 1, 1, 1, -1], [3, 2, 4, 1, 0]}, {[-1, 1, 1, -1, 1], [-1, 1, 1, -1, -1], [3, 2, 4, 1, 0]}, {[1, 1, 1, -1, -1], [1, 1, 1, -1, -1], [3, 2, 4, 1, 0]}, {[-1, -1, 1, 1, 1], [-1, -1, 1, 1, -1], [3, 2, 4, 1, 0]}, {[1, -1, 1, 1, -1], [1, -1, 1, 1, -1], [3, 2, 4, 1, 0]}, {[-1, -1, 1, -1, 1], [-1, -1, 1, -1, -1], [3, 2, 4, 1, 0]}, {[1, -1, 1, -1, -1], [1, -1, 1, -1, - 1], [3, 2, 4, 1, 0]}, {[-1, 1, 1, 1, 1], [-1, 1, 1, 1, -1], [2, 3, 4, 1, 0]}, {[1, 1, 1, 1, -1], [1, 1, 1, 1, - 1], [2, 3, 4, 1, 0]}, {[-1, -1, 1, 1, 1], [-1, -1, 1, 1, -1], [2, 3, 4, 1, 0]}, {[1, -1, 1, 1, -1], [1, -1, 1, 1, -1], [2, 3, 4, 1, 0]}, {[-1, -1, 1, -1, 1], [-1, -1, 1, -1, -1], [2, 3, 4, 1, 0]}, {[1, -1, 1, -1, -1], [1, -1, 1, -1, -1], [2, 3, 4, 1, 0]}, {[-1, 1, 1, -1, 1], [-1, 1, 1, -1, -1], [4, 1, 2, 3, 0]}, {[1, 1, 1, -1, -1], [1, 1, 1, -1, -1], [4, 1, 2, 3, 0]}, {[1, 1, -1, -1, 1], [1, 1, -1, -1, -1], [4, 1, 2, 3, 0]}, {[-1, 1, -1, - 1, -1], [-1, 1, -1, -1, -1], [4, 1, 2, 3, 0]}, {[-1, -1, 1, -1, 1], [-1, -1, 1, -1, -1], [4, 1, 2, 3, 0]}, {[1, -1, 1, -1, -1], [1, -1, 1, -1, -1], [4, 1, 2, 3, 0]}, {[1, -1, -1, -1, 1], [1, -1, -1, -1, -1], [4, 1, 2, 3, 0]}, {[-1, -1, -1, -1, -1], [-1, -1, -1, -1, -1], [4, 1, 2, 3, 0]}, {[1, 1, -1, 1, 1], [1, 1, -1, 1, - 1], [0, 4, 3, 1, 2]}, {[-1, 1, -1, 1, -1], [-1, 1, -1, 1, -1], [0, 4, 3, 1, 2]}, {[-1, 1, 1, -1, 1], [-1, 1, 1, -1, -1], [0, 4, 3, 2, 1]}, {[1, 1, 1, -1, -1], [1, 1, 1, -1, -1], [0, 4, 3, 2, 1]}, {[1, 1, -1, 1, 1], [1, 1, - 1, 1, -1], [0, 4, 3, 2, 1]}, {[-1, 1, -1, 1, -1], [-1, 1, -1, 1, -1], [0, 4, 3, 2, 1]}, {[-1, 1, 1, 1, 1], [-1, 1, 1, 1, -1], [0, 3, 4, 1, 2]}, {[1, 1, 1, 1, -1], [1, 1, 1, 1, -1], [0, 3, 4, 1, 2]}, {[-1, 1, 1, -1, 1], [-1, 1, 1, -1, -1], [0, 3, 4, 1, 2]}, {[1, 1, 1, -1, -1], [1, 1, 1, -1, -1], [0, 3, 4, 1, 2]}, {[-1, -1, 1, -1, 1], [-1, -1, 1, -1, -1], [0, 3, 4, 1, 2]}, {[1, -1, 1, -1, -1], [1, -1, 1, -1, -1], [0, 3, 4, 1, 2]}, {[-1, 1, 1, 1, 1], [-1, 1, 1, 1, -1], [0, 3, 4, 2, 1]}, {[1, 1, 1, 1, -1], [1, 1, 1, 1, -1], [0, 3, 4, 2, 1]}, {[-1, 1, 1, - 1, 1], [-1, 1, 1, -1, -1], [0, 3, 4, 2, 1]}, {[1, 1, 1, -1, -1], [1, 1, 1, -1, -1], [0, 3, 4, 2, 1]}, {[-1, -1, 1, 1, 1], [-1, -1, 1, 1, -1], [0, 3, 4, 2, 1]}, {[1, -1, 1, 1, -1], [1, -1, 1, 1, -1], [0, 3, 4, 2, 1]}, {[-1, -1, 1, -1, 1], [-1, -1, 1, -1, -1], [0, 3, 4, 2, 1]}, {[1, -1, 1, -1, -1], [1, -1, 1, -1, -1], [0, 3, 4, 2, 1]}, {[1, 1, -1, 1, 1], [1, 1, -1, 1, -1], [3, 2, 1, 4, 0]}, {[-1, 1, -1, 1, -1], [-1, 1, -1, 1, -1], [3, 2, 1, 4, 0]}, {[-1, 1, 1, 1, 1], [-1, 1, 1, 1, -1], [3, 1, 2, 4, 0]}, {[1, 1, 1, 1, -1], [1, 1, 1, 1, -1], [3, 1, 2, 4, 0]}, {[1, 1, -1, -1, 1], [1, 1, -1, -1, -1], [4, 1, 3, 2, 0]}, {[-1, 1, -1, -1, -1], [-1, 1, -1, -1, -1], [4, 1, 3, 2, 0]}, {[1, -1, -1, -1, 1], [1, -1, -1, -1, -1], [4, 1, 3, 2, 0]}, {[-1, -1, -1, -1, -1], [-1, -1, - 1, -1, -1], [4, 1, 3, 2, 0]}, {[1, 1, 1, 1, -1], [1, 1, 1, 1, -1], [4, 2, 3, 1, 0]}, {[-1, 1, 1, 1, 1], [-1, 1, 1, 1, -1], [4, 2, 3, 1, 0]}, {[1, -1, 1, 1, -1], [1, -1, 1, 1, -1], [4, 2, 3, 1, 0]}, {[-1, -1, 1, 1, 1], [-1, -1, 1, 1, -1], [4, 2, 3, 1, 0]}, {[1, 1, 1, -1, -1], [1, 1, 1, -1, -1], [4, 2, 3, 1, 0]}, {[-1, 1, 1, -1, 1], [-1, 1, 1, -1, -1], [4, 2, 3, 1, 0]}, {[1, -1, 1, -1, -1], [1, -1, 1, -1, -1], [4, 2, 3, 1, 0]}, {[-1, -1, 1, -1, 1], [-1, -1, 1, -1, -1], [4, 2, 3, 1, 0]}, {[1, 1, -1, -1, 1], [1, 1, -1, -1, -1], [4, 2, 3, 1, 0]}, {[-1, 1, -1, -1, -1], [-1, 1, -1, -1, -1], [4, 2, 3, 1, 0]}, {[1, -1, -1, -1, 1], [1, -1, -1, -1, -1], [4, 2, 3, 1, 0]}, {[-1, -1, -1, -1, -1], [-1, -1, -1, -1, -1], [4, 2, 3, 1, 0]}, {[1, -1, 1, 1, -1], [1, -1, 1, 1, -1], [3, 4, 1, 2, 0]}, {[-1, -1, 1, 1, 1], [-1, -1, 1, 1, -1], [3, 4, 1, 2, 0]}, {[1, -1, 1, -1, -1], [1, -1, 1, - 1, -1], [3, 4, 1, 2, 0]}, {[-1, -1, 1, -1, 1], [-1, -1, 1, -1, -1], [3, 4, 1, 2, 0]}, {[1, -1, -1, -1, 1], [1, -1, -1, -1, -1], [3, 4, 1, 2, 0]}, {[-1, -1, -1, -1, -1], [-1, -1, -1, -1, -1], [3, 4, 1, 2, 0]}, {[1, 1, - 1, 1, 1], [1, 1, -1, 1, -1], [4, 3, 2, 1, 0]}, {[-1, 1, -1, 1, -1], [-1, 1, -1, 1, -1], [4, 3, 2, 1, 0]}, {[1, -1, -1, 1, 1], [1, -1, -1, 1, -1], [4, 3, 2, 1, 0]}, {[-1, -1, -1, 1, -1], [-1, -1, -1, 1, -1], [4, 3, 2, 1, 0]}, {[1, 1, 1, -1, -1], [1, 1, 1, -1, -1], [4, 3, 2, 1, 0]}, {[-1, 1, 1, -1, 1], [-1, 1, 1, -1, -1], [4, 3, 2, 1, 0]}, {[1, -1, 1, -1, -1], [1, -1, 1, -1, -1], [4, 3, 2, 1, 0]}, {[-1, -1, 1, -1, 1], [-1, -1, 1, -1, -1], [4, 3, 2, 1, 0]}, {[1, -1, -1, 1, 1], [1, -1, -1, 1, -1], [3, 4, 2, 1, 0]}, {[-1, -1, -1, 1, -1], [-1, -1, - 1, 1, -1], [3, 4, 2, 1, 0]}, {[1, -1, 1, -1, -1], [1, -1, 1, -1, -1], [3, 4, 2, 1, 0]}, {[-1, -1, 1, -1, 1], [-1, -1, 1, -1, -1], [3, 4, 2, 1, 0]}, {[1, -1, -1, -1, 1], [1, -1, -1, -1, -1], [3, 4, 2, 1, 0]}, or {[-1, - 1, -1, -1, -1], [-1, -1, -1, -1, -1], [3, 4, 2, 1, 0]}.

14. The method according to claim 7, wherein $\frac{N}{{2}^{K}} = 64$, and the base sequence is one of the following:
[0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
[0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
[0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
[0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
[0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
[0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
[0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
[0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
[0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
[0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
[0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
[0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
[0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
[0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
[0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
[0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
[0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
[0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
[0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
[0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
[0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
[0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
[0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
[0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
[0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
[0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
[0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
[0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
[0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
[0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
[0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
[0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
[0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
[0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
[0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
[0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
[0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0]
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
[0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
[0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
[0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
[0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

15. The method according to claim 14, wherein {[*W*₁], [*W*₂], [*P*]} corresponding to the base sequence is one of the following, and the base sequence is in one-to-one correspondence with {[*W*₁], [*W*₂], [*P*]}:
{[1, -1, 1, -1, 1, 1], [1, -1, 1, -1, 1, -1], [4, 5, 1, 2, 0, 3]}, {[1, -1, 1, -1, 1, -1], [1, -1, 1, -1, 1, -1], [4, 5, 1, 2, 0, 3]}, {[-1, -1, 1, -1, 1, 1], [-1, -1, 1, -1, 1, -1], [4, 5, 1, 2, 0, 3]}, {[-1, -1, 1, -1, 1, -1], [-1, -1, 1, -1, 1, -1], [4, 5, 1, 2, 0, 3]}, {[1, -1, 1, -1, -1, 1], [1, -1, 1, -1, -1, -1], [4, 5, 1, 2, 0, 3]}, {[1, -1, 1, -1, -1, -1], [1, -1, 1, -1, -1, -1], [4, 5, 1, 2, 0, 3]}, {[-1, -1, 1, -1, -1, 1], [-1, -1, 1, -1, -1, -1], [4, 5, 1, 2, 0, 3]}, {[-1, -1, 1, -1, -1, -1], [-1, -1, 1, -1, -1, -1], [4, 5, 1, 2, 0, 3]}, {[-1, 1, 1, 1, 1, -1], [1, 1, 1, 1, 1, -1], [4, 5, 0, 1, 3, 2]}, {[-1, -1, 1, 1, 1, 1], [1, -1, 1, 1, 1, -1], [4, 5, 0, 1, 3, 2]}, {[-1, 1, -1, 1, 1, -1], [1, 1, -1, 1, 1, -1], [4, 5, 0, 1, 3, 2]}, {[-1, -1, - 1, 1, 1, 1], [1, -1, -1, 1, 1, -1], [4, 5, 0, 1, 3, 2]}, {[-1, 1, 1, -1, -1, 1], [1, 1, 1, -1, -1, -1], [4, 5, 0, 1, 3, 2]}, {[-1, -1, 1, -1, -1, -1], [1, -1, 1, -1, -1, -1], [4, 5, 0, 1, 3, 2]}, {[-1, 1, -1, -1, -1, 1], [1, 1, -1, -1, -1, -1], [4, 5, 0, 1, 3, 2]}, {[-1, -1, -1, -1, -1, -1], [1, -1, -1, -1, -1, -1], [4, 5, 0, 1, 3, 2]}, {[-1, -1, -1, 1, -1, -1], [-1, -1, -1, 1, 1, -1], [4, 5, 1, 0, 3, 2]}, {[-1, -1, -1, -1, -1, -1], [-1, -1, -1, -1, 1, -1], [4, 5, 1, 0, 3, 2]}, {[1, -1, -1, 1, 1, -1], [1, -1, -1, 1, -1, -1], [4, 5, 1, 0, 3, 2]}, {[1, -1, -1, -1, 1, -1], [1, -1, -1, -1, -1, -1], [4, 5, 1, 0, 3, 2]}, {[1, 1, -1, 1, -1, 1], [1, 1, -1, 1, -1, -1], [5, 3, 2, 4, 0, 1]}, {[-1, 1, -1, 1, -1, -1], [-1, 1, -1, 1, -1, -1], [5, 3, 2, 4, 0, 1]}, {[1, - 1, -1, 1, -1, 1], [1, -1, -1, 1, -1, -1], [5, 3, 2, 4, 0, 1]}, {[-1, -1, -1, 1, -1, -1], [-1, -1, -1, 1, -1, -1], [5, 3, 2, 4, 0, 1]}, {[1, 1, -1, -1, -1, -1], [1, 1, -1, -1, -1, -1], [5, 3, 2, 4, 0, 1]}, {[-1, 1, -1, -1, -1, 1], [-1, 1, -1, -1, -1, -1], [5, 3, 2, 4, 0, 1]}, {[1, -1, -1, -1, -1, -1], [1, -1, -1, -1, -1, -1], [5, 3, 2, 4, 0, 1]}, {[-1, -1, -1, -1, -1, 1], [-1, -1, -1, -1, -1, -1], [5, 3, 2, 4, 0, 1]}, {[1, 1, -1, 1, -1, 1], [1, 1, -1, 1, -1, -1], [5, 2, 4, 3, 0, 1]}, {[-1, 1, -1, 1, -1, -1], [-1, 1, -1, 1, -1, -1], [5, 2, 4, 3, 0, 1]}, {[1, -1, -1, 1, -1, 1], [1, -1, -1, 1, -1, -1], [5, 2, 4, 3, 0, 1]}, {[-1, -1, -1, 1, -1, -1], [-1, -1, -1, 1, -1, -1], [5, 2, 4, 3, 0, 1]}, {[1, 1, -1, -1, -1, -1], [1, 1, -1, -1, -1, -1], [5, 2, 4, 3, 0, 1]}, {[-1, 1, -1, -1, -1, 1], [-1, 1, -1, -1, -1, -1], [5, 2, 4, 3, 0, 1]}, {[1, -1, -1, -1, -1, -1], [1, - 1, -1, -1, -1, -1], [5, 2, 4, 3, 0, 1]}, {[-1, -1, -1, -1, -1, 1], [-1, -1, -1, -1, -1, -1], [5, 2, 4, 3, 0, 1]}, {[1, -1, -1, 1, -1, 1], [1, -1, -1, 1, -1, -1], [3, 4, 2, 5, 0, 1]}, {[-1, -1, -1, 1, -1, -1], [-1, -1, -1, 1, -1, -1], [3, 4, 2, 5, 0, 1]}, {[1, -1, -1, -1, -1, -1], [1, -1, -1, -1, -1, -1], [3, 4, 2, 5, 0, 1]}, {[-1, -1, -1, -1, -1, 1], [-1, -1, -1, -1, -1, -1], [3, 4, 2, 5, 0, 1]}, {[-1, 1, 1, 1, 1, 1], [1, 1, 1, 1, 1, -1], [4, 5, 0, 3, 1, 2]}, {[-1, 1, 1, 1, 1, -1], [1, 1, 1, 1, 1, -1], [4, 5, 0, 3, 1, 2]}, {[-1, -1, 1, 1, 1, 1], [1, -1, 1, 1, 1, -1], [4, 5, 0, 3, 1, 2]}, {[-1, -1, 1, 1, 1, -1], [1, -1, 1, 1, 1, -1], [4, 5, 0, 3, 1, 2]}, {[-1, 1, -1, 1, 1, 1], [1, 1, -1, 1, 1, -1], [4, 5, 0, 3, 1, 2]}, {[-1, 1, -1, 1, 1, -1], [1, 1, -1, 1, 1, -1], [4, 5, 0, 3, 1, 2]}, {[-1, -1, -1, 1, 1, 1], [1, -1, -1, 1, 1, -1], [4, 5, 0, 3, 1, 2]}, {[-1, -1, -1, 1, 1, - 1], [1, -1, -1, 1, 1, -1], [4, 5, 0, 3, 1, 2]}, {[-1, 1, 1, -1, -1, 1], [1, 1, 1, -1, -1, -1], [4, 5, 0, 3, 1, 2]}, {[-1, 1, 1, -1, -1, -1], [1, 1, 1, -1, -1, -1], [4, 5, 0, 3, 1, 2]}, {[-1, -1, 1, -1, -1, 1], [1, -1, 1, -1, -1, -1], [4, 5, 0, 3, 1, 2]}, {[-1, -1, 1, -1, -1, -1], [1, -1, 1, -1, -1, -1], [4, 5, 0, 3, 1, 2]}, {[-1, 1, -1, -1, -1, 1], [1, 1, -1, -1, -1, -1], [4, 5, 0, 3, 1, 2]}, {[-1, 1, -1, -1, -1, -1], [1, 1, -1, -1, - 1, -1], [4, 5, 0, 3, 1, 2]}, {[-1, -1, -1, -1, -1, 1], [1, -1, -1, -1, -1, -1], [4, 5, 0, 3, 1, 2]}, {[-1, - 1, -1, -1, -1, -1], [1, -1, -1, -1, -1, -1], [4, 5, 0, 3, 1, 2]}, {[1, -1, -1, 1, -1, 1], [1, -1, -1, 1, -1, -1], [4, 5, 2, 3, 0, 1]}, {[-1, -1, -1, 1, -1, -1], [-1, -1, -1, 1, -1, -1], [4, 5, 2, 3, 0, 1]}, {[1, -1, - 1, -1, -1, -1], [1, -1, -1, -1, -1, -1], [4, 5, 2, 3, 0, 1]}, or {[-1, -1, -1, -1, -1, 1], [-1, -1, -1, -1, -1, -1], [4, 5, 2, 3, 0, 1]}.

16. A communication method, comprising:
receiving a first signal, wherein the first signal comprises uplink data and a first sequence, the first sequence is the same as a sequence obtained by performing Manchester coding on a base sequence, the first sequence comprises N elements, the base sequence comprises $\frac{N}{{2}^{K}}$ elements, any element in the base sequence is represented by 2*^{K}* levels after Manchester coding, the 2*^{K}* levels comprise two different levels, the base sequence is related to a generalized Golay sequence, the generalized Golay sequence is generated by an M-stage register, a register depth 2*^{Pₘ}* of an m^{th} stage in the M-stage register is determined by an m^{th} element *Pₘ* in a second sequence [P], N is an even number greater than or equal to 2, K and M are integers greater than or equal to 1, m is an integer less than or equal to M and greater than or equal to 1, *Pₘ* is an integer greater than or equal to 0, and a sum of first $\left⌈M/2\right⌉$ elements in the second sequence is greater than or equal to a sum of last $M - \left⌈M/2\right⌉$ elements; and
detecting the first signal.

17. The method according to claim 16, wherein the detecting the first signal comprises:
detecting the first signal to determine a start position or an end position of the first sequence in the first signal.

18. The method according to claim 16 or 17, wherein the generalized Golay sequence comprises $\frac{N}{{2}^{K}}$ elements, and that the base sequence is related to the generalized Golay sequence comprises:
an n^{th} element *Aₙ* in the generalized Golay sequence and an n^{th} element *xₙ* in the base sequence satisfy: *Aₙ* = 1 - 2*xₙ*, wherein $0 \leq n \leq \frac{N}{{2}^{K}} - 1$, and *n* is an integer.

19. The method according to any one of claims 16 to 18, wherein two adjacent levels in the 2*^{K}* levels representing any element in the base sequence are different.

20. The method according to any one of claims 16 to 19, wherein the generalized Golay sequence is determined based on [*W*₁], [*W*₂], and the second sequence [P], and the n^{th} element *Aₙ* in the generalized Golay sequence is equal to *a*_{*M*+1}(*n*), wherein *a*_{*M*+1}(*n*) satisfies the following formulas: ${a}_{m + 1} \left(n\right) = {a}_{m} \left(n\right) + {W}_{m , 1} {b}_{m} \left(n-{2}^{{P}_{m}}\right)$ ${b}_{m + 1} \left(n\right) = {a}_{m} \left(n\right) - {W}_{m , 2} {b}_{m} \left(n-{2}^{{P}_{m}}\right) ,$ wherein *a*₁(*n*) = *δ*(*n*), *b*₁(*n*) = *δ*(*n*), when *n* = 0, *δ*(*n*) = 1, and when *n* ≠ 0, *δ*(*n*) = 0 ; and *W*_{*m*,1} ∈ {1, -1}, *W*_{*m*,2} ∈ {1, -1}, $0 \leq n \leq \frac{N}{{2}^{K}} - 1$, and n is an integer.

21. The method according to claim 20, wherein $\frac{N}{{2}^{K}} = 8$, and the base sequence is one of the following:
[0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1].

22. The method according to claim 21, wherein {[*W*₁], [*W*₂], [*P*]} corresponding to the base sequence is one of the following, and the base sequence is in one-to-one correspondence with {[*W*₁], [*W*₂], [*P*]}:
{[-1, 1, 1], [-1, 1, -1], [2, 0, 1]}, {[1, 1, -1], [1, 1, -1], [2, 0, 1]}, {[1, -1, 1], [1, -1, -1], [2, 0, 1]}, {[-1, -1, -1], [-1, -1, -1], [2, 0, 1]}, {[1, -1, 1], [1, -1, -1], [2, 1, 0]}, or {[-1, -1, -1], [-1, -1, -1], [2, 1, 0]}.

23. The method according to claim 20, wherein $\frac{N}{{2}^{K}} = 16$, the base sequence is one of the following, and the base sequence is in one-to-one correspondence with {[*W*₁], [*W*₂], [*P*]}:
[0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1].

24. The method according to claim 23, wherein {[*W*₁], [*W*₂], [*P*]} corresponding to the base sequence is one of the following, and the base sequence is in one-to-one correspondence with {[*W*₁], [*W*₂], [*P*]}:
{[-1, 1, 1, -1], [-1, 1, 1, -1], [3, 2, 0, 1]}, {[-1, 1, -1, 1], [-1, 1, -1, -1], [3, 2, 0, 1]}, {[1, 1, -1, -1], [1, 1, -1, -1], [3, 2, 0, 1]}, {[-1, -1, 1, 1], [-1, -1, 1, -1], [3, 2, 0, 1]}, {[1, -1, 1, -1], [1, -1, 1, -1], [3, 2, 0, 1]}, {[1, -1, -1, 1], [1, -1, -1, -1], [3, 2, 0, 1]}, {[-1, -1, -1, -1], [-1, -1, -1, -1], [3, 2, 0, 1]}, {[1, 1, 1, 1], [1, 1, 1, 1], [3, 2, 0, 1]}, {[-1, 1, 1, -1], [-1, 1, 1, -1], [3, 2, 1, 0]}, {[1, 1, 1, 1], [1, 1, 1, 1], [3, 2, 1, 0]}, {[-1, 1, 1, -1], [-1, 1, 1, -1], [3, 1, 0, 2]}, {[-1, 1, -1, 1], [-1, 1, -1, -1], [3, 1, 0, 2]}, {[1, 1, -1, -1], [1, 1, -1, -1], [3, 1, 0, 2]}, {[-1, -1, -1, 1], [1, -1, -1, - 1], [2, 3, 1, 0]}, {[-1, 1, -1, -1], [1, 1, -1, -1], [2, 3, 1, 0]}, {[1, 1, 1, 1], [1, 1, 1, 1], [3, 1, 0, 2]}, {[-1, -1, 1, 1], [-1, -1, 1, -1], [3, 1, 2, 0]}, {[1, -1, 1, -1], [1, -1, 1, -1], [3, 1, 2, 0]}, {[1, -1, -1, 1], [1, -1, -1, -1], [3, 1, 2, 0]}, {[-1, -1, -1, -1], [-1, -1, -1, -1], [3, 1, 2, 0]}, {[-1, 1, 1, 1], [1, 1, 1, -1], [2, 3, 0, 1]}, {[-1, 1, -1, 1], [-1, 1, -1, -1], [3, 0, 1, 2]}, {[-1, -1, 1, -1], [1, -1, 1, -1], [2, 3, 0, 1]}, {[1, 1, -1, -1], [1, 1, -1, -1], [3, 0, 1, 2]}, {[-1, -1, -1, 1], [1, -1, -1, -1], [2, 3, 0, 1]}, {[1, -1, -1, 1], [1, -1, -1, -1], [3, 0, 1, 2]}, {[-1, 1, -1, -1], [1, 1, -1, -1], [2, 3, 0, 1]}, {[-1, -1, - 1, -1], [-1, -1, -1, -1], [3, 0, 1, 2]}, {[-1, 1, 1, -1], [-1, 1, 1, -1], [3, 0, 2, 1]}, {[-1, 1, -1, 1], [-1, 1, -1, -1], [3, 0, 2, 1]}, {[1, 1, -1, -1], [1, 1, -1, -1], [3, 0, 2, 1]}, {[-1, -1, 1, 1], [-1, -1, 1, - 1], [3, 0, 2, 1]}, {[1, -1, 1, -1], [1, -1, 1, -1], [3, 0, 2, 1]}, {[1, -1, -1, 1], [1, -1, -1, -1], [3, 0, 2, 1]}, {[-1, -1, -1, -1], [-1, -1, -1, -1], [3, 0, 2, 1]}, {[1, 1, 1, 1], [1, 1, 1, 1], [3, 0, 2, 1]}, {[-1, - 1, 1, 1], [-1, -1, 1, -1], [2, 3, 1, 0]}, {[1, -1, 1, -1], [1, -1, 1, -1], [2, 3, 1, 0]}, {[-1, 1, -1, 1], [-1, 1, -1, -1], [1, 3, 2, 0]}, {[1, 1, -1, -1], [1, 1, -1, -1], [1, 3, 2, 0]}, {[-1, 1, -1, 1], [-1, 1, -1, - 1], [0, 3, 1, 2]}, or {[1, 1, -1, -1], [1, 1, -1, -1], [0, 3, 1, 2]}.

25. The method according to claim 20, wherein $\frac{N}{{2}^{K}} = 32$, and the base sequence is one of the following:
[0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
[0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
[0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
[0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
[0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
[0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
[0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
[0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
[0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
[0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
[0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
[0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
[0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
[0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
[0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
[0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
[0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
[0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
[0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
[0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
[0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
[0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
[0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
[0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
[0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
[0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
[0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
[0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
[0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
[0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
[0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
[0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
[0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
[0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
[0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
[0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
[0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
[0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
[0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
[0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
[0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
[0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
[0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
[0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
[0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
[0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
[0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
[0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
[0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
[0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
[0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
[0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
[0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
[0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
[0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
[0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
[0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
[0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
[0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
[0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
[0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
[0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
[0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
[0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
[0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
[0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
[0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
[0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
[0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
[0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
[0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
[0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1].

26. The method according to claim 25, wherein {[*W*₁], [*W*₂], [*P*]} corresponding to the base sequence is one of the following, and the base sequence is in one-to-one correspondence with {[*W*₁], [*W*₂], [*P*]}:
{[-1, 1, 1, 1, 1], [-1, 1, 1, 1, -1], [3, 2, 4, 1, 0]}, {[1, 1, 1, 1, -1], [1, 1, 1, 1, -1], [3, 2, 4, 1, 0]}, {[-1, 1, 1, -1, 1], [-1, 1, 1, -1, -1], [3, 2, 4, 1, 0]}, {[1, 1, 1, -1, -1], [1, 1, 1, -1, -1], [3, 2, 4, 1, 0]}, {[-1, -1, 1, 1, 1], [-1, -1, 1, 1, -1], [3, 2, 4, 1, 0]}, {[1, -1, 1, 1, -1], [1, -1, 1, 1, -1], [3, 2, 4, 1, 0]}, {[-1, -1, 1, -1, 1], [-1, -1, 1, -1, -1], [3, 2, 4, 1, 0]}, {[1, -1, 1, -1, -1], [1, -1, 1, -1, - 1], [3, 2, 4, 1, 0]}, {[-1, 1, 1, 1, 1], [-1, 1, 1, 1, -1], [2, 3, 4, 1, 0]}, {[1, 1, 1, 1, -1], [1, 1, 1, 1, - 1], [2, 3, 4, 1, 0]}, {[-1, -1, 1, 1, 1], [-1, -1, 1, 1, -1], [2, 3, 4, 1, 0]}, {[1, -1, 1, 1, -1], [1, -1, 1, 1, -1], [2, 3, 4, 1, 0]}, {[-1, -1, 1, -1, 1], [-1, -1, 1, -1, -1], [2, 3, 4, 1, 0]}, {[1, -1, 1, -1, -1], [1, -1, 1, -1, -1], [2, 3, 4, 1, 0]}, {[-1, 1, 1, -1, 1], [-1, 1, 1, -1, -1], [4, 1, 2, 3, 0]}, {[1, 1, 1, -1, -1], [1, 1, 1, -1, -1], [4, 1, 2, 3, 0]}, {[1, 1, -1, -1, 1], [1, 1, -1, -1, -1], [4, 1, 2, 3, 0]}, {[-1, 1, -1, - 1, -1], [-1, 1, -1, -1, -1], [4, 1, 2, 3, 0]}, {[-1, -1, 1, -1, 1], [-1, -1, 1, -1, -1], [4, 1, 2, 3, 0]}, {[1, -1, 1, -1, -1], [1, -1, 1, -1, -1], [4, 1, 2, 3, 0]}, {[1, -1, -1, -1, 1], [1, -1, -1, -1, -1], [4, 1, 2, 3, 0]}, {[-1, -1, -1, -1, -1], [-1, -1, -1, -1, -1], [4, 1, 2, 3, 0]}, {[1, 1, -1, 1, 1], [1, 1, -1, 1, - 1], [0, 4, 3, 1, 2]}, {[-1, 1, -1, 1, -1], [-1, 1, -1, 1, -1], [0, 4, 3, 1, 2]}, {[-1, 1, 1, -1, 1], [-1, 1, 1, -1, -1], [0, 4, 3, 2, 1]}, {[1, 1, 1, -1, -1], [1, 1, 1, -1, -1], [0, 4, 3, 2, 1]}, {[1, 1, -1, 1, 1], [1, 1, - 1, 1, -1], [0, 4, 3, 2, 1]}, {[-1, 1, -1, 1, -1], [-1, 1, -1, 1, -1], [0, 4, 3, 2, 1]}, {[-1, 1, 1, 1, 1], [-1, 1, 1, 1, -1], [0, 3, 4, 1, 2]}, {[1, 1, 1, 1, -1], [1, 1, 1, 1, -1], [0, 3, 4, 1, 2]}, {[-1, 1, 1, -1, 1], [-1, 1, 1, -1, -1], [0, 3, 4, 1, 2]}, {[1, 1, 1, -1, -1], [1, 1, 1, -1, -1], [0, 3, 4, 1, 2]}, {[-1, -1, 1, -1, 1], [-1, -1, 1, -1, -1], [0, 3, 4, 1, 2]}, {[1, -1, 1, -1, -1], [1, -1, 1, -1, -1], [0, 3, 4, 1, 2]}, {[-1, 1, 1, 1, 1], [-1, 1, 1, 1, -1], [0, 3, 4, 2, 1]}, {[1, 1, 1, 1, -1], [1, 1, 1, 1, -1], [0, 3, 4, 2, 1]}, {[-1, 1, 1, - 1, 1], [-1, 1, 1, -1, -1], [0, 3, 4, 2, 1]}, {[1, 1, 1, -1, -1], [1, 1, 1, -1, -1], [0, 3, 4, 2, 1]}, {[-1, -1, 1, 1, 1], [-1, -1, 1, 1, -1], [0, 3, 4, 2, 1]}, {[1, -1, 1, 1, -1], [1, -1, 1, 1, -1], [0, 3, 4, 2, 1]}, {[-1, -1, 1, -1, 1], [-1, -1, 1, -1, -1], [0, 3, 4, 2, 1]}, {[1, -1, 1, -1, -1], [1, -1, 1, -1, -1], [0, 3, 4, 2, 1]}, {[1, 1, -1, 1, 1], [1, 1, -1, 1, -1], [3, 2, 1, 4, 0]}, {[-1, 1, -1, 1, -1], [-1, 1, -1, 1, -1], [3, 2, 1, 4, 0]}, {[-1, 1, 1, 1, 1], [-1, 1, 1, 1, -1], [3, 1, 2, 4, 0]}, {[1, 1, 1, 1, -1], [1, 1, 1, 1, -1], [3, 1, 2, 4, 0]}, {[1, 1, -1, -1, 1], [1, 1, -1, -1, -1], [4, 1, 3, 2, 0]}, {[-1, 1, -1, -1, -1], [-1, 1, -1, -1, -1], [4, 1, 3, 2, 0]}, {[1, -1, -1, -1, 1], [1, -1, -1, -1, -1], [4, 1, 3, 2, 0]}, {[-1, -1, -1, -1, -1], [-1, -1, - 1, -1, -1], [4, 1, 3, 2, 0]}, {[1, 1, 1, 1, -1], [1, 1, 1, 1, -1], [4, 2, 3, 1, 0]}, {[-1, 1, 1, 1, 1], [-1, 1, 1, 1, -1], [4, 2, 3, 1, 0]}, {[1, -1, 1, 1, -1], [1, -1, 1, 1, -1], [4, 2, 3, 1, 0]}, {[-1, -1, 1, 1, 1], [-1, -1, 1, 1, -1], [4, 2, 3, 1, 0]}, {[1, 1, 1, -1, -1], [1, 1, 1, -1, -1], [4, 2, 3, 1, 0]}, {[-1, 1, 1, -1, 1], [-1, 1, 1, -1, -1], [4, 2, 3, 1, 0]}, {[1, -1, 1, -1, -1], [1, -1, 1, -1, -1], [4, 2, 3, 1, 0]}, {[-1, -1, 1, -1, 1], [-1, -1, 1, -1, -1], [4, 2, 3, 1, 0]}, {[1, 1, -1, -1, 1], [1, 1, -1, -1, -1], [4, 2, 3, 1, 0]}, {[-1, 1, -1, -1, -1], [-1, 1, -1, -1, -1], [4, 2, 3, 1, 0]}, {[1, -1, -1, -1, 1], [1, -1, -1, -1, -1], [4, 2, 3, 1, 0]}, {[-1, -1, -1, -1, -1], [-1, -1, -1, -1, -1], [4, 2, 3, 1, 0]}, {[1, -1, 1, 1, -1], [1, -1, 1, 1, -1], [3, 4, 1, 2, 0]}, {[-1, -1, 1, 1, 1], [-1, -1, 1, 1, -1], [3, 4, 1, 2, 0]}, {[1, -1, 1, -1, -1], [1, -1, 1, - 1, -1], [3, 4, 1, 2, 0]}, {[-1, -1, 1, -1, 1], [-1, -1, 1, -1, -1], [3, 4, 1, 2, 0]}, {[1, -1, -1, -1, 1], [1, -1, -1, -1, -1], [3, 4, 1, 2, 0]}, {[-1, -1, -1, -1, -1], [-1, -1, -1, -1, -1], [3, 4, 1, 2, 0]}, {[1, 1, - 1, 1, 1], [1, 1, -1, 1, -1], [4, 3, 2, 1, 0]}, {[-1, 1, -1, 1, -1], [-1, 1, -1, 1, -1], [4, 3, 2, 1, 0]}, {[1, -1, -1, 1, 1], [1, -1, -1, 1, -1], [4, 3, 2, 1, 0]}, {[-1, -1, -1, 1, -1], [-1, -1, -1, 1, -1], [4, 3, 2, 1, 0]}, {[1, 1, 1, -1, -1], [1, 1, 1, -1, -1], [4, 3, 2, 1, 0]}, {[-1, 1, 1, -1, 1], [-1, 1, 1, -1, -1], [4, 3, 2, 1, 0]}, {[1, -1, 1, -1, -1], [1, -1, 1, -1, -1], [4, 3, 2, 1, 0]}, {[-1, -1, 1, -1, 1], [-1, -1, 1, -1, -1], [4, 3, 2, 1, 0]}, {[1, -1, -1, 1, 1], [1, -1, -1, 1, -1], [3, 4, 2, 1, 0]}, {[-1, -1, -1, 1, -1], [-1, -1, - 1, 1, -1], [3, 4, 2, 1, 0]}, {[1, -1, 1, -1, -1], [1, -1, 1, -1, -1], [3, 4, 2, 1, 0]}, {[-1, -1, 1, -1, 1], [-1, -1, 1, -1, -1], [3, 4, 2, 1, 0]}, {[1, -1, -1, -1, 1], [1, -1, -1, -1, -1], [3, 4, 2, 1, 0]}, or {[-1, - 1, -1, -1, -1], [-1, -1, -1, -1, -1], [3, 4, 2, 1, 0]}.

27. The method according to claim 20, wherein $\frac{N}{{2}^{K}} = 64$, and the base sequence is one of the following:
[0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
[0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
[0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
[0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
[0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
[0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
[0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
[0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
[0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
[0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
[0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
[0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
[0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
[0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
[0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
[0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
[0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
[0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
[0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
[0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
[0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
[0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
[0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
[0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
[0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
[0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
[0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
[0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
[0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
[0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
[0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
[0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
[0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
[0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
[0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
[0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
[0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
[0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
[0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
[0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
[0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

28. The method according to claim 27, wherein {[*W*₁], [*W*₂], [*P*]} corresponding to the base sequence is one of the following, and the base sequence is in one-to-one correspondence with {[*W*₁], [*W*₂], [*P*]}:
{[1, -1, 1, -1, 1, 1], [1, -1, 1, -1, 1, -1], [4, 5, 1, 2, 0, 3]}, {[1, -1, 1, -1, 1, -1], [1, -1, 1, -1, 1, -1], [4, 5, 1, 2, 0, 3]}, {[-1, -1, 1, -1, 1, 1], [-1, -1, 1, -1, 1, -1], [4, 5, 1, 2, 0, 3]}, {[-1, -1, 1, -1, 1, -1], [-1, -1, 1, -1, 1, -1], [4, 5, 1, 2, 0, 3]}, {[1, -1, 1, -1, -1, 1], [1, -1, 1, -1, -1, -1], [4, 5, 1, 2, 0, 3]}, {[1, -1, 1, -1, -1, -1], [1, -1, 1, -1, -1, -1], [4, 5, 1, 2, 0, 3]}, {[-1, -1, 1, -1, -1, 1], [-1, -1, 1, -1, -1, -1], [4, 5, 1, 2, 0, 3]}, {[-1, -1, 1, -1, -1, -1], [-1, -1, 1, -1, -1, -1], [4, 5, 1, 2, 0, 3]}, {[-1, 1, 1, 1, 1, -1], [1, 1, 1, 1, 1, -1], [4, 5, 0, 1, 3, 2]}, {[-1, -1, 1, 1, 1, 1], [1, -1, 1, 1, 1, -1], [4, 5, 0, 1, 3, 2]}, {[-1, 1, -1, 1, 1, -1], [1, 1, -1, 1, 1, -1], [4, 5, 0, 1, 3, 2]}, {[-1, -1, - 1, 1, 1, 1], [1, -1, -1, 1, 1, -1], [4, 5, 0, 1, 3, 2]}, {[-1, 1, 1, -1, -1, 1], [1, 1, 1, -1, -1, -1], [4, 5, 0, 1, 3, 2]}, {[-1, -1, 1, -1, -1, -1], [1, -1, 1, -1, -1, -1], [4, 5, 0, 1, 3, 2]}, {[-1, 1, -1, -1, -1, 1], [1, 1, -1, -1, -1, -1], [4, 5, 0, 1, 3, 2]}, {[-1, -1, -1, -1, -1, -1], [1, -1, -1, -1, -1, -1], [4, 5, 0, 1, 3, 2]}, {[-1, -1, -1, 1, -1, -1], [-1, -1, -1, 1, 1, -1], [4, 5, 1, 0, 3, 2]}, {[-1, -1, -1, -1, -1, -1], [-1, -1, -1, -1, 1, -1], [4, 5, 1, 0, 3, 2]}, {[1, -1, -1, 1, 1, -1], [1, -1, -1, 1, -1, -1], [4, 5, 1, 0, 3, 2]}, {[1, -1, -1, -1, 1, -1], [1, -1, -1, -1, -1, -1], [4, 5, 1, 0, 3, 2]}, {[1, 1, -1, 1, -1, 1], [1, 1, -1, 1, -1, -1], [5, 3, 2, 4, 0, 1]}, {[-1, 1, -1, 1, -1, -1], [-1, 1, -1, 1, -1, -1], [5, 3, 2, 4, 0, 1]}, {[1, - 1, -1, 1, -1, 1], [1, -1, -1, 1, -1, -1], [5, 3, 2, 4, 0, 1]}, {[-1, -1, -1, 1, -1, -1], [-1, -1, -1, 1, -1, -1], [5, 3, 2, 4, 0, 1]}, {[1, 1, -1, -1, -1, -1], [1, 1, -1, -1, -1, -1], [5, 3, 2, 4, 0, 1]}, {[-1, 1, -1, -1, -1, 1], [-1, 1, -1, -1, -1, -1], [5, 3, 2, 4, 0, 1]}, {[1, -1, -1, -1, -1, -1], [1, -1, -1, -1, -1, -1], [5, 3, 2, 4, 0, 1]}, {[-1, -1, -1, -1, -1, 1], [-1, -1, -1, -1, -1, -1], [5, 3, 2, 4, 0, 1]}, {[1, 1, -1, 1, -1, 1], [1, 1, -1, 1, -1, -1], [5, 2, 4, 3, 0, 1]}, {[-1, 1, -1, 1, -1, -1], [-1, 1, -1, 1, -1, -1], [5, 2, 4, 3, 0, 1]}, {[1, -1, -1, 1, -1, 1], [1, -1, -1, 1, -1, -1], [5, 2, 4, 3, 0, 1]}, {[-1, -1, -1, 1, -1, -1], [-1, -1, -1, 1, -1, -1], [5, 2, 4, 3, 0, 1]}, {[1, 1, -1, -1, -1, -1], [1, 1, -1, -1, -1, -1], [5, 2, 4, 3, 0, 1]}, {[-1, 1, -1, -1, -1, 1], [-1, 1, -1, -1, -1, -1], [5, 2, 4, 3, 0, 1]}, {[1, -1, -1, -1, -1, -1], [1, - 1, -1, -1, -1, -1], [5, 2, 4, 3, 0, 1]}, {[-1, -1, -1, -1, -1, 1], [-1, -1, -1, -1, -1, -1], [5, 2, 4, 3, 0, 1]}, {[1, -1, -1, 1, -1, 1], [1, -1, -1, 1, -1, -1], [3, 4, 2, 5, 0, 1]}, {[-1, -1, -1, 1, -1, -1], [-1, -1, -1, 1, -1, -1], [3, 4, 2, 5, 0, 1]}, {[1, -1, -1, -1, -1, -1], [1, -1, -1, -1, -1, -1], [3, 4, 2, 5, 0, 1]}, {[-1, -1, -1, -1, -1, 1], [-1, -1, -1, -1, -1, -1], [3, 4, 2, 5, 0, 1]}, {[-1, 1, 1, 1, 1, 1], [1, 1, 1, 1, 1, -1], [4, 5, 0, 3, 1, 2]}, {[-1, 1, 1, 1, 1, -1], [1, 1, 1, 1, 1, -1], [4, 5, 0, 3, 1, 2]}, {[-1, -1, 1, 1, 1, 1], [1, -1, 1, 1, 1, -1], [4, 5, 0, 3, 1, 2]}, {[-1, -1, 1, 1, 1, -1], [1, -1, 1, 1, 1, -1], [4, 5, 0, 3, 1, 2]}, {[-1, 1, -1, 1, 1, 1], [1, 1, -1, 1, 1, -1], [4, 5, 0, 3, 1, 2]}, {[-1, 1, -1, 1, 1, -1], [1, 1, -1, 1, 1, -1], [4, 5, 0, 3, 1, 2]}, {[-1, -1, -1, 1, 1, 1], [1, -1, -1, 1, 1, -1], [4, 5, 0, 3, 1, 2]}, {[-1, -1, -1, 1, 1, - 1], [1, -1, -1, 1, 1, -1], [4, 5, 0, 3, 1, 2]}, {[-1, 1, 1, -1, -1, 1], [1, 1, 1, -1, -1, -1], [4, 5, 0, 3, 1, 2]}, {[-1, 1, 1, -1, -1, -1], [1, 1, 1, -1, -1, -1], [4, 5, 0, 3, 1, 2]}, {[-1, -1, 1, -1, -1, 1], [1, -1, 1, -1, -1, -1], [4, 5, 0, 3, 1, 2]}, {[-1, -1, 1, -1, -1, -1], [1, -1, 1, -1, -1, -1], [4, 5, 0, 3, 1, 2]}, {[-1, 1, -1, -1, -1, 1], [1, 1, -1, -1, -1, -1], [4, 5, 0, 3, 1, 2]}, {[-1, 1, -1, -1, -1, -1], [1, 1, -1, -1, - 1, -1], [4, 5, 0, 3, 1, 2]}, {[-1, -1, -1, -1, -1, 1], [1, -1, -1, -1, -1, -1], [4, 5, 0, 3, 1, 2]}, {[-1, - 1, -1, -1, -1, -1], [1, -1, -1, -1, -1, -1], [4, 5, 0, 3, 1, 2]}, {[1, -1, -1, 1, -1, 1], [1, -1, -1, 1, -1, -1], [4, 5, 2, 3, 0, 1]}, {[-1, -1, -1, 1, -1, -1], [-1, -1, -1, 1, -1, -1], [4, 5, 2, 3, 0, 1]}, {[1, -1, - 1, -1, -1, -1], [1, -1, -1, -1, -1, -1], [4, 5, 2, 3, 0, 1]}, or {[-1, -1, -1, -1, -1, 1], [-1, -1, -1, -1, -1, -1], [4, 5, 2, 3, 0, 1]}.

29. A communication method, comprising:
determining a first sequence, wherein the first sequence is the same as a sequence obtained by performing Manchester coding on a base sequence, the first sequence comprises N elements, the base sequence comprises $\frac{N}{{2}^{K}}$ elements, any element in the base sequence is represented by 2*^{K}* levels after Manchester coding, the 2*^{K}* levels comprise two different levels, N is an even number greater than or equal to 2, and K is an integer greater than or equal to 1; modulating the first sequence and to-be-transmitted data, to generate a first signal; and sending the first signal, wherein
$\frac{N}{{2}^{K}} = 8$, and the base sequence is one of the following:
[0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1];
$\frac{N}{{2}^{K}} = 16$, and the base sequence is one of the following:
[0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1];
$\frac{N}{{2}^{K}} = 32$, and the base sequence is one of the following:
[0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
[0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
[0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
[0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
[0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
[0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
[0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
[0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
[0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
[0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
[0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
[0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
[0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
[0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
[0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
[0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
[0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
[0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
[0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
[0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
[0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
[0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
[0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
[0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
[0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
[0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
[0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
[0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
[0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
[0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
[0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
[0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
[0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
[0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
[0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
[0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
[0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
[0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
[0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
[0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
[0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
[0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
[0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
[0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
[0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
[0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
[0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
[0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
[0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
[0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
[0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
[0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
[0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
[0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
[0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
[0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
[0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
[0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
[0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
[0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
[0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
[0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
[0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
[0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
[0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
[0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
[0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
[0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
[0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
[0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
[0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
[0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1]; or
$\frac{N}{{2}^{K}} = 64$, and the base sequence is one of the following:
[0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
[0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
[0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
[0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
[0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
[0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
[0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
[0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
[0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
[0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
[0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
[0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
[0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
[0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
[0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
[0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
[0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
[0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
[0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
[0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
[0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
[0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
[0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
[0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
[0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
[0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
[0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
[0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
[0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
[0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
[0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
[0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
[0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
[0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
[0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
[0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
[0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
[0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
[0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
[0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
[0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

30. The method according to claim 29, wherein
the base sequence is related to a generalized Golay sequence, the generalized Golay sequence is determined based on [*W*₁] , [*W*₂], and [P], and an n^{th} element *Aₙ* in the generalized Golay sequence is equal to *a*_{*M*+1}(*n*), wherein *a*_{*M*+1}(*n*) satisfies the following formulas: ${a}_{m + 1} \left(n\right) = {a}_{m} \left(n\right) + {W}_{m , 1} {b}_{m} \left(n-{2}^{{P}_{m}}\right)$ ${b}_{m + 1} \left(n\right) = {a}_{m} \left(n\right) - {W}_{m , 2} {b}_{m} \left(n-{2}^{{P}_{m}}\right) ,$
wherein M is an integer greater than or equal to 1, m is an integer less than or equal to M and greater than or equal to 1, *a*₁(*n*) = *δ*(*n*), *b*₁(*n*) = *δ*(*n*), when *n* = 0, *δ*(*n*) = 1, and when *n* ≠ 0, *δ*(*n*) = 0 ; and *W*_{*m*,1} ∈ {1, -1}, *W*_{*m*,2} ∈ {1, -1}, $0 \leq n \leq \frac{N}{{2}^{K}} - 1$, n is an integer, and {[*W*₁], [*W*₂], [*P*]} is in one-to-one correspondence with the base sequence, wherein
$\frac{N}{{2}^{K}} = 8$, and {[*W*₁], [*W*₂], [*P*]} corresponding to the base sequence is one of the following:
{[-1, 1, 1], [-1, 1, -1], [2, 0, 1]}, {[1, 1, -1], [1, 1, -1], [2, 0, 1]}, {[1, -1, 1], [1, -1, -1], [2, 0, 1]}, {[-1, -1, -1], [-1, -1, -1], [2, 0, 1]}, {[1, -1, 1], [1, -1, -1], [2, 1, 0]}, or {[-1, -1, -1], [-1, -1, -1], [2, 1, 0]};
$\frac{N}{{2}^{K}} = 16$, and {[*W*₁], [*W*₂], [*P*]} corresponding to the base sequence is one of the following:
{[-1, 1, 1, -1], [-1, 1, 1, -1], [3, 2, 0, 1]}, {[-1, 1, -1, 1], [-1, 1, -1, -1], [3, 2, 0, 1]}, {[1, 1, -1, -1], [1, 1, -1, -1], [3, 2, 0, 1]}, {[-1, -1, 1, 1], [-1, -1, 1, -1], [3, 2, 0, 1]}, {[1, -1, 1, -1], [1, -1, 1, -1], [3, 2, 0, 1]}, {[1, -1, -1, 1], [1, -1, -1, -1], [3, 2, 0, 1]}, {[-1, -1, -1, -1], [-1, -1, -1, -1], [3, 2, 0, 1]}, {[1, 1, 1, 1], [1, 1, 1, 1], [3, 2, 0, 1]}, {[-1, 1, 1, -1], [-1, 1, 1, -1], [3, 2, 1, 0]}, {[1, 1, 1, 1], [1, 1, 1, 1], [3, 2, 1, 0]}, {[-1, 1, 1, -1], [-1, 1, 1, -1], [3, 1, 0, 2]}, {[-1, 1, -1, 1], [-1, 1, -1, -1], [3, 1, 0, 2]}, {[1, 1, -1, -1], [1, 1, -1, -1], [3, 1, 0, 2]}, {[-1, -1, -1, 1], [1, -1, -1, - 1], [2, 3, 1, 0]}, {[-1, 1, -1, -1], [1, 1, -1, -1], [2, 3, 1, 0]}, {[1, 1, 1, 1], [1, 1, 1, 1], [3, 1, 0, 2]}, {[-1, -1, 1, 1], [-1, -1, 1, -1], [3, 1, 2, 0]}, {[1, -1, 1, -1], [1, -1, 1, -1], [3, 1, 2, 0]}, {[1, -1, -1, 1], [1, -1, -1, -1], [3, 1, 2, 0]}, {[-1, -1, -1, -1], [-1, -1, -1, -1], [3, 1, 2, 0]}, {[-1, 1, 1, 1], [1, 1, 1, -1], [2, 3, 0, 1]}, {[-1, 1, -1, 1], [-1, 1, -1, -1], [3, 0, 1, 2]}, {[-1, -1, 1, -1], [1, -1, 1, -1], [2, 3, 0, 1]}, {[1, 1, -1, -1], [1, 1, -1, -1], [3, 0, 1, 2]}, {[-1, -1, -1, 1], [1, -1, -1, -1], [2, 3, 0, 1]}, {[1, -1, -1, 1], [1, -1, -1, -1], [3, 0, 1, 2]}, {[-1, 1, -1, -1], [1, 1, -1, -1], [2, 3, 0, 1]}, {[-1, -1, - 1, -1], [-1, -1, -1, -1], [3, 0, 1, 2]}, {[-1, 1, 1, -1], [-1, 1, 1, -1], [3, 0, 2, 1]}, {[-1, 1, -1, 1], [-1, 1, -1, -1], [3, 0, 2, 1]}, {[1, 1, -1, -1], [1, 1, -1, -1], [3, 0, 2, 1]}, {[-1, -1, 1, 1], [-1, -1, 1, - 1], [3, 0, 2, 1]}, {[1, -1, 1, -1], [1, -1, 1, -1], [3, 0, 2, 1]}, {[1, -1, -1, 1], [1, -1, -1, -1], [3, 0, 2, 1]}, {[-1, -1, -1, -1], [-1, -1, -1, -1], [3, 0, 2, 1]}, {[1, 1, 1, 1], [1, 1, 1, 1], [3, 0, 2, 1]}, {[-1, - 1, 1, 1], [-1, -1, 1, -1], [2, 3, 1, 0]}, {[1, -1, 1, -1], [1, -1, 1, -1], [2, 3, 1, 0]}, {[-1, 1, -1, 1], [-1, 1, -1, -1], [1, 3, 2, 0]}, {[1, 1, -1, -1], [1, 1, -1, -1], [1, 3, 2, 0]}, {[-1, 1, -1, 1], [-1, 1, -1, - 1], [0, 3, 1, 2]}, or {[1, 1, -1, -1], [1, 1, -1, -1], [0, 3, 1, 2]};
$\frac{N}{{2}^{K}} = 32$, and {[*W*₁], [*W*₂], [*P*]} corresponding to the base sequence is one of the following:
{[-1, 1, 1, 1, 1], [-1, 1, 1, 1, -1], [3, 2, 4, 1, 0]}, {[1, 1, 1, 1, -1], [1, 1, 1, 1, -1], [3, 2, 4, 1, 0]}, {[-1, 1, 1, -1, 1], [-1, 1, 1, -1, -1], [3, 2, 4, 1, 0]}, {[1, 1, 1, -1, -1], [1, 1, 1, -1, -1], [3, 2, 4, 1, 0]}, {[-1, -1, 1, 1, 1], [-1, -1, 1, 1, -1], [3, 2, 4, 1, 0]}, {[1, -1, 1, 1, -1], [1, -1, 1, 1, -1], [3, 2, 4, 1, 0]}, {[-1, -1, 1, -1, 1], [-1, -1, 1, -1, -1], [3, 2, 4, 1, 0]}, {[1, -1, 1, -1, -1], [1, -1, 1, -1, - 1], [3, 2, 4, 1, 0]}, {[-1, 1, 1, 1, 1], [-1, 1, 1, 1, -1], [2, 3, 4, 1, 0]}, {[1, 1, 1, 1, -1], [1, 1, 1, 1, - 1], [2, 3, 4, 1, 0]}, {[-1, -1, 1, 1, 1], [-1, -1, 1, 1, -1], [2, 3, 4, 1, 0]}, {[1, -1, 1, 1, -1], [1, -1, 1, 1, -1], [2, 3, 4, 1, 0]}, {[-1, -1, 1, -1, 1], [-1, -1, 1, -1, -1], [2, 3, 4, 1, 0]}, {[1, -1, 1, -1, -1], [1, -1, 1, -1, -1], [2, 3, 4, 1, 0]}, {[-1, 1, 1, -1, 1], [-1, 1, 1, -1, -1], [4, 1, 2, 3, 0]}, {[1, 1, 1, -1, -1], [1, 1, 1, -1, -1], [4, 1, 2, 3, 0]}, {[1, 1, -1, -1, 1], [1, 1, -1, -1, -1], [4, 1, 2, 3, 0]}, {[-1, 1, -1, - 1, -1], [-1, 1, -1, -1, -1], [4, 1, 2, 3, 0]}, {[-1, -1, 1, -1, 1], [-1, -1, 1, -1, -1], [4, 1, 2, 3, 0]}, {[1, -1, 1, -1, -1], [1, -1, 1, -1, -1], [4, 1, 2, 3, 0]}, {[1, -1, -1, -1, 1], [1, -1, -1, -1, -1], [4, 1, 2, 3, 0]}, {[-1, -1, -1, -1, -1], [-1, -1, -1, -1, -1], [4, 1, 2, 3, 0]}, {[1, 1, -1, 1, 1], [1, 1, -1, 1, - 1], [0, 4, 3, 1, 2]}, {[-1, 1, -1, 1, -1], [-1, 1, -1, 1, -1], [0, 4, 3, 1, 2]}, {[-1, 1, 1, -1, 1], [-1, 1, 1, -1, -1], [0, 4, 3, 2, 1]}, {[1, 1, 1, -1, -1], [1, 1, 1, -1, -1], [0, 4, 3, 2, 1]}, {[1, 1, -1, 1, 1], [1, 1, - 1, 1, -1], [0, 4, 3, 2, 1]}, {[-1, 1, -1, 1, -1], [-1, 1, -1, 1, -1], [0, 4, 3, 2, 1]}, {[-1, 1, 1, 1, 1], [-1, 1, 1, 1, -1], [0, 3, 4, 1, 2]}, {[1, 1, 1, 1, -1], [1, 1, 1, 1, -1], [0, 3, 4, 1, 2]}, {[-1, 1, 1, -1, 1], [-1, 1, 1, -1, -1], [0, 3, 4, 1, 2]}, {[1, 1, 1, -1, -1], [1, 1, 1, -1, -1], [0, 3, 4, 1, 2]}, {[-1, -1, 1, -1, 1], [-1, -1, 1, -1, -1], [0, 3, 4, 1, 2]}, {[1, -1, 1, -1, -1], [1, -1, 1, -1, -1], [0, 3, 4, 1, 2]}, {[-1, 1, 1, 1, 1], [-1, 1, 1, 1, -1], [0, 3, 4, 2, 1]}, {[1, 1, 1, 1, -1], [1, 1, 1, 1, -1], [0, 3, 4, 2, 1]}, {[-1, 1, 1, - 1, 1], [-1, 1, 1, -1, -1], [0, 3, 4, 2, 1]}, {[1, 1, 1, -1, -1], [1, 1, 1, -1, -1], [0, 3, 4, 2, 1]}, {[-1, -1, 1, 1, 1], [-1, -1, 1, 1, -1], [0, 3, 4, 2, 1]}, {[1, -1, 1, 1, -1], [1, -1, 1, 1, -1], [0, 3, 4, 2, 1]}, {[-1, -1, 1, -1, 1], [-1, -1, 1, -1, -1], [0, 3, 4, 2, 1]}, {[1, -1, 1, -1, -1], [1, -1, 1, -1, -1], [0, 3, 4, 2, 1]}, {[1, 1, -1, 1, 1], [1, 1, -1, 1, -1], [3, 2, 1, 4, 0]}, {[-1, 1, -1, 1, -1], [-1, 1, -1, 1, -1], [3, 2, 1, 4, 0]}, {[-1, 1, 1, 1, 1], [-1, 1, 1, 1, -1], [3, 1, 2, 4, 0]}, {[1, 1, 1, 1, -1], [1, 1, 1, 1, -1], [3, 1, 2, 4, 0]}, {[1, 1, -1, -1, 1], [1, 1, -1, -1, -1], [4, 1, 3, 2, 0]}, {[-1, 1, -1, -1, -1], [-1, 1, -1, -1, -1], [4, 1, 3, 2, 0]}, {[1, -1, -1, -1, 1], [1, -1, -1, -1, -1], [4, 1, 3, 2, 0]}, {[-1, -1, -1, -1, -1], [-1, -1, - 1, -1, -1], [4, 1, 3, 2, 0]}, {[1, 1, 1, 1, -1], [1, 1, 1, 1, -1], [4, 2, 3, 1, 0]}, {[-1, 1, 1, 1, 1], [-1, 1, 1, 1, -1], [4, 2, 3, 1, 0]}, {[1, -1, 1, 1, -1], [1, -1, 1, 1, -1], [4, 2, 3, 1, 0]}, {[-1, -1, 1, 1, 1], [-1, -1, 1, 1, -1], [4, 2, 3, 1, 0]}, {[1, 1, 1, -1, -1], [1, 1, 1, -1, -1], [4, 2, 3, 1, 0]}, {[-1, 1, 1, -1, 1], [-1, 1, 1, -1, -1], [4, 2, 3, 1, 0]}, {[1, -1, 1, -1, -1], [1, -1, 1, -1, -1], [4, 2, 3, 1, 0]}, {[-1, -1, 1, -1, 1], [-1, -1, 1, -1, -1], [4, 2, 3, 1, 0]}, {[1, 1, -1, -1, 1], [1, 1, -1, -1, -1], [4, 2, 3, 1, 0]}, {[-1, 1, -1, -1, -1], [-1, 1, -1, -1, -1], [4, 2, 3, 1, 0]}, {[1, -1, -1, -1, 1], [1, -1, -1, -1, -1], [4, 2, 3, 1, 0]}, {[-1, -1, -1, -1, -1], [-1, -1, -1, -1, -1], [4, 2, 3, 1, 0]}, {[1, -1, 1, 1, -1], [1, -1, 1, 1, -1], [3, 4, 1, 2, 0]}, {[-1, -1, 1, 1, 1], [-1, -1, 1, 1, -1], [3, 4, 1, 2, 0]}, {[1, -1, 1, -1, -1], [1, -1, 1, - 1, -1], [3, 4, 1, 2, 0]}, {[-1, -1, 1, -1, 1], [-1, -1, 1, -1, -1], [3, 4, 1, 2, 0]}, {[1, -1, -1, -1, 1], [1, -1, -1, -1, -1], [3, 4, 1, 2, 0]}, {[-1, -1, -1, -1, -1], [-1, -1, -1, -1, -1], [3, 4, 1, 2, 0]}, {[1, 1, - 1, 1, 1], [1, 1, -1, 1, -1], [4, 3, 2, 1, 0]}, {[-1, 1, -1, 1, -1], [-1, 1, -1, 1, -1], [4, 3, 2, 1, 0]}, {[1, -1, -1, 1, 1], [1, -1, -1, 1, -1], [4, 3, 2, 1, 0]}, {[-1, -1, -1, 1, -1], [-1, -1, -1, 1, -1], [4, 3, 2, 1, 0]}, {[1, 1, 1, -1, -1], [1, 1, 1, -1, -1], [4, 3, 2, 1, 0]}, {[-1, 1, 1, -1, 1], [-1, 1, 1, -1, -1], [4, 3, 2, 1, 0]}, {[1, -1, 1, -1, -1], [1, -1, 1, -1, -1], [4, 3, 2, 1, 0]}, {[-1, -1, 1, -1, 1], [-1, -1, 1, -1, -1], [4, 3, 2, 1, 0]}, {[1, -1, -1, 1, 1], [1, -1, -1, 1, -1], [3, 4, 2, 1, 0]}, {[-1, -1, -1, 1, -1], [-1, -1, - 1, 1, -1], [3, 4, 2, 1, 0]}, {[1, -1, 1, -1, -1], [1, -1, 1, -1, -1], [3, 4, 2, 1, 0]}, {[-1, -1, 1, -1, 1], [-1, -1, 1, -1, -1], [3, 4, 2, 1, 0]}, {[1, -1, -1, -1, 1], [1, -1, -1, -1, -1], [3, 4, 2, 1, 0]}, or {[-1, - 1, -1, -1, -1], [-1, -1, -1, -1, -1], [3, 4, 2, 1, 0]}; or
$\frac{N}{{2}^{K}} = 64$, and {[*W*₁], [*W*₂], [*P*]} corresponding to the base sequence is one of the following:
{[1, -1, 1, -1, 1, 1], [1, -1, 1, -1, 1, -1], [4, 5, 1, 2, 0, 3]}, {[1, -1, 1, -1, 1, -1], [1, -1, 1, -1, 1, -1], [4, 5, 1, 2, 0, 3]}, {[-1, -1, 1, -1, 1, 1], [-1, -1, 1, -1, 1, -1], [4, 5, 1, 2, 0, 3]}, {[-1, -1, 1, -1, 1, -1], [-1, -1, 1, -1, 1, -1], [4, 5, 1, 2, 0, 3]}, {[1, -1, 1, -1, -1, 1], [1, -1, 1, -1, -1, -1], [4, 5, 1, 2, 0, 3]}, {[1, -1, 1, -1, -1, -1], [1, -1, 1, -1, -1, -1], [4, 5, 1, 2, 0, 3]}, {[-1, -1, 1, -1, -1, 1], [-1, -1, 1, -1, -1, -1], [4, 5, 1, 2, 0, 3]}, {[-1, -1, 1, -1, -1, -1], [-1, -1, 1, -1, -1, -1], [4, 5, 1, 2, 0, 3]}, {[-1, 1, 1, 1, 1, -1], [1, 1, 1, 1, 1, -1], [4, 5, 0, 1, 3, 2]}, {[-1, -1, 1, 1, 1, 1], [1, -1, 1, 1, 1, -1], [4, 5, 0, 1, 3, 2]}, {[-1, 1, -1, 1, 1, -1], [1, 1, -1, 1, 1, -1], [4, 5, 0, 1, 3, 2]}, {[-1, -1, - 1, 1, 1, 1], [1, -1, -1, 1, 1, -1], [4, 5, 0, 1, 3, 2]}, {[-1, 1, 1, -1, -1, 1], [1, 1, 1, -1, -1, -1], [4, 5, 0, 1, 3, 2]}, {[-1, -1, 1, -1, -1, -1], [1, -1, 1, -1, -1, -1], [4, 5, 0, 1, 3, 2]}, {[-1, 1, -1, -1, -1, 1], [1, 1, -1, -1, -1, -1], [4, 5, 0, 1, 3, 2]}, {[-1, -1, -1, -1, -1, -1], [1, -1, -1, -1, -1, -1], [4, 5, 0, 1, 3, 2]}, {[-1, -1, -1, 1, -1, -1], [-1, -1, -1, 1, 1, -1], [4, 5, 1, 0, 3, 2]}, {[-1, -1, -1, -1, -1, -1], [-1, -1, -1, -1, 1, -1], [4, 5, 1, 0, 3, 2]}, {[1, -1, -1, 1, 1, -1], [1, -1, -1, 1, -1, -1], [4, 5, 1, 0, 3, 2]}, {[1, -1, -1, -1, 1, -1], [1, -1, -1, -1, -1, -1], [4, 5, 1, 0, 3, 2]}, {[1, 1, -1, 1, -1, 1], [1, 1, -1, 1, -1, -1], [5, 3, 2, 4, 0, 1]}, {[-1, 1, -1, 1, -1, -1], [-1, 1, -1, 1, -1, -1], [5, 3, 2, 4, 0, 1]}, {[1, - 1, -1, 1, -1, 1], [1, -1, -1, 1, -1, -1], [5, 3, 2, 4, 0, 1]}, {[-1, -1, -1, 1, -1, -1], [-1, -1, -1, 1, -1, -1], [5, 3, 2, 4, 0, 1]}, {[1, 1, -1, -1, -1, -1], [1, 1, -1, -1, -1, -1], [5, 3, 2, 4, 0, 1]}, {[-1, 1, -1, -1, -1, 1], [-1, 1, -1, -1, -1, -1], [5, 3, 2, 4, 0, 1]}, {[1, -1, -1, -1, -1, -1], [1, -1, -1, -1, -1, -1], [5, 3, 2, 4, 0, 1]}, {[-1, -1, -1, -1, -1, 1], [-1, -1, -1, -1, -1, -1], [5, 3, 2, 4, 0, 1]}, {[1, 1, -1, 1, -1, 1], [1, 1, -1, 1, -1, -1], [5, 2, 4, 3, 0, 1]}, {[-1, 1, -1, 1, -1, -1], [-1, 1, -1, 1, -1, -1], [5, 2, 4, 3, 0, 1]}, {[1, -1, -1, 1, -1, 1], [1, -1, -1, 1, -1, -1], [5, 2, 4, 3, 0, 1]}, {[-1, -1, -1, 1, -1, -1], [-1, -1, -1, 1, -1, -1], [5, 2, 4, 3, 0, 1]}, {[1, 1, -1, -1, -1, -1], [1, 1, -1, -1, -1, -1], [5, 2, 4, 3, 0, 1]}, {[-1, 1, -1, -1, -1, 1], [-1, 1, -1, -1, -1, -1], [5, 2, 4, 3, 0, 1]}, {[1, -1, -1, -1, -1, -1], [1, - 1, -1, -1, -1, -1], [5, 2, 4, 3, 0, 1]}, {[-1, -1, -1, -1, -1, 1], [-1, -1, -1, -1, -1, -1], [5, 2, 4, 3, 0, 1]}, {[1, -1, -1, 1, -1, 1], [1, -1, -1, 1, -1, -1], [3, 4, 2, 5, 0, 1]}, {[-1, -1, -1, 1, -1, -1], [-1, -1, -1, 1, -1, -1], [3, 4, 2, 5, 0, 1]}, {[1, -1, -1, -1, -1, -1], [1, -1, -1, -1, -1, -1], [3, 4, 2, 5, 0, 1]}, {[-1, -1, -1, -1, -1, 1], [-1, -1, -1, -1, -1, -1], [3, 4, 2, 5, 0, 1]}, {[-1, 1, 1, 1, 1, 1], [1, 1, 1, 1, 1, -1], [4, 5, 0, 3, 1, 2]}, {[-1, 1, 1, 1, 1, -1], [1, 1, 1, 1, 1, -1], [4, 5, 0, 3, 1, 2]}, {[-1, -1, 1, 1, 1, 1], [1, -1, 1, 1, 1, -1], [4, 5, 0, 3, 1, 2]}, {[-1, -1, 1, 1, 1, -1], [1, -1, 1, 1, 1, -1], [4, 5, 0, 3, 1, 2]}, {[-1, 1, -1, 1, 1, 1], [1, 1, -1, 1, 1, -1], [4, 5, 0, 3, 1, 2]}, {[-1, 1, -1, 1, 1, -1], [1, 1, -1, 1, 1, -1], [4, 5, 0, 3, 1, 2]}, {[-1, -1, -1, 1, 1, 1], [1, -1, -1, 1, 1, -1], [4, 5, 0, 3, 1, 2]}, {[-1, -1, -1, 1, 1, - 1], [1, -1, -1, 1, 1, -1], [4, 5, 0, 3, 1, 2]}, {[-1, 1, 1, -1, -1, 1], [1, 1, 1, -1, -1, -1], [4, 5, 0, 3, 1, 2]}, {[-1, 1, 1, -1, -1, -1], [1, 1, 1, -1, -1, -1], [4, 5, 0, 3, 1, 2]}, {[-1, -1, 1, -1, -1, 1], [1, -1, 1, -1, -1, -1], [4, 5, 0, 3, 1, 2]}, {[-1, -1, 1, -1, -1, -1], [1, -1, 1, -1, -1, -1], [4, 5, 0, 3, 1, 2]}, {[-1, 1, -1, -1, -1, 1], [1, 1, -1, -1, -1, -1], [4, 5, 0, 3, 1, 2]}, {[-1, 1, -1, -1, -1, -1], [1, 1, -1, -1, - 1, -1], [4, 5, 0, 3, 1, 2]}, {[-1, -1, -1, -1, -1, 1], [1, -1, -1, -1, -1, -1], [4, 5, 0, 3, 1, 2]}, {[-1, - 1, -1, -1, -1, -1], [1, -1, -1, -1, -1, -1], [4, 5, 0, 3, 1, 2]}, {[1, -1, -1, 1, -1, 1], [1, -1, -1, 1, -1, -1], [4, 5, 2, 3, 0, 1]}, {[-1, -1, -1, 1, -1, -1], [-1, -1, -1, 1, -1, -1], [4, 5, 2, 3, 0, 1]}, {[1, -1, - 1, -1, -1, -1], [1, -1, -1, -1, -1, -1], [4, 5, 2, 3, 0, 1]}, or {[-1, -1, -1, -1, -1, 1], [-1, -1, -1, -1, -1, -1], [4, 5, 2, 3, 0, 1]}.

31. The method according to claim 29, wherein the generalized Golay sequence comprises $\frac{N}{{2}^{K}}$ elements, and that the base sequence is related to the generalized Golay sequence comprises:
an n^{th} element *Aₙ* in the generalized Golay sequence and an n^{th} element *xₙ* in the base sequence satisfy: *Aₙ* = 1 - 2*xₙ*, wherein $0 \leq n \leq \frac{N}{{2}^{K}} - 1$, and *n* is an integer.

32. The method according to claim 29, wherein that the base sequence is related to the generalized Golay sequence comprises:
an n^{th} element *Aₙ* in the generalized Golay sequence and an n^{th} element *xₙ* in the base sequence satisfy: *Aₙ* = 2*xₙ* - 1; or
an n^{th} element *Aₙ* in the generalized Golay sequence and an (N-n-1)^{th} element *x*_{*N*-*n*-1} in the base sequence satisfy: ${A}_{n} = 1 - 2 {x}_{N - n - 1} , or {A}_{n} = 2 {x}_{N - n - 1} - 1 ,$ wherein $0 \leq n \leq \frac{N}{{2}^{K}} - 1 ,$ and *n* is an integer.

33. The method according to any one of claims 29 to 32, wherein the method further comprises:
receiving first indication information and second indication information, wherein the first indication information indicates the base sequence, and the second indication information indicates K.

34. The method according to any one of claims 29 to 33, wherein the modulating the first sequence and the to-be-transmitted data, to generate the first signal comprises:
modulating each element in the first sequence with the to-be-transmitted data after Y consecutive repetitions of the element, to generate the first signal, wherein Y is an integer greater than or equal to 1.

35. The method according to any one of claims 29 to 34, wherein two adjacent levels in the 2*^{K}* levels representing any element in the base sequence are different.

36. A communication method, comprising:
receiving a first signal, wherein the first signal comprises uplink data and a first sequence, the first sequence is the same as a sequence obtained by performing Manchester coding on a base sequence, the first sequence comprises N elements, the base sequence comprises $\frac{N}{{2}^{K}}$ elements, any element in the base sequence is represented by 2*^{K}* levels after Manchester coding, the 2*^{K}* levels comprise two different levels, N is an even number greater than or equal to 2, and K is an integer greater than or equal to 1; and detecting the first signal, wherein
$\frac{N}{{2}^{K}} = 8$, and the base sequence is one of the following:
[0, 0, 0, 1, 1, 0, 1, 1], [0, 0, 1, 0, 0, 1, 1, 1], [0, 1, 0, 0, 0, 0, 0, 1], [0, 1, 1, 1, 1, 1, 0, 1], [0, 0, 1, 0, 0, 0, 0, 1], or [0, 1, 1, 1, 1, 0, 1, 1];
$\frac{N}{{2}^{K}} = 16$, and the base sequence is one of the following:
[0, 0, 1, 0, 0, 1, 1, 1, 1, 1, 0, 1, 0, 1, 1, 1], [0, 1, 0, 0, 0, 0, 0, 1, 1, 0, 1, 1, 0, 0, 0, 1], [0, 1, 1, 1, 0, 0, 1, 0, 0, 1, 1, 1, 1, 1, 0, 1], [0, 0, 0, 1, 1, 0, 1, 1, 1, 1, 1, 0, 1, 0, 1, 1], [0, 0, 1, 0, 1, 0, 0, 0, 0, 0, 1, 0, 0, 1, 1, 1], [0, 1, 0, 0, 1, 1, 1, 0, 0, 1, 0, 0, 0, 0, 0, 1], [0, 1, 1, 1, 1, 1, 0, 1, 1, 0, 0, 0, 1, 1, 0, 1], [0, 0, 0, 1, 0, 1, 0, 0, 0, 0, 0, 1, 1, 0, 1, 1], [0, 1, 0, 0, 0, 1, 1, 1, 1, 0, 1, 1, 0, 1, 1, 1], [0, 0, 0, 1, 0, 0, 1, 0, 0, 0, 0, 1, 1, 1, 0, 1], [0, 0, 0, 1, 1, 0, 1, 1, 1, 1, 0, 1, 0, 1, 1, 1], [0, 1, 0, 0, 0, 0, 0, 1, 1, 0, 0, 0, 1, 1, 0, 1], [0, 1, 0, 0, 1, 1, 1, 0, 0, 1, 1, 1, 1, 1, 0, 1], [0, 0, 1, 0, 1, 1, 0, 1, 1, 1, 1, 0, 0, 0, 0, 1], [0, 1, 1, 1, 1, 0, 0, 0, 0, 1, 0, 0, 1, 0, 1, 1], [0, 0, 0, 1, 0, 1, 0, 0, 0, 0, 1, 0, 0, 1, 1, 1], [0, 0, 1, 1, 0, 1, 0, 1, 1, 1, 1, 1, 1, 0, 0, 1], [0, 1, 1, 0, 0, 0, 0, 0, 0, 1, 0, 1, 0, 0, 1, 1], [0, 0, 1, 1, 1, 0, 1, 0, 0, 0, 0, 0, 1, 0, 0, 1], [0, 1, 1, 0, 1, 1, 1, 1, 1, 0, 1, 0, 0, 0, 1, 1], [0, 0, 0, 1, 1, 1, 1, 0, 0, 1, 0, 0, 1, 0, 1, 1], [0, 0, 1, 0, 0, 0, 0, 1, 1, 0, 0, 0, 1, 0, 1, 1], [0, 0, 1, 0, 1, 1, 0, 1, 1, 0, 0, 0, 0, 1, 1, 1], [0, 0, 1, 0, 1, 1, 1, 0, 0, 1, 1, 1, 1, 0, 1, 1], [0, 1, 0, 0, 1, 0, 1, 1, 1, 1, 1, 0, 0, 0, 0, 1], [0, 1, 1, 1, 0, 1, 0, 0, 0, 0, 1, 0, 0, 0, 0, 1], [0, 1, 1, 1, 1, 0, 0, 0, 0, 0, 1, 0, 1, 1, 0, 1], [0, 1, 1, 1, 1, 0, 1, 1, 1, 1, 0, 1, 0, 0, 0, 1], [0, 0, 1, 1, 0, 1, 0, 1, 1, 0, 0, 1, 1, 1, 1, 1], [0, 0, 0, 0, 1, 0, 0, 1, 1, 0, 1, 0, 0, 0, 1, 1], [0, 0, 1, 1, 1, 0, 1, 0, 0, 1, 1, 0, 1, 1, 1, 1], [0, 1, 0, 1, 0, 0, 1, 1, 1, 1, 1, 1, 1, 0, 0, 1], [0, 1, 1, 0, 0, 0, 0, 0, 0, 0, 1, 1, 0, 1, 0, 1], [0, 1, 0, 1, 1, 1, 0, 0, 0, 0, 0, 0, 1, 0, 0, 1], [0, 1, 1, 0, 1, 1, 1, 1, 1, 1, 0, 0, 0, 1, 0, 1], [0, 0, 0, 0, 0, 1, 1, 0, 0, 1, 0, 1, 0, 0, 1, 1], [0, 0, 0, 1, 1, 1, 1, 0, 1, 1, 0, 1, 1, 1, 0, 1], [0, 1, 0, 0, 0, 1, 0, 0, 1, 0, 0, 0, 0, 1, 1, 1], [0, 0, 1, 1, 1, 0, 0, 1, 0, 0, 0, 0, 0, 1, 0, 1], [0, 1, 0, 1, 1, 1, 1, 1, 0, 1, 1, 0, 0, 0, 1, 1], [0, 1, 1, 0, 0, 1, 0, 1, 0, 0, 0, 0, 0, 0, 1, 1], or [0, 0, 1, 1, 1, 1, 1, 1, 0, 1, 0, 1, 1, 0, 0, 1];
$\frac{N}{{2}^{K}} = 32$, and the base sequence is one of the following:
[0, 1, 0, 0, 0, 1, 0, 0, 0, 1, 0, 0, 1, 0, 1, 1, 0, 1, 1, 1, 1, 0, 0, 0, 0, 1, 1, 1, 0, 1, 1, 1];
[0, 0, 1, 0, 0, 0, 1, 0, 1, 1, 0, 1, 0, 0, 1, 0, 0, 0, 0, 1, 1, 1, 1, 0, 1, 1, 1, 0, 1, 1, 1, 0];
[0, 1, 1, 1, 0, 1, 1, 1, 0, 1, 1, 1, 1, 0, 0, 0, 0, 1, 0, 0, 1, 0, 1, 1, 0, 1, 0, 0, 0, 1, 0, 0];
[0, 0, 0, 1, 1, 1, 1, 0, 1, 1, 1, 0, 1, 1, 1, 0, 0, 0, 1, 0, 0, 0, 1, 0, 1, 1, 0, 1, 0, 0, 1, 0];
[0, 1, 0, 0, 1, 0, 1, 1, 0, 1, 0, 0, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 1, 0, 0, 0, 1, 0, 0, 0, 1, 0, 0, 1, 0, 1, 1];
[0, 0, 0, 1, 1, 1, 1, 0, 0, 0, 0, 1, 0, 0, 0, 1, 0, 0, 1, 0, 1, 1, 0, 1, 1, 1, 0, 1, 1, 1, 0, 1];
[0, 1, 0, 0, 0, 1, 0, 0, 0, 1, 0, 0, 1, 0, 1, 1, 0, 1, 1, 1, 0, 1, 1, 1, 1, 0, 0, 0, 0, 1, 1, 1];
[0, 0, 0, 1, 1, 1, 1, 0, 1, 1, 1, 0, 1, 1, 1, 0, 0, 0, 1, 0, 1, 1, 0, 1, 0, 0, 1, 0, 0, 0, 1, 0];
[0, 1, 0, 0, 0, 1, 0, 0, 1, 0, 1, 1, 0, 1, 0, 0, 0, 1, 1, 1, 0, 1, 1, 1, 0, 1, 1, 1, 1, 0, 0, 0];
[0, 0, 1, 0, 1, 1, 0, 1, 1, 1, 0, 1, 1, 1, 0, 1, 0, 0, 0, 1, 1, 1, 1, 0, 0, 0, 0, 1, 0, 0, 0, 1];
[0, 1, 1, 1, 0, 1, 1, 1, 1, 0, 0, 0, 0, 1, 1, 1, 0, 1, 0, 0, 0, 1, 0, 0, 0, 1, 0, 0, 1, 0, 1, 1];
[0, 0, 0, 0, 0, 0, 1, 1, 1, 0, 1, 0, 0, 1, 1, 0, 1, 1, 0, 0, 1, 1, 1, 1, 0, 1, 1, 0, 1, 0, 1, 0];
[0, 1, 0, 1, 0, 1, 1, 0, 1, 1, 1, 1, 0, 0, 1, 1, 0, 1, 1, 0, 0, 1, 0, 1, 1, 1, 0, 0, 0, 0, 0, 0];
[0, 0, 0, 0, 1, 1, 0, 0, 1, 0, 1, 0, 1, 0, 0, 1, 0, 0, 1, 1, 1, 1, 1, 1, 1, 0, 0, 1, 1, 0, 1, 0];
[0, 1, 0, 1, 1, 0, 0, 1, 1, 1, 1, 1, 1, 1, 0, 0, 1, 0, 0, 1, 0, 1, 0, 1, 0, 0, 1, 1, 0, 0, 0, 0];
[0, 0, 1, 1, 0, 0, 0, 0, 1, 0, 0, 1, 0, 1, 0, 1, 1, 1, 1, 1, 1, 1, 0, 0, 0, 1, 0, 1, 1, 0, 0, 1];
[0, 1, 1, 0, 0, 1, 0, 1, 1, 1, 0, 0, 0, 0, 0, 0, 0, 1, 0, 1, 0, 1, 1, 0, 1, 1, 1, 1, 0, 0, 1, 1];
[0, 0, 1, 1, 1, 1, 1, 1, 1, 0, 0, 1, 1, 0, 1, 0, 0, 0, 0, 0, 1, 1, 0, 0, 1, 0, 1, 0, 1, 0, 0, 1];
[0, 1, 1, 0, 1, 0, 1, 0, 1, 1, 0, 0, 1, 1, 1, 1, 1, 0, 1, 0, 0, 1, 1, 0, 0, 0, 0, 0, 0, 0, 1, 1];
[0, 0, 0, 0, 0, 0, 1, 1, 1, 1, 0, 0, 1, 1, 1, 1, 0, 1, 0, 1, 0, 1, 1, 0, 0, 1, 1, 0, 0, 1, 0, 1];
[0, 1, 0, 1, 1, 0, 0, 1, 1, 0, 0, 1, 0, 1, 0, 1, 0, 0, 0, 0, 1, 1, 0, 0, 0, 0, 1, 1, 1, 1, 1, 1];
[0, 1, 0, 1, 1, 0, 0, 1, 0, 1, 0, 1, 0, 1, 1, 0, 0, 0, 0, 0, 1, 1, 0, 0, 1, 1, 1, 1, 1, 1, 0, 0];
[0, 0, 1, 1, 1, 1, 1, 1, 0, 0, 1, 1, 0, 0, 0, 0, 0, 1, 1, 0, 1, 0, 1, 0, 1, 0, 0, 1, 1, 0, 1, 0];
[0, 0, 0, 0, 0, 0, 1, 1, 1, 1, 1, 1, 0, 0, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 1, 1, 0, 0, 0, 0, 0, 0, 1, 1, 1, 1, 1, 1];
[0, 1, 0, 1, 0, 1, 1, 0, 0, 0, 0, 0, 0, 0, 1, 1, 0, 1, 1, 0, 0, 1, 0, 1, 1, 1, 0, 0, 1, 1, 1, 1];
[0, 0, 0, 0, 1, 1, 0, 0, 0, 1, 0, 1, 1, 0, 0, 1, 0, 0, 1, 1, 1, 1, 1, 1, 1, 0, 0, 1, 0, 1, 0, 1];
[0, 1, 1, 0, 0, 1, 0, 1, 0, 0, 1, 1, 0, 0, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 0, 0, 1, 1, 0, 0, 1, 0, 1, 0, 0, 1, 1, 0];
[0, 1, 1, 0, 0, 1, 0, 1, 1, 1, 0, 0, 1, 1, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 0, 0, 1, 1, 0, 0, 0, 1, 0, 1, 1, 0, 0, 1];
[0, 1, 0, 1, 0, 1, 1, 0, 0, 0, 0, 0, 0, 0, 1, 1, 0, 1, 0, 1, 1, 0, 0, 1, 1, 1, 1, 1, 0, 0, 1, 1];
[0, 0, 1, 1, 0, 0, 0, 0, 0, 1, 1, 0, 0, 1, 0, 1, 0, 0, 1, 1, 1, 1, 1, 1, 1, 0, 0, 1, 0, 1, 0, 1];
[0, 1, 0, 1, 1, 0, 0, 1, 0, 0, 0, 0, 1, 1, 0, 0, 0, 1, 0, 1, 0, 1, 1, 0, 1, 1, 1, 1, 1, 1, 0, 0];
[0, 0, 1, 1, 1, 1, 1, 1, 0, 1, 1, 0, 1, 0, 1, 0, 0, 0, 1, 1, 0, 0, 0, 0, 1, 0, 0, 1, 1, 0, 1, 0];
[0, 1, 0, 1, 0, 1, 1, 0, 1, 1, 1, 1, 1, 1, 0, 0, 0, 1, 0, 1, 1, 0, 0, 1, 0, 0, 0, 0, 1, 1, 0, 0];
[0, 0, 1, 1, 0, 0, 0, 0, 1, 0, 0, 1, 1, 0, 1, 0, 0, 0, 1, 1, 1, 1, 1, 1, 0, 1, 1, 0, 1, 0, 1, 0];
[0, 1, 0, 1, 1, 0, 0, 1, 1, 1, 1, 1, 0, 0, 1, 1, 0, 1, 0, 1, 0, 1, 1, 0, 0, 0, 0, 0, 0, 0, 1, 1];
[0, 0, 1, 1, 1, 1, 1, 1, 1, 0, 0, 1, 0, 1, 0, 1, 0, 0, 1, 1, 0, 0, 0, 0, 0, 1, 1, 0, 0, 1, 0, 1];
[0, 0, 1, 1, 0, 0, 0, 0, 0, 0, 1, 1, 1, 1, 1, 1, 0, 1, 0, 1, 0, 1, 1, 0, 0, 1, 0, 1, 1, 0, 0, 1];
[0, 1, 1, 0, 0, 1, 0, 1, 1, 0, 0, 1, 0, 1, 0, 1, 0, 0, 0, 0, 0, 0, 1, 1, 1, 1, 1, 1, 0, 0, 1, 1];
[0, 0, 0, 0, 0, 0, 1, 1, 1, 1, 0, 0, 1, 1, 1, 1, 0, 1, 0, 1, 1, 0, 0, 1, 1, 0, 0, 1, 0, 1, 0, 1];
[0, 1, 0, 1, 0, 1, 1, 0, 0, 1, 1, 0, 0, 1, 0, 1, 0, 0, 0, 0, 1, 1, 0, 0, 0, 0, 1, 1, 1, 1, 1, 1];
[0, 0, 0, 0, 1, 0, 1, 0, 1, 1, 0, 0, 1, 0, 0, 1, 0, 0, 1, 1, 1, 0, 0, 1, 1, 1, 1, 1, 1, 0, 1, 0];
[0, 1, 0, 1, 1, 1, 1, 1, 1, 0, 0, 1, 1, 1, 0, 0, 1, 0, 0, 1, 0, 0, 1, 1, 0, 1, 0, 1, 0, 0, 0, 0];
[0, 0, 1, 1, 1, 0, 0, 1, 1, 1, 1, 1, 1, 0, 1, 0, 0, 0, 0, 0, 1, 0, 1, 0, 1, 1, 0, 0, 1, 0, 0, 1];
[0, 1, 1, 0, 1, 1, 0, 0, 1, 0, 1, 0, 1, 1, 1, 1, 1, 0, 1, 0, 0, 0, 0, 0, 0, 1, 1, 0, 0, 0, 1, 1];
[0, 1, 0, 0, 0, 1, 0, 0, 0, 1, 1, 1, 1, 0, 0, 0, 0, 1, 0, 0, 1, 0, 1, 1, 0, 1, 1, 1, 0, 1, 1, 1];
[0, 0, 0, 1, 0, 0, 0, 1, 0, 0, 1, 0, 1, 1, 0, 1, 1, 1, 1, 0, 0, 0, 0, 1, 1, 1, 0, 1, 1, 1, 0, 1];
[0, 1, 0, 0, 1, 0, 1, 1, 0, 1, 1, 1, 0, 1, 1, 1, 0, 1, 0, 0, 0, 1, 0, 0, 0, 1, 1, 1, 1, 0, 0, 0];
[0, 0, 0, 1, 1, 1, 1, 0, 0, 0, 1, 0, 0, 0, 1, 0, 1, 1, 1, 0, 1, 1, 1, 0, 1, 1, 0, 1, 0, 0, 1, 0];
[0, 1, 1, 1, 0, 1, 1, 1, 0, 1, 0, 0, 1, 0, 1, 1, 0, 1, 1, 1, 1, 0, 0, 0, 0, 1, 0, 0, 0, 1, 0, 0];
[0, 0, 1, 0, 0, 0, 1, 0, 0, 0, 0, 1, 1, 1, 1, 0, 1, 1, 0, 1, 0, 0, 1, 0, 1, 1, 1, 0, 1, 1, 1, 0];
[0, 1, 1, 1, 1, 0, 0, 0, 0, 1, 0, 0, 0, 1, 0, 0, 0, 1, 1, 1, 0, 1, 1, 1, 0, 1, 0, 0, 1, 0, 1, 1];
[0, 0, 1, 0, 1, 1, 0, 1, 0, 0, 0, 1, 0, 0, 0, 1, 1, 1, 0, 1, 1, 1, 0, 1, 1, 1, 1, 0, 0, 0, 0, 1];
[0, 0, 1, 0, 0, 0, 1, 0, 1, 1, 1, 0, 0, 0, 0, 1, 0, 0, 1, 0, 1, 1, 0, 1, 1, 1, 1, 0, 1, 1, 1, 0];
[0, 1, 1, 1, 0, 1, 1, 1, 1, 0, 1, 1, 0, 1, 0, 0, 1, 0, 0, 0, 0, 1, 1, 1, 0, 1, 0, 0, 0, 1, 0, 0];
[0, 0, 1, 0, 1, 1, 0, 1, 1, 1, 1, 0, 1, 1, 1, 0, 0, 0, 1, 0, 0, 0, 1, 0, 1, 1, 1, 0, 0, 0, 0, 1];
[0, 1, 1, 1, 1, 0, 0, 0, 1, 0, 1, 1, 1, 0, 1, 1, 1, 0, 0, 0, 1, 0, 0, 0, 0, 1, 0, 0, 1, 0, 1, 1];
[0, 1, 0, 1, 0, 0, 1, 1, 0, 1, 0, 1, 0, 0, 1, 1, 1, 0, 0, 1, 1, 1, 1, 1, 0, 1, 1, 0, 0, 0, 0, 0];
[0, 0, 0, 0, 0, 1, 1, 0, 1, 1, 1, 1, 1, 0, 0, 1, 1, 1, 0, 0, 1, 0, 1, 0, 1, 1, 0, 0, 1, 0, 1, 0];
[0, 1, 0, 1, 1, 1, 0, 0, 0, 1, 0, 1, 1, 1, 0, 0, 1, 0, 0, 1, 0, 0, 0, 0, 0, 1, 1, 0, 1, 1, 1, 1];
[0, 0, 0, 0, 1, 0, 0, 1, 1, 1, 1, 1, 0, 1, 1, 0, 1, 1, 0, 0, 0, 1, 0, 1, 1, 1, 0, 0, 0, 1, 0, 1];
[0, 0, 1, 1, 1, 0, 1, 0, 0, 0, 1, 1, 1, 0, 1, 0, 1, 1, 1, 1, 0, 1, 1, 0, 0, 0, 0, 0, 1, 0, 0, 1];
[0, 1, 1, 0, 1, 1, 1, 1, 1, 0, 0, 1, 0, 0, 0, 0, 1, 0, 1, 0, 0, 0, 1, 1, 1, 0, 1, 0, 0, 0, 1, 1];
[0, 0, 0, 1, 1, 1, 0, 1, 0, 0, 0, 1, 0, 0, 1, 0, 0, 0, 0, 1, 1, 1, 0, 1, 1, 1, 1, 0, 1, 1, 0, 1];
[0, 1, 0, 0, 1, 0, 0, 0, 0, 1, 0, 0, 0, 1, 1, 1, 1, 0, 1, 1, 0, 1, 1, 1, 0, 1, 0, 0, 0, 1, 1, 1];
[0, 0, 0, 1, 1, 1, 0, 1, 1, 1, 1, 0, 1, 1, 0, 1, 0, 0, 0, 1, 1, 1, 0, 1, 0, 0, 0, 1, 0, 0, 1, 0];
[0, 1, 0, 0, 1, 0, 0, 0, 1, 0, 1, 1, 1, 0, 0, 0, 1, 0, 1, 1, 0, 1, 1, 1, 1, 0, 1, 1, 1, 0, 0, 0];
[0, 1, 1, 1, 0, 1, 0, 0, 0, 1, 1, 1, 1, 0, 1, 1, 0, 1, 1, 1, 0, 1, 0, 0, 1, 0, 0, 0, 0, 1, 0, 0];
[0, 0, 1, 0, 0, 0, 0, 1, 0, 0, 1, 0, 1, 1, 1, 0, 1, 1, 0, 1, 1, 1, 1, 0, 0, 0, 1, 0, 1, 1, 1, 0];
[0, 1, 1, 1, 0, 1, 0, 0, 1, 0, 0, 0, 0, 1, 0, 0, 0, 1, 1, 1, 0, 1, 0, 0, 0, 1, 1, 1, 1, 0, 1, 1];
[0, 0, 1, 0, 0, 0, 0, 1, 1, 1, 0, 1, 0, 0, 0, 1, 1, 1, 0, 1, 1, 1, 1, 0, 1, 1, 0, 1, 0, 0, 0, 1];
[0, 0, 0, 1, 1, 1, 0, 1, 0, 0, 0, 1, 1, 1, 0, 1, 1, 1, 1, 0, 1, 1, 0, 1, 0, 0, 0, 1, 0, 0, 1, 0];
[0, 1, 0, 0, 1, 0, 0, 0, 1, 0, 1, 1, 0, 1, 1, 1, 1, 0, 1, 1, 1, 0, 0, 0, 1, 0, 1, 1, 1, 0, 0, 0];
[0, 1, 1, 1, 0, 1, 0, 0, 0, 1, 1, 1, 0, 1, 0, 0, 1, 0, 0, 0, 0, 1, 0, 0, 0, 1, 1, 1, 1, 0, 1, 1];
[0, 0, 1, 0, 0, 0, 0, 1, 1, 1, 0, 1, 1, 1, 1, 0, 1, 1, 0, 1, 0, 0, 0, 1, 1, 1, 0, 1, 0, 0, 0, 1];
[0, 0, 1, 0, 1, 1, 1, 0, 0, 0, 1, 0, 1, 1, 1, 0, 1, 1, 0, 1, 1, 1, 1, 0, 0, 0, 1, 0, 0, 0, 0, 1]; or
[0, 1, 1, 1, 1, 0, 1, 1, 1, 0, 0, 0, 0, 1, 0, 0, 1, 0, 0, 0, 1, 0, 1, 1, 1, 0, 0, 0, 1, 0, 1, 1]; or
$\frac{N}{{2}^{K}} = 64$, and the base sequence is one of the following:
[0, 0, 0, 0, 1, 0, 0, 1, 0, 1, 0, 1, 1, 1, 0, 0, 0, 0, 0, 0, 1, 0, 0, 1, 0, 1, 0, 1, 1, 1, 0, 0, 1, 1, 0, 0, 0, 1, 0, 1, 1, 0, 0, 1, 0, 0, 0, 0, 0, 0, 1, 1, 1, 0, 1, 0, 0, 1, 1, 0, 1, 1, 1, 1];
[0, 0, 0, 0, 1, 0, 0, 1, 1, 0, 1, 0, 0, 0, 1, 1, 0, 0, 0, 0, 1, 0, 0, 1, 1, 0, 1, 0, 0, 0, 1, 1, 1, 1, 0, 0, 0, 1, 0, 1, 0, 1, 1, 0, 1, 1, 1, 1, 0, 0, 1, 1, 1, 0, 1, 0, 1, 0, 0, 1, 0, 0, 0, 0];
[0, 0, 0, 0, 1, 0, 0, 1, 0, 1, 0, 1, 1, 1, 0, 0, 1, 1, 1, 1, 0, 1, 1, 0, 1, 0, 1, 0, 0, 0, 1, 1, 1, 1, 0, 0, 0, 1, 0, 1, 1, 0, 0, 1, 0, 0, 0, 0, 1, 1, 0, 0, 0, 1, 0, 1, 1, 0, 0, 1, 0, 0, 0, 0];
[0, 0, 0, 0, 1, 0, 0, 1, 1, 0, 1, 0, 0, 0, 1, 1, 1, 1, 1, 1, 0, 1, 1, 0, 0, 1, 0, 1, 1, 1, 0, 0, 1, 1, 0, 0, 0, 1, 0, 1, 0, 1, 1, 0, 1, 1, 1, 1, 1, 1, 0, 0, 0, 1, 0, 1, 0, 1, 1, 0, 1, 1, 1, 1];
[0, 1, 0, 1, 1, 1, 0, 0, 0, 0, 0, 0, 1, 0, 0, 1, 0, 1, 0, 1, 1, 1, 0, 0, 0, 0, 0, 0, 1, 0, 0, 1, 1, 0, 0, 1, 0, 0, 0, 0, 1, 1, 0, 0, 0, 1, 0, 1, 0, 1, 1, 0, 1, 1, 1, 1, 0, 0, 1, 1, 1, 0, 1, 0];
[0, 1, 0, 1, 1, 1, 0, 0, 1, 1, 1, 1, 0, 1, 1, 0, 0, 1, 0, 1, 1, 1, 0, 0, 1, 1, 1, 1, 0, 1, 1, 0, 1, 0, 0, 1, 0, 0, 0, 0, 0, 0, 1, 1, 1, 0, 1, 0, 0, 1, 1, 0, 1, 1, 1, 1, 1, 1, 0, 0, 0, 1, 0, 1];
[0, 1, 0, 1, 1, 1, 0, 0, 0, 0, 0, 0, 1, 0, 0, 1, 1, 0, 1, 0, 0, 0, 1, 1, 1, 1, 1, 1, 0, 1, 1, 0, 1, 0, 0, 1, 0, 0, 0, 0, 1, 1, 0, 0, 0, 1, 0, 1, 1, 0, 0, 1, 0, 0, 0, 0, 1, 1, 0, 0, 0, 1, 0, 1];
[0, 1, 0, 1, 1, 1, 0, 0, 1, 1, 1, 1, 0, 1, 1, 0, 1, 0, 1, 0, 0, 0, 1, 1, 0, 0, 0, 0, 1, 0, 0, 1, 1, 0, 0, 1, 0, 0, 0, 0, 0, 0, 1, 1, 1, 0, 1, 0, 1, 0, 0, 1, 0, 0, 0, 0, 0, 0, 1, 1, 1, 0, 1, 0];
[0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1, 0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0];
[0, 0, 0, 1, 0, 0, 0, 1, 0, 0, 1, 0, 1, 1, 0, 1, 1, 1, 1, 0, 1, 1, 1, 0, 1, 1, 0, 1, 0, 0, 1, 0, 1, 0, 1, 1, 1, 0, 1, 1, 1, 0, 0, 0, 0, 1, 1, 1, 0, 1, 0, 0, 0, 1, 0, 0, 0, 1, 1, 1, 1, 0, 0, 0];
[0, 1, 0, 0, 1, 0, 1, 1, 0, 1, 1, 1, 0, 1, 1, 1, 1, 0, 1, 1, 0, 1, 0, 0, 1, 0, 0, 0, 1, 0, 0, 0, 0, 0, 0, 1, 1, 1, 1, 0, 0, 0, 1, 0, 0, 0, 1, 0, 1, 1, 1, 0, 0, 0, 0, 1, 1, 1, 0, 1, 1, 1, 0, 1];
[0, 1, 0, 0, 0, 1, 0, 0, 0, 1, 1, 1, 1, 0, 0, 0, 1, 0, 1, 1, 1, 0, 1, 1, 1, 0, 0, 0, 0, 1, 1, 1, 1, 1, 1, 0, 1, 1, 1, 0, 1, 1, 0, 1, 0, 0, 1, 0, 0, 0, 0, 1, 0, 0, 0, 1, 0, 0, 1, 0, 1, 1, 0, 1];
[0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0, 0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1];
[0, 0, 1, 0, 1, 1, 0, 1, 1, 1, 1, 0, 1, 1, 1, 0, 1, 1, 0, 1, 0, 0, 1, 0, 0, 0, 0, 1, 0, 0, 0, 1, 1, 0, 0, 0, 0, 1, 1, 1, 0, 1, 0, 0, 0, 1, 0, 0, 0, 1, 1, 1, 1, 0, 0, 0, 1, 0, 1, 1, 1, 0, 1, 1];
[0, 1, 1, 1, 0, 1, 1, 1, 1, 0, 1, 1, 0, 1, 0, 0, 1, 0, 0, 0, 1, 0, 0, 0, 0, 1, 0, 0, 1, 0, 1, 1, 0, 0, 1, 0, 0, 0, 1, 0, 1, 1, 1, 0, 0, 0, 0, 1, 1, 1, 0, 1, 1, 1, 0, 1, 0, 0, 0, 1, 1, 1, 1, 0];
[0, 1, 1, 1, 1, 0, 0, 0, 1, 0, 1, 1, 1, 0, 1, 1, 1, 0, 0, 0, 0, 1, 1, 1, 0, 1, 0, 0, 0, 1, 0, 0, 1, 1, 0, 1, 0, 0, 1, 0, 0, 0, 0, 1, 0, 0, 0, 1, 0, 0, 1, 0, 1, 1, 0, 1, 1, 1, 1, 0, 1, 1, 1, 0];
[0, 0, 1, 0, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 1, 0, 0, 0, 0, 1, 0, 1, 0, 0, 1, 0, 1, 1, 1, 1, 1, 0, 0, 0, 0, 1, 0, 1, 0, 0, 1, 0, 1, 1];
[0, 1, 1, 1, 1, 0, 0, 0, 1, 1, 0, 1, 0, 0, 1, 0, 1, 0, 0, 0, 0, 1, 1, 1, 0, 0, 1, 0, 1, 1, 0, 1, 1, 0, 1, 1, 0, 1, 0, 0, 0, 0, 0, 1, 1, 1, 1, 0, 1, 0, 1, 1, 0, 1, 0, 0, 0, 0, 0, 1, 1, 1, 1, 0];
[0, 0, 1, 0, 1, 1, 0, 1, 0, 1, 1, 1, 1, 0, 0, 0, 0, 0, 1, 0, 1, 1, 0, 1, 0, 1, 1, 1, 1, 0, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 1, 0, 1, 1];
[0, 1, 1, 1, 1, 0, 0, 0, 0, 0, 1, 0, 1, 1, 0, 1, 0, 1, 1, 1, 1, 0, 0, 0, 0, 0, 1, 0, 1, 1, 0, 1, 1, 0, 1, 1, 0, 1, 0, 0, 1, 1, 1, 0, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0, 0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1];
[0, 1, 1, 1, 1, 0, 0, 0, 0, 1, 1, 1, 0, 1, 1, 1, 0, 0, 1, 0, 0, 0, 1, 0, 0, 0, 1, 0, 1, 1, 0, 1, 1, 0, 0, 0, 0, 1, 1, 1, 0, 1, 1, 1, 0, 1, 1, 1, 1, 1, 0, 1, 1, 1, 0, 1, 0, 0, 1, 0, 1, 1, 0, 1];
[0, 1, 0, 0, 1, 0, 1, 1, 1, 0, 1, 1, 1, 0, 1, 1, 0, 0, 0, 1, 0, 0, 0, 1, 1, 1, 1, 0, 0, 0, 0, 1, 0, 1, 0, 0, 1, 0, 1, 1, 0, 1, 0, 0, 0, 1, 0, 0, 0, 0, 0, 1, 0, 0, 0, 1, 0, 0, 0, 1, 1, 1, 1, 0];
[0, 1, 1, 1, 1, 0, 0, 0, 1, 0, 0, 0, 1, 0, 0, 0, 0, 0, 1, 0, 0, 0, 1, 0, 1, 1, 0, 1, 0, 0, 1, 0, 1, 0, 0, 0, 0, 1, 1, 1, 1, 0, 0, 0, 1, 0, 0, 0, 1, 1, 0, 1, 1, 1, 0, 1, 1, 1, 0, 1, 0, 0, 1, 0];
[0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0, 0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1];
[0, 1, 0, 0, 1, 0, 1, 1, 0, 1, 0, 0, 0, 1, 0, 0, 1, 1, 1, 0, 1, 1, 1, 0, 1, 1, 1, 0, 0, 0, 0, 1, 1, 0, 1, 1, 0, 1, 0, 0, 0, 1, 0, 0, 0, 1, 0, 0, 0, 0, 0, 1, 0, 0, 0, 1, 1, 1, 1, 0, 0, 0, 0, 1];
[0, 1, 1, 1, 1, 0, 0, 0, 1, 0, 0, 0, 1, 0, 0, 0, 1, 1, 0, 1, 1, 1, 0, 1, 0, 0, 1, 0, 1, 1, 0, 1, 0, 1, 1, 1, 1, 0, 0, 0, 0, 1, 1, 1, 0, 1, 1, 1, 1, 1, 0, 1, 1, 1, 0, 1, 1, 1, 0, 1, 0, 0, 1, 0];
[0, 1, 0, 0, 1, 0, 1, 1, 1, 0, 1, 1, 1, 0, 1, 1, 1, 1, 1, 0, 1, 1, 1, 0, 0, 0, 0, 1, 1, 1, 1, 0, 1, 0, 1, 1, 0, 1, 0, 0, 1, 0, 1, 1, 1, 0, 1, 1, 0, 0, 0, 1, 0, 0, 0, 1, 0, 0, 0, 1, 1, 1, 1, 0];
[0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0, 0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1];
[0, 1, 1, 1, 0, 1, 1, 1, 0, 0, 1, 0, 0, 0, 1, 0, 1, 0, 0, 0, 0, 1, 1, 1, 0, 0, 1, 0, 1, 1, 0, 1, 1, 0, 0, 0, 0, 1, 1, 1, 1, 1, 0, 1, 0, 0, 1, 0, 0, 1, 1, 1, 0, 1, 1, 1, 1, 1, 0, 1, 1, 1, 0, 1];
[0, 1, 0, 0, 1, 0, 1, 1, 0, 0, 0, 1, 1, 1, 1, 0, 1, 0, 1, 1, 1, 0, 1, 1, 0, 0, 0, 1, 0, 0, 0, 1, 0, 1, 0, 0, 0, 1, 0, 0, 0, 0, 0, 1, 0, 0, 0, 1, 1, 0, 1, 1, 0, 1, 0, 0, 0, 0, 0, 1, 1, 1, 1, 0];
[0, 1, 1, 1, 1, 0, 0, 0, 0, 0, 1, 0, 1, 1, 0, 1, 1, 0, 0, 0, 1, 0, 0, 0, 0, 0, 1, 0, 0, 0, 1, 0, 1, 0, 0, 0, 1, 0, 0, 0, 1, 1, 0, 1, 1, 1, 0, 1, 0, 1, 1, 1, 1, 0, 0, 0, 1, 1, 0, 1, 0, 0, 1, 0];
[0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0, 0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1];
[0, 1, 0, 0, 0, 1, 0, 0, 1, 1, 1, 0, 1, 1, 1, 0, 1, 0, 1, 1, 0, 1, 0, 0, 1, 1, 1, 0, 0, 0, 0, 1, 1, 0, 1, 1, 0, 1, 0, 0, 0, 0, 0, 1, 1, 1, 1, 0, 0, 1, 0, 0, 0, 1, 0, 0, 0, 0, 0, 1, 0, 0, 0, 1];
[0, 1, 1, 1, 1, 0, 0, 0, 1, 1, 0, 1, 0, 0, 1, 0, 1, 0, 0, 0, 1, 0, 0, 0, 1, 1, 0, 1, 1, 1, 0, 1, 0, 1, 1, 1, 0, 1, 1, 1, 1, 1, 0, 1, 1, 1, 0, 1, 1, 0, 0, 0, 0, 1, 1, 1, 1, 1, 0, 1, 0, 0, 1, 0];
[0, 1, 0, 0, 1, 0, 1, 1, 1, 1, 1, 0, 0, 0, 0, 1, 1, 0, 1, 1, 1, 0, 1, 1, 1, 1, 1, 0, 1, 1, 1, 0, 1, 0, 1, 1, 1, 0, 1, 1, 0, 0, 0, 1, 0, 0, 0, 1, 0, 1, 0, 0, 1, 0, 1, 1, 0, 0, 0, 1, 1, 1, 1, 0];
[0, 1, 0, 0, 1, 0, 1, 1, 0, 1, 0, 0, 1, 0, 1, 1, 1, 0, 1, 1, 1, 0, 1, 1, 0, 1, 0, 0, 0, 1, 0, 0, 0, 0, 0, 1, 0, 0, 0, 1, 0, 0, 0, 1, 0, 0, 0, 1, 1, 1, 1, 0, 0, 0, 0, 1, 0, 0, 0, 1, 1, 1, 1, 0];
[0, 1, 1, 1, 1, 0, 0, 0, 1, 0, 0, 0, 0, 1, 1, 1, 1, 0, 0, 0, 1, 0, 0, 0, 1, 0, 0, 0, 1, 0, 0, 0, 0, 0, 1, 0, 0, 0, 1, 0, 1, 1, 0, 1, 1, 1, 0, 1, 1, 1, 0, 1, 0, 0, 1, 0, 1, 1, 0, 1, 0, 0, 1, 0];
[0, 1, 1, 1, 1, 0, 0, 0, 0, 1, 1, 1, 1, 0, 0, 0, 1, 0, 0, 0, 1, 0, 0, 0, 0, 1, 1, 1, 0, 1, 1, 1, 1, 1, 0, 1, 1, 1, 0, 1, 1, 1, 0, 1, 1, 1, 0, 1, 0, 0, 1, 0, 1, 1, 0, 1, 1, 1, 0, 1, 0, 0, 1, 0];
[0, 1, 0, 0, 1, 0, 1, 1, 1, 0, 1, 1, 0, 1, 0, 0, 1, 0, 1, 1, 1, 0, 1, 1, 1, 0, 1, 1, 1, 0, 1, 1, 1, 1, 1, 0, 1, 1, 1, 0, 0, 0, 0, 1, 0, 0, 0, 1, 0, 0, 0, 1, 1, 1, 1, 0, 0, 0, 0, 1, 1, 1, 1, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0];
[0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0, 1, 0, 1, 0, 1, 0, 0, 1, 1, 1, 0, 0, 1, 1, 1, 1, 0, 1, 0, 1, 0, 1, 1, 0, 0, 0, 1, 1, 0, 0, 0, 0];
[0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1, 1, 0, 1, 0, 0, 1, 1, 0, 1, 1, 0, 0, 0, 0, 0, 0, 0, 1, 0, 1, 1, 0, 0, 1, 0, 0, 1, 1, 1, 1, 1, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 0, 0, 0, 0, 0, 0, 1, 1, 0, 1, 1, 0, 0, 1, 0, 1, 1, 1, 1, 1, 1, 1, 0, 0, 1, 0, 0, 1, 1, 0, 1, 0];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 0, 0, 0, 0, 1, 1, 0, 0, 0, 1, 1, 0, 1, 0, 1, 0, 1, 1, 1, 1, 0, 0, 1, 1, 1, 0, 0, 1, 0, 1, 0, 1];
[0, 1, 0, 1, 0, 1, 1, 0, 0, 0, 1, 1, 0, 0, 0, 0, 1, 0, 1, 0, 1, 0, 0, 1, 1, 1, 0, 0, 1, 1, 1, 1, 1, 1, 1, 1, 1, 1, 0, 0, 1, 0, 0, 1, 1, 0, 1, 0, 0, 0, 0, 0, 0, 0, 1, 1, 0, 1, 1, 0, 0, 1, 0, 1];
[0, 1, 0, 1, 1, 0, 0, 1, 0, 0, 1, 1, 1, 1, 1, 1, 1, 0, 1, 0, 0, 1, 1, 0, 1, 1, 0, 0, 0, 0, 0, 0, 1, 1, 1, 1, 0, 0, 1, 1, 1, 0, 0, 1, 0, 1, 0, 1, 0, 0, 0, 0, 1, 1, 0, 0, 0, 1, 1, 0, 1, 0, 1, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0];
[0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0, 1, 0, 0, 1, 1, 0, 1, 0, 0, 0, 0, 0, 0, 0, 1, 1, 0, 1, 1, 0, 0, 1, 0, 1, 1, 1, 1, 1, 1, 1, 0, 0];
[0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1, 1, 0, 0, 1, 0, 1, 0, 1, 0, 0, 0, 0, 1, 1, 0, 0, 0, 1, 1, 0, 1, 0, 1, 0, 1, 1, 1, 1, 0, 0, 1, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 0, 0, 1, 1, 0, 0, 0, 0, 1, 0, 1, 0, 1, 0, 0, 1, 1, 1, 0, 0, 1, 1, 1, 1, 0, 1, 0, 1, 0, 1, 1, 0];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 0, 0, 1, 1, 1, 1, 1, 1, 1, 0, 1, 0, 0, 1, 1, 0, 1, 1, 0, 0, 0, 0, 0, 0, 0, 1, 0, 1, 1, 0, 0, 1];
[0, 1, 1, 0, 0, 1, 0, 1, 1, 1, 1, 1, 1, 1, 0, 0, 1, 0, 0, 1, 1, 0, 1, 0, 0, 0, 0, 0, 0, 0, 1, 1, 1, 1, 0, 0, 1, 1, 1, 1, 0, 1, 0, 1, 0, 1, 1, 0, 0, 0, 1, 1, 0, 0, 0, 0, 1, 0, 1, 0, 1, 0, 0, 1];
[0, 1, 1, 0, 1, 0, 1, 0, 1, 1, 1, 1, 0, 0, 1, 1, 1, 0, 0, 1, 0, 1, 0, 1, 0, 0, 0, 0, 1, 1, 0, 0, 1, 1, 0, 0, 0, 0, 0, 0, 0, 1, 0, 1, 1, 0, 0, 1, 0, 0, 1, 1, 1, 1, 1, 1, 1, 0, 1, 0, 0, 1, 1, 0];
[0, 1, 0, 0, 1, 0, 1, 1, 0, 0, 0, 1, 0, 0, 0, 1, 0, 1, 0, 0, 1, 0, 1, 1, 0, 0, 0, 1, 0, 0, 0, 1, 1, 0, 1, 1, 1, 0, 1, 1, 1, 1, 1, 0, 0, 0, 0, 1, 0, 1, 0, 0, 0, 1, 0, 0, 0, 0, 0, 1, 1, 1, 1, 0];
[0, 1, 1, 1, 1, 0, 0, 0, 0, 0, 1, 0, 0, 0, 1, 0, 1, 0, 0, 0, 0, 1, 1, 1, 1, 1, 0, 1, 1, 1, 0, 1, 1, 0, 0, 0, 1, 0, 0, 0, 1, 1, 0, 1, 0, 0, 1, 0, 1, 0, 0, 0, 1, 0, 0, 0, 1, 1, 0, 1, 0, 0, 1, 0];
[0, 1, 1, 1, 1, 0, 0, 0, 1, 1, 0, 1, 1, 1, 0, 1, 0, 1, 1, 1, 1, 0, 0, 0, 1, 1, 0, 1, 1, 1, 0, 1, 1, 0, 0, 0, 1, 0, 0, 0, 0, 0, 1, 0, 1, 1, 0, 1, 0, 1, 1, 1, 0, 1, 1, 1, 1, 1, 0, 1, 0, 0, 1, 0]; or
[0, 1, 0, 0, 1, 0, 1, 1, 1, 1, 1, 0, 1, 1, 1, 0, 1, 0, 1, 1, 0, 1, 0, 0, 0, 0, 0, 1, 0, 0, 0, 1, 1, 0, 1, 1, 1, 0, 1, 1, 0, 0, 0, 1, 1, 1, 1, 0, 1, 0, 1, 1, 1, 0, 1, 1, 0, 0, 0, 1, 1, 1, 1, 0].

37. The method according to claim 36, wherein
the base sequence is related to a generalized Golay sequence, the generalized Golay sequence is determined based on [*W*₁], [*W*₂], and [P], and an n^{th} element *Aₙ* in the generalized Golay sequence is equal to *a*_{*M*+1}(*n*), wherein *a*_{*M*+1}(*n*) satisfies the following formulas: ${a}_{m + 1} \left(n\right) = {a}_{m} \left(n\right) + {W}_{m , 1} {b}_{m} \left(n-{2}^{{P}_{m}}\right)$ ${b}_{m + 1} \left(n\right) = {a}_{m} \left(n\right) - {W}_{m , 2} {b}_{m} \left(n-{2}^{{P}_{m}}\right) ,$
wherein M is an integer greater than or equal to 1, m is an integer less than or equal to M and greater than or equal to 1, *a*₁(*n*) = *δ*(*n*), *b*₁(*n*) = *δ*(*n*), when *n* = 0, *δ*(*n*) = 1, and when *n* ≠ 0, δ(*n*) = 0 ; and *W*_{*m*,1} ∈ {1, -1}, W_{m,2} ∈ {1, -1}, $0 \leq n \leq \frac{N}{{2}^{K}} - 1$, n is an integer, and {[*W*₁], [*W*₂], [*P*]} is in one-to-one correspondence with the base sequence, wherein
$\frac{N}{{2}^{K}} = 8$, and {[*W*₁], [*W*₂], [*P*]} corresponding to the base sequence is one of the following:
{[-1, 1, 1], [-1, 1, -1], [2, 0, 1]}, {[1, 1, -1], [1, 1, -1], [2, 0, 1]}, {[1, -1, 1], [1, -1, -1], [2, 0, 1]}, {[-1, -1, -1], [-1, -1, -1], [2, 0, 1]}, {[1, -1, 1], [1, -1, -1], [2, 1, 0]}, or {[-1, -1, -1], [-1, -1, -1], [2, 1, 0]};
$\frac{N}{{2}^{K}} = 16$, and {[*W*₁], [*W*₂], [*P*]} corresponding to the base sequence is one of the following:
{[-1, 1, 1, -1], [-1, 1, 1, -1], [3, 2, 0, 1]}, {[-1, 1, -1, 1], [-1, 1, -1, -1], [3, 2, 0, 1]}, {[1, 1, -1, -1], [1, 1, -1, -1], [3, 2, 0, 1]}, {[-1, -1, 1, 1], [-1, -1, 1, -1], [3, 2, 0, 1]}, {[1, -1, 1, -1], [1, -1, 1, -1], [3, 2, 0, 1]}, {[1, -1, -1, 1], [1, -1, -1, -1], [3, 2, 0, 1]}, {[-1, -1, -1, -1], [-1, -1, -1, -1], [3, 2, 0, 1]}, {[1, 1, 1, 1], [1, 1, 1, 1], [3, 2, 0, 1]}, {[-1, 1, 1, -1], [-1, 1, 1, -1], [3, 2, 1, 0]}, {[1, 1, 1, 1], [1, 1, 1, 1], [3, 2, 1, 0]}, {[-1, 1, 1, -1], [-1, 1, 1, -1], [3, 1, 0, 2]}, {[-1, 1, -1, 1], [-1, 1, -1, -1], [3, 1, 0, 2]}, {[1, 1, -1, -1], [1, 1, -1, -1], [3, 1, 0, 2]}, {[-1, -1, -1, 1], [1, -1, -1, - 1], [2, 3, 1, 0]}, {[-1, 1, -1, -1], [1, 1, -1, -1], [2, 3, 1, 0]}, {[1, 1, 1, 1], [1, 1, 1, 1], [3, 1, 0, 2]}, {[-1, -1, 1, 1], [-1, -1, 1, -1], [3, 1, 2, 0]}, {[1, -1, 1, -1], [1, -1, 1, -1], [3, 1, 2, 0]}, {[1, -1, -1, 1], [1, -1, -1, -1], [3, 1, 2, 0]}, {[-1, -1, -1, -1], [-1, -1, -1, -1], [3, 1, 2, 0]}, {[-1, 1, 1, 1], [1, 1, 1, -1], [2, 3, 0, 1]}, {[-1, 1, -1, 1], [-1, 1, -1, -1], [3, 0, 1, 2]}, {[-1, -1, 1, -1], [1, -1, 1, -1], [2, 3, 0, 1]}, {[1, 1, -1, -1], [1, 1, -1, -1], [3, 0, 1, 2]}, {[-1, -1, -1, 1], [1, -1, -1, -1], [2, 3, 0, 1]}, {[1, -1, -1, 1], [1, -1, -1, -1], [3, 0, 1, 2]}, {[-1, 1, -1, -1], [1, 1, -1, -1], [2, 3, 0, 1]}, {[-1, -1, - 1, -1], [-1, -1, -1, -1], [3, 0, 1, 2]}, {[-1, 1, 1, -1], [-1, 1, 1, -1], [3, 0, 2, 1]}, {[-1, 1, -1, 1], [-1, 1, -1, -1], [3, 0, 2, 1]}, {[1, 1, -1, -1], [1, 1, -1, -1], [3, 0, 2, 1]}, {[-1, -1, 1, 1], [-1, -1, 1, - 1], [3, 0, 2, 1]}, {[1, -1, 1, -1], [1, -1, 1, -1], [3, 0, 2, 1]}, {[1, -1, -1, 1], [1, -1, -1, -1], [3, 0, 2, 1]}, {[-1, -1, -1, -1], [-1, -1, -1, -1], [3, 0, 2, 1]}, {[1, 1, 1, 1], [1, 1, 1, 1], [3, 0, 2, 1]}, {[-1, - 1, 1, 1], [-1, -1, 1, -1], [2, 3, 1, 0]}, {[1, -1, 1, -1], [1, -1, 1, -1], [2, 3, 1, 0]}, {[-1, 1, -1, 1], [-1, 1, -1, -1], [1, 3, 2, 0]}, {[1, 1, -1, -1], [1, 1, -1, -1], [1, 3, 2, 0]}, {[-1, 1, -1, 1], [-1, 1, -1, - 1], [0, 3, 1, 2]}, or {[1, 1, -1, -1], [1, 1, -1, -1], [0, 3, 1, 2]};
$\frac{N}{{2}^{K}} = 32$, and {[*W*₁], [*W*₂], [*P*]} corresponding to the base sequence is one of the following:
{[-1, 1, 1, 1, 1], [-1, 1, 1, 1, -1], [3, 2, 4, 1, 0]}, {[1, 1, 1, 1, -1], [1, 1, 1, 1, -1], [3, 2, 4, 1, 0]}, {[-1, 1, 1, -1, 1], [-1, 1, 1, -1, -1], [3, 2, 4, 1, 0]}, {[1, 1, 1, -1, -1], [1, 1, 1, -1, -1], [3, 2, 4, 1, 0]}, {[-1, -1, 1, 1, 1], [-1, -1, 1, 1, -1], [3, 2, 4, 1, 0]}, {[1, -1, 1, 1, -1], [1, -1, 1, 1, -1], [3, 2, 4, 1, 0]}, {[-1, -1, 1, -1, 1], [-1, -1, 1, -1, -1], [3, 2, 4, 1, 0]}, {[1, -1, 1, -1, -1], [1, -1, 1, -1, - 1], [3, 2, 4, 1, 0]}, {[-1, 1, 1, 1, 1], [-1, 1, 1, 1, -1], [2, 3, 4, 1, 0]}, {[1, 1, 1, 1, -1], [1, 1, 1, 1, - 1], [2, 3, 4, 1, 0]}, {[-1, -1, 1, 1, 1], [-1, -1, 1, 1, -1], [2, 3, 4, 1, 0]}, {[1, -1, 1, 1, -1], [1, -1, 1, 1, -1], [2, 3, 4, 1, 0]}, {[-1, -1, 1, -1, 1], [-1, -1, 1, -1, -1], [2, 3, 4, 1, 0]}, {[1, -1, 1, -1, -1], [1, -1, 1, -1, -1], [2, 3, 4, 1, 0]}, {[-1, 1, 1, -1, 1], [-1, 1, 1, -1, -1], [4, 1, 2, 3, 0]}, {[1, 1, 1, -1, -1], [1, 1, 1, -1, -1], [4, 1, 2, 3, 0]}, {[1, 1, -1, -1, 1], [1, 1, -1, -1, -1], [4, 1, 2, 3, 0]}, {[-1, 1, -1, - 1, -1], [-1, 1, -1, -1, -1], [4, 1, 2, 3, 0]}, {[-1, -1, 1, -1, 1], [-1, -1, 1, -1, -1], [4, 1, 2, 3, 0]}, {[1, -1, 1, -1, -1], [1, -1, 1, -1, -1], [4, 1, 2, 3, 0]}, {[1, -1, -1, -1, 1], [1, -1, -1, -1, -1], [4, 1, 2, 3, 0]}, {[-1, -1, -1, -1, -1], [-1, -1, -1, -1, -1], [4, 1, 2, 3, 0]}, {[1, 1, -1, 1, 1], [1, 1, -1, 1, - 1], [0, 4, 3, 1, 2]}, {[-1, 1, -1, 1, -1], [-1, 1, -1, 1, -1], [0, 4, 3, 1, 2]}, {[-1, 1, 1, -1, 1], [-1, 1, 1, -1, -1], [0, 4, 3, 2, 1]}, {[1, 1, 1, -1, -1], [1, 1, 1, -1, -1], [0, 4, 3, 2, 1]}, {[1, 1, -1, 1, 1], [1, 1, - 1, 1, -1], [0, 4, 3, 2, 1]}, {[-1, 1, -1, 1, -1], [-1, 1, -1, 1, -1], [0, 4, 3, 2, 1]}, {[-1, 1, 1, 1, 1], [-1, 1, 1, 1, -1], [0, 3, 4, 1, 2]}, {[1, 1, 1, 1, -1], [1, 1, 1, 1, -1], [0, 3, 4, 1, 2]}, {[-1, 1, 1, -1, 1], [-1, 1, 1, -1, -1], [0, 3, 4, 1, 2]}, {[1, 1, 1, -1, -1], [1, 1, 1, -1, -1], [0, 3, 4, 1, 2]}, {[-1, -1, 1, -1, 1], [-1, -1, 1, -1, -1], [0, 3, 4, 1, 2]}, {[1, -1, 1, -1, -1], [1, -1, 1, -1, -1], [0, 3, 4, 1, 2]}, {[-1, 1, 1, 1, 1], [-1, 1, 1, 1, -1], [0, 3, 4, 2, 1]}, {[1, 1, 1, 1, -1], [1, 1, 1, 1, -1], [0, 3, 4, 2, 1]}, {[-1, 1, 1, - 1, 1], [-1, 1, 1, -1, -1], [0, 3, 4, 2, 1]}, {[1, 1, 1, -1, -1], [1, 1, 1, -1, -1], [0, 3, 4, 2, 1]}, {[-1, -1, 1, 1, 1], [-1, -1, 1, 1, -1], [0, 3, 4, 2, 1]}, {[1, -1, 1, 1, -1], [1, -1, 1, 1, -1], [0, 3, 4, 2, 1]}, {[-1, -1, 1, -1, 1], [-1, -1, 1, -1, -1], [0, 3, 4, 2, 1]}, {[1, -1, 1, -1, -1], [1, -1, 1, -1, -1], [0, 3, 4, 2, 1]}, {[1, 1, -1, 1, 1], [1, 1, -1, 1, -1], [3, 2, 1, 4, 0]}, {[-1, 1, -1, 1, -1], [-1, 1, -1, 1, -1], [3, 2, 1, 4, 0]}, {[-1, 1, 1, 1, 1], [-1, 1, 1, 1, -1], [3, 1, 2, 4, 0]}, {[1, 1, 1, 1, -1], [1, 1, 1, 1, -1], [3, 1, 2, 4, 0]}, {[1, 1, -1, -1, 1], [1, 1, -1, -1, -1], [4, 1, 3, 2, 0]}, {[-1, 1, -1, -1, -1], [-1, 1, -1, -1, -1], [4, 1, 3, 2, 0]}, {[1, -1, -1, -1, 1], [1, -1, -1, -1, -1], [4, 1, 3, 2, 0]}, {[-1, -1, -1, -1, -1], [-1, -1, - 1, -1, -1], [4, 1, 3, 2, 0]}, {[1, 1, 1, 1, -1], [1, 1, 1, 1, -1], [4, 2, 3, 1, 0]}, {[-1, 1, 1, 1, 1], [-1, 1, 1, 1, -1], [4, 2, 3, 1, 0]}, {[1, -1, 1, 1, -1], [1, -1, 1, 1, -1], [4, 2, 3, 1, 0]}, {[-1, -1, 1, 1, 1], [-1, -1, 1, 1, -1], [4, 2, 3, 1, 0]}, {[1, 1, 1, -1, -1], [1, 1, 1, -1, -1], [4, 2, 3, 1, 0]}, {[-1, 1, 1, -1, 1], [-1, 1, 1, -1, -1], [4, 2, 3, 1, 0]}, {[1, -1, 1, -1, -1], [1, -1, 1, -1, -1], [4, 2, 3, 1, 0]}, {[-1, -1, 1, -1, 1], [-1, -1, 1, -1, -1], [4, 2, 3, 1, 0]}, {[1, 1, -1, -1, 1], [1, 1, -1, -1, -1], [4, 2, 3, 1, 0]}, {[-1, 1, -1, -1, -1], [-1, 1, -1, -1, -1], [4, 2, 3, 1, 0]}, {[1, -1, -1, -1, 1], [1, -1, -1, -1, -1], [4, 2, 3, 1, 0]}, {[-1, -1, -1, -1, -1], [-1, -1, -1, -1, -1], [4, 2, 3, 1, 0]}, {[1, -1, 1, 1, -1], [1, -1, 1, 1, -1], [3, 4, 1, 2, 0]}, {[-1, -1, 1, 1, 1], [-1, -1, 1, 1, -1], [3, 4, 1, 2, 0]}, {[1, -1, 1, -1, -1], [1, -1, 1, - 1, -1], [3, 4, 1, 2, 0]}, {[-1, -1, 1, -1, 1], [-1, -1, 1, -1, -1], [3, 4, 1, 2, 0]}, {[1, -1, -1, -1, 1], [1, -1, -1, -1, -1], [3, 4, 1, 2, 0]}, {[-1, -1, -1, -1, -1], [-1, -1, -1, -1, -1], [3, 4, 1, 2, 0]}, {[1, 1, - 1, 1, 1], [1, 1, -1, 1, -1], [4, 3, 2, 1, 0]}, {[-1, 1, -1, 1, -1], [-1, 1, -1, 1, -1], [4, 3, 2, 1, 0]}, {[1, -1, -1, 1, 1], [1, -1, -1, 1, -1], [4, 3, 2, 1, 0]}, {[-1, -1, -1, 1, -1], [-1, -1, -1, 1, -1], [4, 3, 2, 1, 0]}, {[1, 1, 1, -1, -1], [1, 1, 1, -1, -1], [4, 3, 2, 1, 0]}, {[-1, 1, 1, -1, 1], [-1, 1, 1, -1, -1], [4, 3, 2, 1, 0]}, {[1, -1, 1, -1, -1], [1, -1, 1, -1, -1], [4, 3, 2, 1, 0]}, {[-1, -1, 1, -1, 1], [-1, -1, 1, -1, -1], [4, 3, 2, 1, 0]}, {[1, -1, -1, 1, 1], [1, -1, -1, 1, -1], [3, 4, 2, 1, 0]}, {[-1, -1, -1, 1, -1], [-1, -1, - 1, 1, -1], [3, 4, 2, 1, 0]}, {[1, -1, 1, -1, -1], [1, -1, 1, -1, -1], [3, 4, 2, 1, 0]}, {[-1, -1, 1, -1, 1], [-1, -1, 1, -1, -1], [3, 4, 2, 1, 0]}, {[1, -1, -1, -1, 1], [1, -1, -1, -1, -1], [3, 4, 2, 1, 0]}, or {[-1, - 1, -1, -1, -1], [-1, -1, -1, -1, -1], [3, 4, 2, 1, 0]}; or
$\frac{N}{{2}^{K}} = 64$, and {[*W*₁], [*W*₂], [*P*]} corresponding to the base sequence is one of the following:
{[1, -1, 1, -1, 1, 1], [1, -1, 1, -1, 1, -1], [4, 5, 1, 2, 0, 3]}, {[1, -1, 1, -1, 1, -1], [1, -1, 1, -1, 1, -1], [4, 5, 1, 2, 0, 3]}, {[-1, -1, 1, -1, 1, 1], [-1, -1, 1, -1, 1, -1], [4, 5, 1, 2, 0, 3]}, {[-1, -1, 1, -1, 1, -1], [-1, -1, 1, -1, 1, -1], [4, 5, 1, 2, 0, 3]}, {[1, -1, 1, -1, -1, 1], [1, -1, 1, -1, -1, -1], [4, 5, 1, 2, 0, 3]}, {[1, -1, 1, -1, -1, -1], [1, -1, 1, -1, -1, -1], [4, 5, 1, 2, 0, 3]}, {[-1, -1, 1, -1, -1, 1], [-1, -1, 1, -1, -1, -1], [4, 5, 1, 2, 0, 3]}, {[-1, -1, 1, -1, -1, -1], [-1, -1, 1, -1, -1, -1], [4, 5, 1, 2, 0, 3]}, {[-1, 1, 1, 1, 1, -1], [1, 1, 1, 1, 1, -1], [4, 5, 0, 1, 3, 2]}, {[-1, -1, 1, 1, 1, 1], [1, -1, 1, 1, 1, -1], [4, 5, 0, 1, 3, 2]}, {[-1, 1, -1, 1, 1, -1], [1, 1, -1, 1, 1, -1], [4, 5, 0, 1, 3, 2]}, {[-1, -1, - 1, 1, 1, 1], [1, -1, -1, 1, 1, -1], [4, 5, 0, 1, 3, 2]}, {[-1, 1, 1, -1, -1, 1], [1, 1, 1, -1, -1, -1], [4, 5, 0, 1, 3, 2]}, {[-1, -1, 1, -1, -1, -1], [1, -1, 1, -1, -1, -1], [4, 5, 0, 1, 3, 2]}, {[-1, 1, -1, -1, -1, 1], [1, 1, -1, -1, -1, -1], [4, 5, 0, 1, 3, 2]}, {[-1, -1, -1, -1, -1, -1], [1, -1, -1, -1, -1, -1], [4, 5, 0, 1, 3, 2]}, {[-1, -1, -1, 1, -1, -1], [-1, -1, -1, 1, 1, -1], [4, 5, 1, 0, 3, 2]}, {[-1, -1, -1, -1, -1, -1], [-1, -1, -1, -1, 1, -1], [4, 5, 1, 0, 3, 2]}, {[1, -1, -1, 1, 1, -1], [1, -1, -1, 1, -1, -1], [4, 5, 1, 0, 3, 2]}, {[1, -1, -1, -1, 1, -1], [1, -1, -1, -1, -1, -1], [4, 5, 1, 0, 3, 2]}, {[1, 1, -1, 1, -1, 1], [1, 1, -1, 1, -1, -1], [5, 3, 2, 4, 0, 1]}, {[-1, 1, -1, 1, -1, -1], [-1, 1, -1, 1, -1, -1], [5, 3, 2, 4, 0, 1]}, {[1, - 1, -1, 1, -1, 1], [1, -1, -1, 1, -1, -1], [5, 3, 2, 4, 0, 1]}, {[-1, -1, -1, 1, -1, -1], [-1, -1, -1, 1, -1, -1], [5, 3, 2, 4, 0, 1]}, {[1, 1, -1, -1, -1, -1], [1, 1, -1, -1, -1, -1], [5, 3, 2, 4, 0, 1]}, {[-1, 1, -1, -1, -1, 1], [-1, 1, -1, -1, -1, -1], [5, 3, 2, 4, 0, 1]}, {[1, -1, -1, -1, -1, -1], [1, -1, -1, -1, -1, -1], [5, 3, 2, 4, 0, 1]}, {[-1, -1, -1, -1, -1, 1], [-1, -1, -1, -1, -1, -1], [5, 3, 2, 4, 0, 1]}, {[1, 1, -1, 1, -1, 1], [1, 1, -1, 1, -1, -1], [5, 2, 4, 3, 0, 1]}, {[-1, 1, -1, 1, -1, -1], [-1, 1, -1, 1, -1, -1], [5, 2, 4, 3, 0, 1]}, {[1, -1, -1, 1, -1, 1], [1, -1, -1, 1, -1, -1], [5, 2, 4, 3, 0, 1]}, {[-1, -1, -1, 1, -1, -1], [-1, -1, -1, 1, -1, -1], [5, 2, 4, 3, 0, 1]}, {[1, 1, -1, -1, -1, -1], [1, 1, -1, -1, -1, -1], [5, 2, 4, 3, 0, 1]}, {[-1, 1, -1, -1, -1, 1], [-1, 1, -1, -1, -1, -1], [5, 2, 4, 3, 0, 1]}, {[1, -1, -1, -1, -1, -1], [1, - 1, -1, -1, -1, -1], [5, 2, 4, 3, 0, 1]}, {[-1, -1, -1, -1, -1, 1], [-1, -1, -1, -1, -1, -1], [5, 2, 4, 3, 0, 1]}, {[1, -1, -1, 1, -1, 1], [1, -1, -1, 1, -1, -1], [3, 4, 2, 5, 0, 1]}, {[-1, -1, -1, 1, -1, -1], [-1, -1, -1, 1, -1, -1], [3, 4, 2, 5, 0, 1]}, {[1, -1, -1, -1, -1, -1], [1, -1, -1, -1, -1, -1], [3, 4, 2, 5, 0, 1]}, {[-1, -1, -1, -1, -1, 1], [-1, -1, -1, -1, -1, -1], [3, 4, 2, 5, 0, 1]}, {[-1, 1, 1, 1, 1, 1], [1, 1, 1, 1, 1, -1], [4, 5, 0, 3, 1, 2]}, {[-1, 1, 1, 1, 1, -1], [1, 1, 1, 1, 1, -1], [4, 5, 0, 3, 1, 2]}, {[-1, -1, 1, 1, 1, 1], [1, -1, 1, 1, 1, -1], [4, 5, 0, 3, 1, 2]}, {[-1, -1, 1, 1, 1, -1], [1, -1, 1, 1, 1, -1], [4, 5, 0, 3, 1, 2]}, {[-1, 1, -1, 1, 1, 1], [1, 1, -1, 1, 1, -1], [4, 5, 0, 3, 1, 2]}, {[-1, 1, -1, 1, 1, -1], [1, 1, -1, 1, 1, -1], [4, 5, 0, 3, 1, 2]}, {[-1, -1, -1, 1, 1, 1], [1, -1, -1, 1, 1, -1], [4, 5, 0, 3, 1, 2]}, {[-1, -1, -1, 1, 1, - 1], [1, -1, -1, 1, 1, -1], [4, 5, 0, 3, 1, 2]}, {[-1, 1, 1, -1, -1, 1], [1, 1, 1, -1, -1, -1], [4, 5, 0, 3, 1, 2]}, {[-1, 1, 1, -1, -1, -1], [1, 1, 1, -1, -1, -1], [4, 5, 0, 3, 1, 2]}, {[-1, -1, 1, -1, -1, 1], [1, -1, 1, -1, -1, -1], [4, 5, 0, 3, 1, 2]}, {[-1, -1, 1, -1, -1, -1], [1, -1, 1, -1, -1, -1], [4, 5, 0, 3, 1, 2]}, {[-1, 1, -1, -1, -1, 1], [1, 1, -1, -1, -1, -1], [4, 5, 0, 3, 1, 2]}, {[-1, 1, -1, -1, -1, -1], [1, 1, -1, -1, - 1, -1], [4, 5, 0, 3, 1, 2]}, {[-1, -1, -1, -1, -1, 1], [1, -1, -1, -1, -1, -1], [4, 5, 0, 3, 1, 2]}, {[-1, - 1, -1, -1, -1, -1], [1, -1, -1, -1, -1, -1], [4, 5, 0, 3, 1, 2]}, {[1, -1, -1, 1, -1, 1], [1, -1, -1, 1, -1, -1], [4, 5, 2, 3, 0, 1]}, {[-1, -1, -1, 1, -1, -1], [-1, -1, -1, 1, -1, -1], [4, 5, 2, 3, 0, 1]}, {[1, -1, - 1, -1, -1, -1], [1, -1, -1, -1, -1, -1], [4, 5, 2, 3, 0, 1]}, or {[-1, -1, -1, -1, -1, 1], [-1, -1, -1, -1, -1, -1], [4, 5, 2, 3, 0, 1]}.

38. The method according to claim 36, wherein the generalized Golay sequence comprises $\frac{N}{{2}^{K}}$ elements, and that the base sequence is related to the generalized Golay sequence comprises:
an n^{th} element *Aₙ* in the generalized Golay sequence and an n^{th} element *xₙ* in the base sequence satisfy: *Aₙ* = 1 - 2*xₙ*, wherein $0 \leq n \leq \frac{N}{{2}^{K}} - 1$, and *n* is an integer.

39. The method according to claim 36, wherein that the base sequence is related to the generalized Golay sequence comprises:
an n^{th} element *Aₙ* in the generalized Golay sequence and an n^{th} element *xₙ* in the base sequence satisfy: *Aₙ* = *2xₙ* - 1; or
an n^{th} element *Aₙ* in the generalized Golay sequence and an (N-n-1)^{th} element *x*_{*N-n*-1} in the base sequence satisfy: ${A}_{n} = 1 - 2 {x}_{N - n - 1} , or {A}_{n} = 2 {x}_{N - n - 1} - 1 , wherein$ $0 \leq n \leq \frac{N}{{2}^{K}} - 1$, and *n* is an integer.

40. The method according to any one of claims 36 to 39, wherein the detecting the first signal comprises:
detecting the first signal to determine a start position or an end position of the first sequence in the first signal.

41. The method according to any one of claims 36 to 40, wherein two adjacent levels in the 2^{K} levels representing any element in the base sequence are different.

42. A communication apparatus, configured to: implement the method according to any one of claims 1 to 15, implement the method according to any one of claims 16 to 28, implement the method according to any one of claims 29 to 35, or implement the method according to any one of claims 36 to 41.

43. A communication apparatus, comprising a processor, wherein the processor is configured to cause, by executing a computer program or instructions or through a logic circuit,
the communication apparatus to perform the method according to any one of claims 1 to 15;
the communication apparatus to perform the method according to any one of claims 16 to 28;
the communication apparatus to perform the method according to any one of claims 29 to 35; or
the communication apparatus to perform the method according to any one of claims 36 to 41.

44. The communication apparatus according to claim 43, wherein the communication apparatus further comprises a memory, and the memory is configured to store the computer program or the instructions.

45. The communication apparatus according to claim 43 or 44, wherein the communication apparatus further comprises a communication interface, and the communication interface is configured to input and/or output a signal.

46. A communication apparatus, comprising a logic circuit and an input/output interface, wherein the input/output interface is configured to input and/or output a signal; and
the logic circuit is configured to perform the method according to any one of claims 1 to 15;
the logic circuit is configured to perform the method according to any one of claims 16 to 28;
the logic circuit is configured to perform the method according to any one of claims 29 to 35; or
the logic circuit is configured to perform the method according to any one of claims 36 to 41.

47. A computer-readable storage medium, wherein the computer-readable storage medium stores a computer program or instructions; and when the computer program or the instructions are run on a computer,
the method according to any one of claims 1 to 15 is performed;
the method according to any one of claims 16 to 28 is performed;
the method according to any one of claims 29 to 35 is performed; or
the method according to any one of claims 36 to 41 is performed.

48. A computer program product, comprising instructions, wherein when the instructions are run on a computer,
the method according to any one of claims 1 to 15 is performed;
the method according to any one of claims 16 to 28 is performed;
the method according to any one of claims 29 to 35 is performed; or
the method according to any one of claims 36 to 41 is performed.

49. A communication method, comprising:
performing, by a terminal device, the method according to any one of claims 1 to 15 or any one of claims 29 to 35; and
performing, by a network device, the method according to any one of claims 16 to 28 or any one of claims 36 to 41.

50. A communication system, comprising a terminal device and a network device, wherein the terminal device is configured to perform the method according to any one of claims 1 to 15 or any one of claims 29 to 35, and the network device is configured to perform the method according to any one of claims 16 to 28 or any one of claims 36 to 41.
